# EUROPEAN PATENT APPLICATION

(11) **EP 4 552 611 A1**
(43) Date of publication of application: **14.05.2025**
(21) Application number: 24209975.2
(22) Date of filing: 30.10.2024
(51) Int. Cl.: A61D 9/00, A01K 13/00

(54) **REHABILITATIVE SUPPORT DEVICES FOR TENDON INJURY IN HORSES**

(30) Priority: 31.10.2023 GB 202316693; 31.07.2024 GB 202411262
(71) Applicant: Daly, Andrew Sean Gordon, County Cork T45 VX26 (IE)
(72) Inventor: Daly, Andrew Sean Gordon, County Cork T45 VX26 (IE)
(74) Representative: FRKelly

(57) **Abstract**

A reusable rehabilitation support for the treatment of equine flexor tendon and suspensory ligament injury comprising a first cannon collar for embracing the limb above the joint, a second pastern collar for embracing the limb below the joint, a connecting hinge to provide articulation and separation between the first and second collars and a connecting vertical tensile member adjacent the palmar or plantar aspect of the equine limb. The support is distinguished by having improved positioning on the limb comprising a horizontal stabilizing member to prevent both lateral and vertical dislocation of the support during rehabilitation exercise. The support also provides improved pressure redistribution methods to increase safety for the horse during rehabilitation comprising an internally anchored tensile member and an improved construction method for increased strength and durability. The invention also describes a multiuse, reusable injury treatment device to significantly reduce disposable bandaging material wastage.

## Description

### Field of invention

This invention relates to a rehabilitative support device, in particular a tendon and ligament support device for rehabilitation of injury in horses.

### Background of the invention

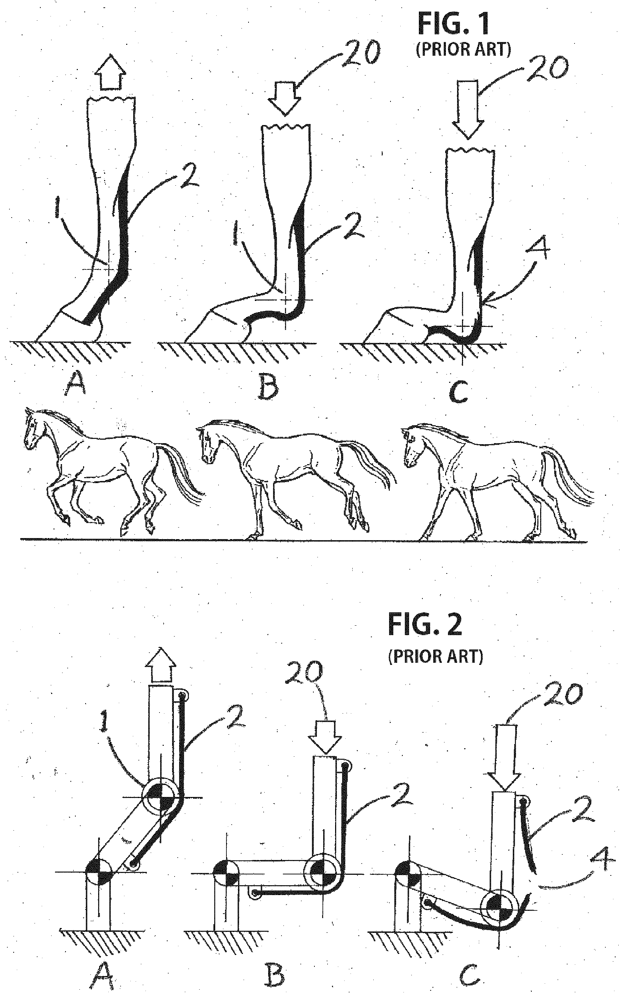

The mechanics of the equine lower limb and associated injuries it sustains is a complex subject. The causation of equine tendon strain injury and the problems it presents will be better understood by examination of Fig. 1 A, B, C and Fig. 2 A, B, C. The fetlock joint is represented by reference numeral 1. The flexor tendon is represented by reference numeral 2. The downward compression load exerted upon the fetlock joint and tendons by the horse while exercising is represented by arrows with reference numeral 20. Fig. 1A shows the equine lower limb with low compression load, a consequent low level fetlock joint extension and corresponding low tensile loading of the flexor tendon while the horse is standing still. Fig. 1B shows the same limb with a high compression load 20, a consequent high level fetlock joint extension and corresponding high tensile loading of the flexor tendon as the downward compression limb loading increases when the horse is at a gallop. Fig. 1C shows the same limb where the compression load 20 is excessive and with the fetlock joint under catastrophic hyperextension. Consequently there is an extreme tensile loading of the flexor tendon that exceeds its elastic limit resulting in a tensile rupture 4 of the flexor tendon. This is the basic mechanism by which a horse's flexor tendons and suspensory ligaments become injured during exercise. Fig. 2 A, B and C sets out to further demonstrate in a more simplified manner the same tendon strain mechanism using a purely mechanical analogue to illustrate how the equine flexor tendon ruptures 4 when subjected to an excessive amount of compression limb loading 20.

The prior art devices all describe a flexible tensile resistant member or artificial tendon anchored vertically between two stiff / non flexible articulated fetlock joint compression resistant limbembracing collars. The tensile resistant member is centrally located along the palmar or plantar aspects of the equine limb and connects the said upper and lower limb embracing compression resistant collars using anchor points located on the outer surfaces of the said upper and lower collars. This arrangement is described in patent numbers US 7559910B2 and EP1449497. In so doing the prior art is capable of resisting flexor tendon and suspensory ligament tensile strain under load by exerting a resistance to fetlock joint extension over a predetermined range of joint rotation. It is important to note the fact that the tensile load that is removed from the horse's own flexor tendons by the prior art, is transferred onto the skin of the anterior/dorsal aspects of the cannon and pastern bones and also onto the posterior/palmar or sesamoidean aspect of the fetlock joint.

However it must also be understood that the prior art as cited here, have several fundamental flaws specifically in the areas of reliable positioning on the horse's limb and furthermore they frequently can apply excessive pressure concentration to the skin causing injury to the surfaces of the skin and underlying soft tissues including tendons, muscles and blood vessels. Furthermore accidental movement of the prior art support devices on the limb and lateral dislocation of the vertical tensile member during use are significant problems that need resolving. There is also a need to improve on the manner in which a support device can withstand, without structural failure, the extremely high compression and tensile loads that are exerted upon them by the horse during exercise. To illustrate this fact, it is well established that while a racehorse weighs typically around 500KG, the compression load 20 on each limb during a gallop is in the region of 2500KG. This extremely high dynamic load is then transferred directly as a compression load on the compression members and as a tensile load on the inelastic tensile member of the tendon support device described resulting in mechanical failure. There is also a need to improve on the adjustability of support level and sizing adaptability to varying size of animal. The problems of the prior art devices will be described further in the following description of the present invention.

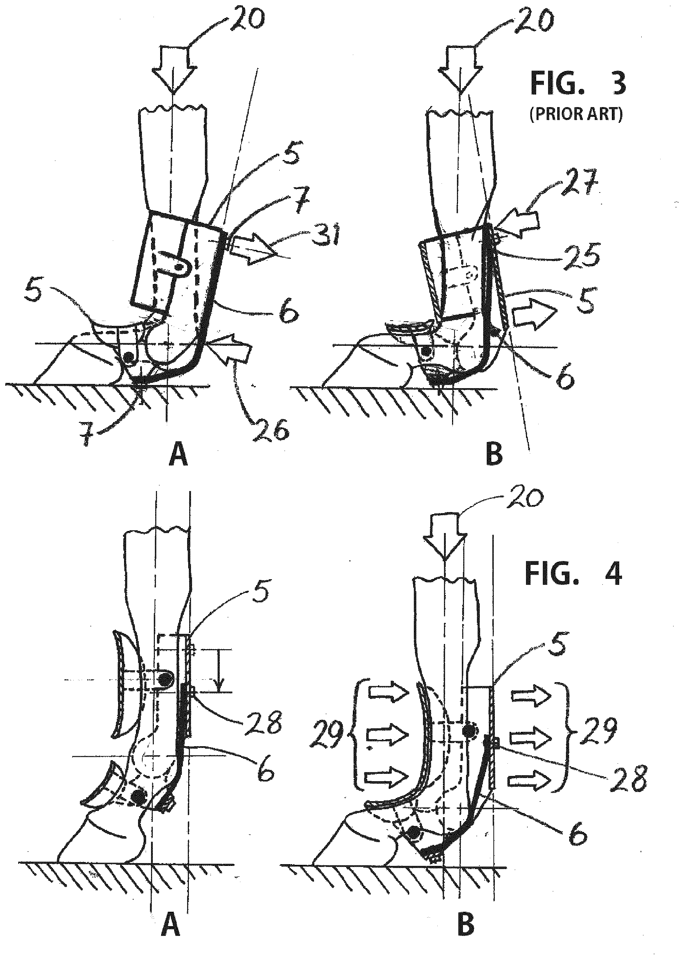

As described previously, even pressure redistribution is necessary for the efficacy of the tendon support device in order to prevent skin injury from the transferred forces to said soft tissues at both the proximal and distal end of the palmar or plantar aspects of the lower limb. A further problem of the prior art (see Fig 3A) is that the tensile member 6 anchor points 7 are located on the outside surface of the rigid upper and lower compression collars 5. The externally located high anchor point 7 positioning is problematic when the horse is galloping, because the compression load 20 causes the cannon collar 5 to articulate outward at the top said cannon collar, as referenced by arrow 31. This in turn causes the tensile member 6 to exert a pressure concentration on the lower end of palmar or plantar areas of the limb as referenced by arrow 26. This low end pressure concentration 26 can cause injury to underlying soft tissues at both the proximal and distal end of the palmar or plantar aspects of the horse's lower limbs. This very problem is illustrated in the Fig. 3A

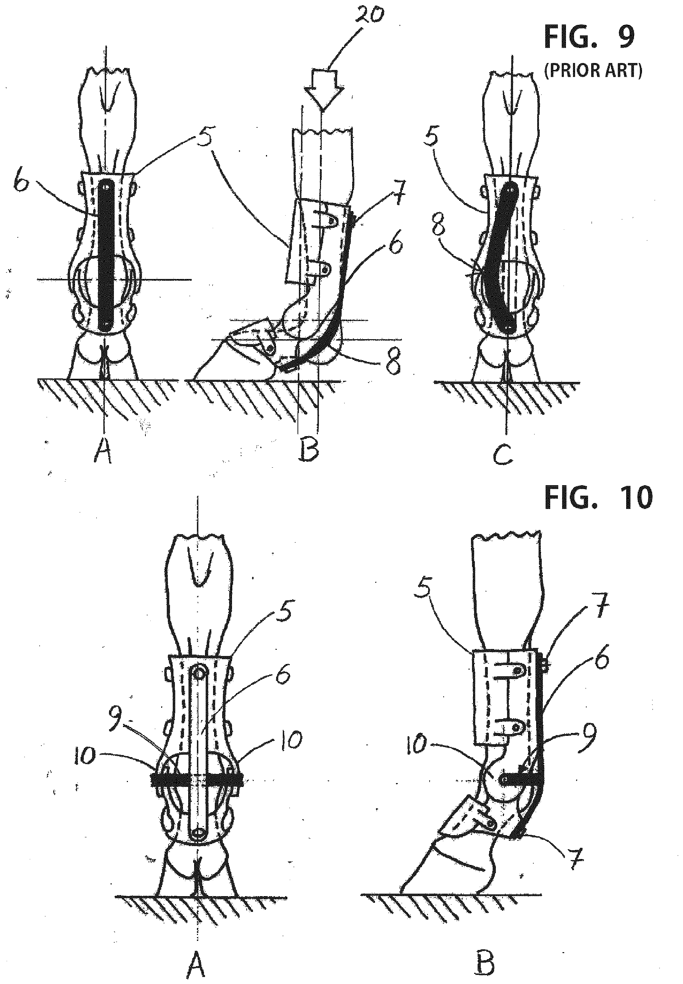

Fig. 9 illustrates the cited prior art device 5 and specifically the problem that the vertical tensile member or connection means 6, when under a tensile load can frequently and inadvertently slip or dislocate sideways 8 from the centre of the palmar/palmar aspect of the fetlock joint when the horse is in motion. To be capable of effectively resisting tendon strain, the tensile member 6 must remain at all times throughout the gallop stride vertically central to the palmar/palmar aspect of the fetlock joint. This sideways dislocation 8 of the prior art device is due to the fact that during exercise, the hyperextension of the fetlock joint places a tensile load upon said tensile member 6 and together with the rapid and highly turbulent cyclical loading and unloading, the tensile member 6 dislocates off the apex of the fetlock joint. In the prior art there is no means whatsoever to prevent this lateral or sideways dislocation when under a dynamic high tensile load such as when the horse is galloping. One embodiment of the prior art does describe a connection piece between the tensile member 6 and the compression hinge but it must be understood that this is entirely a compression resistant component and its function is solely to prevent compression load being exerted upon the sesamoid bones 12. It cannot prevent the tensile member 6 from becoming dislocated laterally off the vertical centre line during locomotion. The problem becomes evident when lateral dislocation 8 occurs, the dislocated tensile member 6 becomes entirely ineffective at limiting joint hyperextension and consequently it also becomes unable to resist tendon tensile strain levels and protect against tendon strain injury.

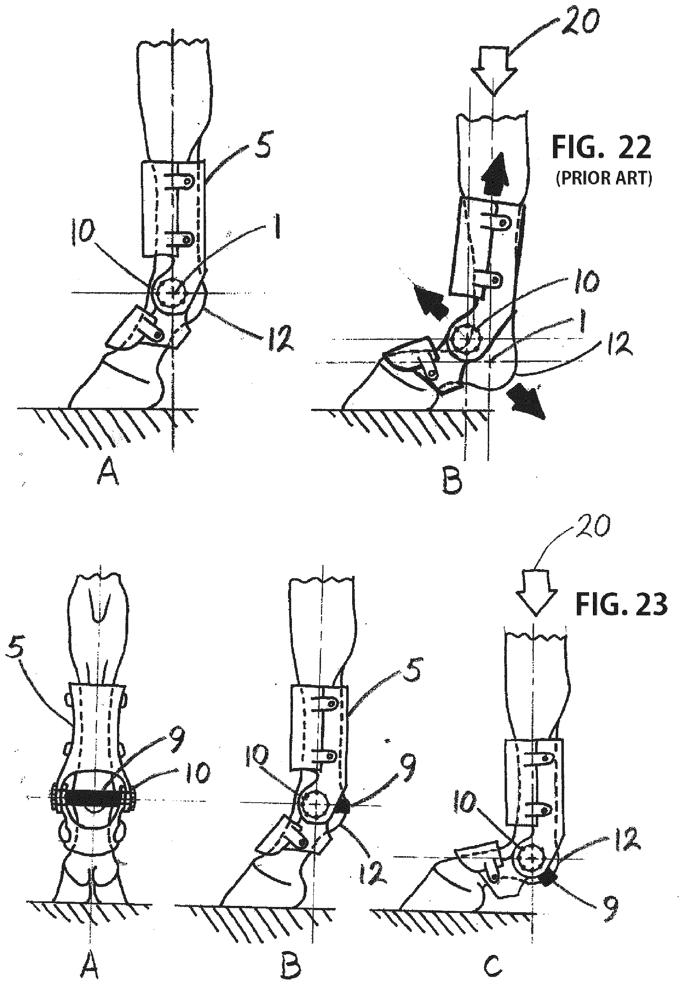

Figs 22A illustrates a further problem relating to a specific embodiment of the prior art Pflaster et al Patent Nos. US8894594B2, US9044306B2, US9427347B2, US10314680B2 and Pflaster et al Patent Application Nos. US2019/0290414A1, US2013/0338554A1 and WO2014/099739A3 where the resistance to fetlock joint hyperextension is now controlled by a rotational resistance, friction or locking within the said hinge 10 itself, instead of by use of the vertical tensile member. This prior art method of resisting fetlock joint extension has been shown in clinical practice to be ineffective due to the fact that when the sesamoid region 12 of the fetlock joint moves down towards the ground as the horse gallops, the hinge 10 of the prior art support device fails to move down in unison with the fetlock joint, See Fig 22B. This fault occurs because there is no barrier under the sesamoid region 12 to prevent the horse's fetlock joint and the hinge 10 of the device from moving down toward the ground. This effect is illustrated in Fig 22A and Fig 22B, where Fig 22A shows the limb and device unloaded with the fetlock joint and the device hinge 10 in correct alignment relative to one another. Fig 22B by contrast, shows how the fetlock joint 1 and the device hinge 10 become misaligned or separated under high load 20 while galloping, thereby rendering the tendon support device entirely ineffective at reducing tendon strain in the exercising horse.

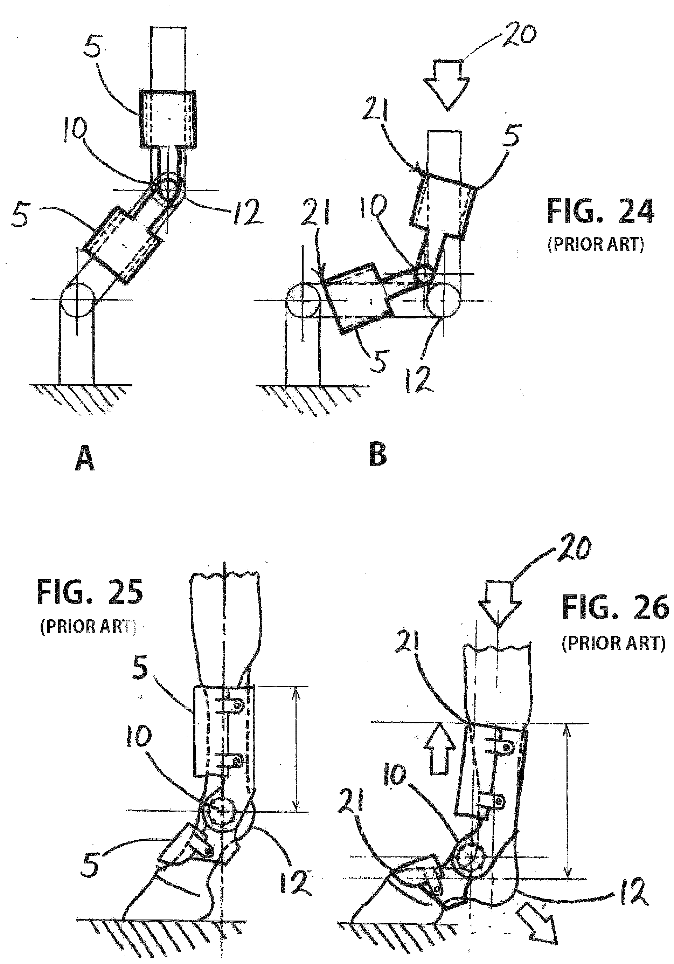

A further significant problem with the prior art devices is the tendency of the upper cannon compression collar 5 of the entire tendon support device to slide inadvertently upwards on the cannon bone when under maximum compression load 20 and when the fetlock joint is at maximum hyperextension (Fig. 24B & Fig. 26). When this upward slippage occurs, the support device further loses its ability entirely to support the tendons and furthermore causes pressure injuries to the horse's skin where the said compression collars 5 dig into the skin at position 21. This tendency for the device to slip uncontrollably up the limb is an effect of the downward force of the horse's own fetlock joint during hyperextension relative to the tendency of the compression collar 5 itself to oppose this movement when resisting hyperextension and consequently to also resist in following the horse's fetlock joint downwards. This downward force on the fetlock, combined with an absence of any opposing force directly under the fetlock joint to resist the downward force of the joint, results in the support device being forced to slide up the leg toward the animal's knee or hock. This tendency for upward movement of the entire device under load is demonstrated in Figs. 24B & 26.

Fig. 24 uses a purely mechanical analogue drawing to illustrate the problem of upward slippage while the horse places weight on the limb. When the limb and device is unloaded (Fig. 24A) it can be observed that the lockable friction compression hinge 10 of the prior art device and the fetlock joint sesamoid region 12 are in correct alignment and so too are the positions of the compression collars 5. However, the problem becomes evident when the downward force 20 is exerted upon the limb and support device by the galloping horse (Fig 24B). In this situation the compression hinge 10 and the fetlock joint sesamoid region 12 become misaligned or separated, as described previously. When this occurs the support device inadvertently moves up the leg and can no longer resist fetlock joint hyperextension. Tendon strain injury will then result. When this misalignment occurs it is followed by a secondary problem of the top and bottom ends 21 of the compression collars 5 digging or pressing into the dorsal aspect of the horses skin high on the cannon bone and low on the pastern, causing severe skin injuries at these specific locations 21.

Figs. 25 & 26 also illustrate the problem of compression hinge and fetlock joint misalignment in a manner more clearly representing the equine lower limb anatomy. Fig 25 shows the unloaded limb while Fig 26 shows the same limb under downward compression load 20 when the horse is in motion where again it can be seen that the compression hinge 10 and the fetlock joint sesamoid region 12 have become misaligned.

It is imperative in emergency situations that the veterinary surgeon can increase and reduce the support level of the tendon support device easily and quickly. For example when the surgeon is transferring an equine patient from a cast to the support device, speed is of the essence because accidental weight bearing on a severely injured limb, between a cast and the support device will cause further catastrophic injury to the healing tendon. The surgeon therefore must be able to find the correct support level within seconds. The present invention provides a solution to this problem.

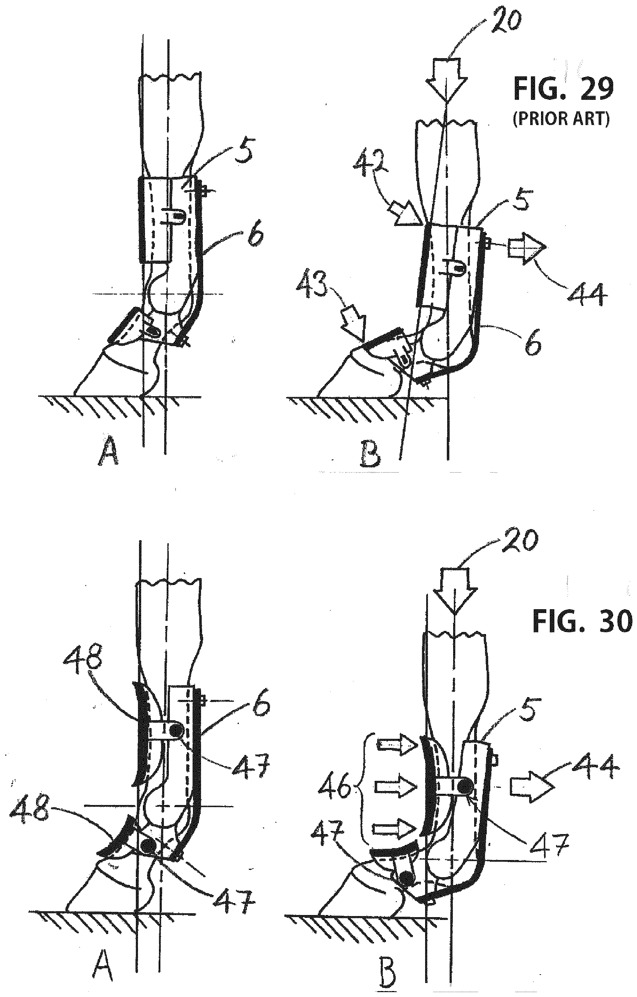

Fig. 29A and Fig. 29B Illustrates a further problem of the aforementioned prior art which is the risk of skin laceration injury, bruising and abrasion to the surface and underlying soft tissue on the dorsal aspect of the equine limb, specifically to the dorsal cannon and pastern. This skin injury is mainly caused by uneven pressure concentration that the prior art devices Fig 29 place onto the dorsal skin as a concentrated shear load as the horse places weight on the limb. As the horse gallops it exerts the downward load 20 onto the limb and in turn the tensile load that is transferred away from the horse's own tendons causes a rearward movement, as referenced by arrow 44, of the upper cannon collar 5. By comparison Fig 29A illustrates the unloaded limb while the horse is standing still. The rearward movement 44 of the upper cannon collar 5 under load 20 is in turn transferred to the skin of the dorsal aspect of the cannon and pastern bones as a concentrated or localised shear load 42 & 43 and is the result of the prior art dorsal panels possessing no articulation in relation to the cannon collar 5. This localised shear load becomes concentrated onto small surface areas at the top end of the cannon bone as referenced by arrow 42, and also onto the bottom end of the pastern bone as referenced by arrow 43 (Fig 29 B). The resulting skin injury caused is in fact similar in cause and effect to the cast sores that are frequently seen by veterinarians when using conventional entirely rigid casting methods used to immobilize the limb during rehabilitation.

A further problem with existing quick release fastening techniques, such as tension latches and conventional buckles is that they lack sufficient tensile strength, articulation and lightness in weight to be of practical use in tendon and ligament support.

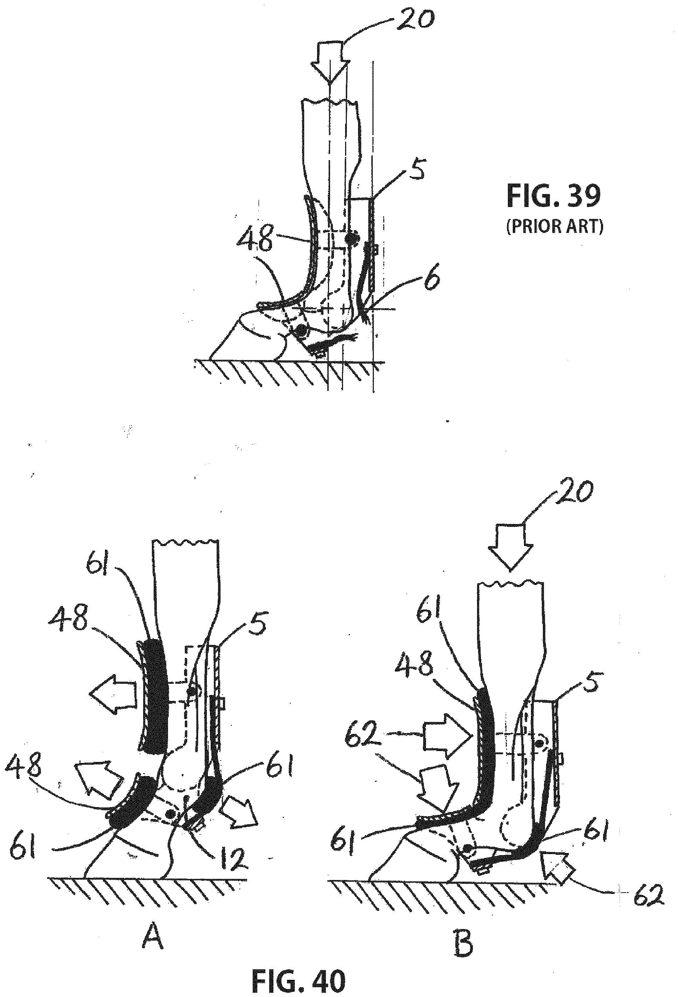

A further problem of the prior art tendon support devices is that the energy dissipation and absorbency method is the function entirely of an inelastic tensile member or artificial tendon 6. This has proven to be problematic for several reasons. As previously explained, there is a dynamic tensile load on the tensile member 6 in excess of 2000KG which is a consequence of the aforementioned downward compression load 20 on the equine limb as the horse gallops. Furthermore as the tensile structures are more prone to catastrophic and sudden failure when subjected to comparable high dynamic loading, using the inelastic tensile member 6 as the shock absorbent and energy dissipation material of the prior art results in a very sudden and uncontrolled tensile loading failure. The frequent consequence is tensile failure of the tensile member 6 due to an excessively harsh and sudden tensile loading applied on the three pressure points which in turn further risks causing bruising to the skin and the underlying soft tissue of the leg. This problem of tensile failure is illustrated in Fig. 39 which shows how a sudden rupture of the tensile member 6 occurs under said dynamic load 20.

A further problem of the prior art is the difficulty of adapting the tendon support device to suit the diverse size variation from one equine limb to another. Amongst the sport horse population there is an enormously wide range of limb sizes that vary depending on breed characteristics and age and also on varying degrees of inflammation when a limb is injured. As the prior art device must be constructed from a rigid and inflexible material, this has the disadvantage that said prior art devices cannot easily be adapted to variation in limb contour and size. The inflexibility or stiffness of compression structure is necessary as the support device must be of sufficient structural stiffness to be able to maintain structural integrity under high compression load with minimum deformation and this presents the difficulty for the veterinary surgeon of adapting the device to wide variation in limb size and contour. For the support device to function properly, a good fit to the horse's limb is essential. A poor fit can result in friction sores to the skin surfaces of the horse's limb. With the prior art devices the veterinarian must take great care to apply a soft bandage of varying thickness wrapped under the device before the device is applied to the limb. Therefore the veterinarian has no choice but to rely on a visual judgement to make the under-bandage a perfect fit. Such guesswork can result in errors in fitting the device correctly. A poor fitting device is both ineffective at supporting the tendons of the limb and there is also an increased risk of causing injury to the underlying skin and soft tissues due to increased movement, rubbing and friction caused by a poorly fitting tendon support device.

A further problem of the prior art devices is that the tensile member 6 described lacks sufficient tensile strength to be capable of withstanding the extremely high dynamic tensile loads that are exerted upon the said tensile member by the horse at a high speed gallop. The prior art describes a tensile member 6 constructed from straps anchored or fixed to the upper and lower collars using traditional fixing methods, such as bolting and overlapped seams sewn together with thread. However these conventional fixing methods are unable to withstand the high sudden dynamic tensile loads exerted upon them by the galloping horse. As a consequence the prior art tensile member and its anchor points are prone to frequent premature failure. This problem is particularly difficult to solve as the strength to weight ratio required is exceptionally demanding. This is best appreciated when one understands that the athletic horse at a standstill may weigh typically between 500KG to 600KG on a scales, and that this load is multiplied by a factor of four or more at a gallop, to the extent that the dynamic load placed on each leg and the tensile member when supporting the leg, at every gallop stride can be in excess of 2,000KG (20,000 N) tensile load on the flexor tendon. Therefore the tensile member or artificial tendon of the device must be capable of withstanding this extreme dynamic tensile load repeatedly without mechanical failure over a prolonged time period. At the same time the device must also be of sufficiently low mass as to be wearable on the equine leg without slowing down or hindering the horse's movement in any way.

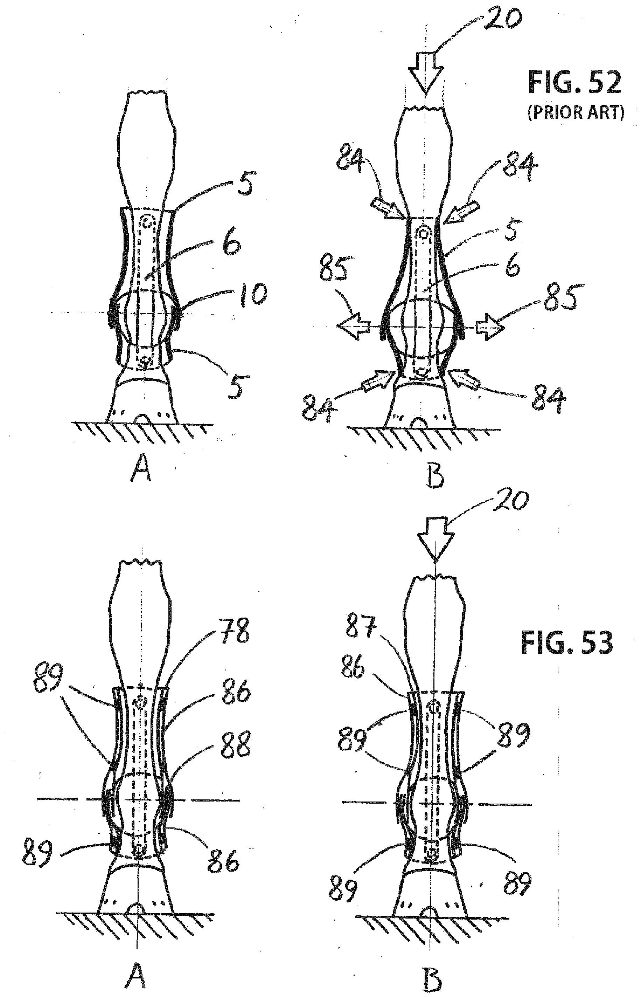

A further problem of the prior art devices is that the construction of the upper and lower compression collars 5 and hinge assembly 10 lack sufficient compression strength and structural stiffness to be capable of withstanding the extremely high dynamic compression loads 20 exerted upon them as the horse gallops. Under high compression load the compression collars and hinge 5 and 10 have been measured to deform excessively due to insufficient structural stiffness and in some cases they have suffered catastrophic structural failure. This high deformation level (See Fig 52B arrows 84) is due to the single layer construction, as described by the prior art devices, being unable to withstand the high compression load 20 that it is subjected to by the exercising horse. For the support device to have maximum efficiency it is imperative that there be little or no structural deformation of the compression collars 5 and compression hinge 10, even at the highest compression loads 20 that can be placed upon it by the galloping horse. The greater the structural deformation, the less effective the support device is at reducing hyperextension of the joint and consequently flexor tendon strain. The structural failure rate of the compression collars 5 and hinge assembly 10 of the prior art devices is excessively high due to a lack of inherent stiffness within the structure. This problem is particularly difficult to solve as the strength to weight ratio required is extremely demanding. This extreme strength to weight ratio can be best demonstrated when it is understood that, while the athletic horse may weigh typically between 500KG to 600KG, this mass is multiplied by a factor of four at a gallop to the extent that the compression load 20 placed on each leg during a single gallop stride can become in excess of 2000KG (20,000N). The compression members 5 and 10 of an equine tendon support device must be capable of withstanding this extreme compression load 20 repeatedly without excessive deformation, fatigue or structural failure. At the same time the entire device itself cannot weigh any more than a 0.5 KG as it would then be entirely impractical to be carried on a horse's limb while exercising.

A further problem caused by the single layer hinge assembly of the prior art devices is that there is the tendency of the central nut and bolt to accidentally unwind and come apart in use.

Fig. 52A illustrates the prior art tendon and ligament support's single layer wall construction with the limb unloaded and how the walls of the compression structure 5 and 10 are in correct alignment but only while the limb while unloaded.

Fig. 52B illustrates the prior art tendon and ligament support's single layer wall construction when the limb is under high compression load 20, as the horse gallops. It can be seen how the walls of the compression structure 5 and 10 are now subject to deformation and excessive flexion under load 20. It can further be seen how the top and bottom edges of the compression collars 5 deform inwards (arrows 84) towards the limb, potentially causing a severe concentrated pressure point injury to the skin. Simultaneously the hinge section 10 deflects outwards (arrows 85) under the same compression load 20.

A further problem of the prior art tendon and ligament support devices is in adapting them to fit the wide range of equine limb sizes that exist in the equine population. The prior art devices require a range of pre-made and non-adjustable sizes, but this sizing system is problematic as the equine limb size diversity is very varied, a limited range of sizes presents severe sizing limitations. A fixed number of sizes of stiff structure devices requires the operator to apply a bandage of varying thickness to make the device fit the limb of each individual animal. Furthermore there is currently no method described by the prior art that allows the veterinarian to make such adjustment to the stiff structure of the compression collars 5 and hinge 10.

A further problem of the prior art tendon and ligament support devices is the difficulty of maintenance and repair of the support device. It is essential that consumable parts be replaced periodically due to wear and tear and such consumable high wear components in the prior art are attached by permanent assembly methods whereby the said consumable components are in turn permanently integrated into the support device. This makes replacement of said parts time consuming and servicing of devices difficult to carry out.

A further problem of the prior art is that the tendon and ligament supports described therein are limited to controlling extension of the fetlock joint. They do not restrict flexion and consequently cannot protect or treat injury of the extensor tendons. However there are also more rare occasions when it is necessary for the veterinarian to restrict flexion of the fetlock joint also. These situations include, but are not limited to, a contracted flexor tendon 94 or flexor muscles that cause an abnormally over flexed fetlock joint and upright or vertical pastern 98. This is most often the result of a previously injured flexor tendon, during the healing of which scarring and shortening of said flexor tendons resulted. To treat this condition, a controlled restriction or resistance to fetlock joint flexion is required. The existing prior art devices cannot perform the function described here of controlling flexion of the fetlock joint 1.

Fig. 57 illustrates the normal fetlock joint angle 96, which on average is around 30 degrees off the vertical in a healthy horse while standing still.

Fig. 58 illustrates contraction of the flexor tendons or flexor muscles resulting in abnormally upright and pasterns with the fetlock joint angle becoming 0 degrees off the vertical 97.

It is also unfortunately a very common occurrence for horses, that have made a recovery from flexor tendon or suspensory ligament injury, to reinjure soon after returning to competition or racing. Veterinarians and horse trainers need to be able to continue the same high level of tendon support, when the horse has recovered enough to return to racing. The problem is that the prior art devices, cannot be worn on the limbs of horses at competitive racing speeds due to their excessive weight and size. To fully appreciate this problem it must be understood that, at a competitive racing gallop, a healthy racehorse is travelling at over 50 km/hr while taking one stride on average every 0.75 seconds. This means that at a gallop, each foot must accelerate from 0 km/hr to over 80 in less than one second as it leaves the ground and passes the body of the horse. This extreme rate of acceleration is the reason why any additional weight whatsoever added to the horse's lower leg will significantly reduce speed and hence compromise competitiveness. The prior art devices are therefore entirely unsuitable to be worn on the limb during competitive work such as racing.

A further significant challenge in the rehabilitation of flexor tendon and suspensory ligament injury in horses is the high incidence of injury recurrence both during the injury rehabilitation itself or shortly after rehabilitation is assessed by the veterinarian to be complete. It is well known in the field of equine veterinary science that over 50% of horses that return to work post tendon injury rehabilitation, will re-injure shortly afterwards. This is in large part due to a lack of quantifiable clinical data available to veterinarians that would enable them to accurately evaluate the high-risk clinical signs during a rehabilitation and after the return to competitive work such as racing. The prior art devices do not provide, to the veterinarian, any useful numerically quantified data relating to flexor tendon core temperature, flexor tendon loading, pulse, or joint pressure at any given time during and after a tendon or ligament injury rehabilitation. Gilbert et al US Patent Application US 2020/0085019A1 describes an electronic performance analytics system for monitoring various parameters in relation to equine lower limb during exercise but not limb temperature or load compression at the fetlock joint.

The most useful clinical data includes: limb temperature and load compression on the fetlock joint whether at standstill or during locomotion. At present the said clinical signs are judged by the veterinarian, entirely by eye as it were, which is an unreliable method of assessment and prone to frequent erroneous diagnoses being derived and significant variation in opinion from one practitioner to another. Therefore a more quantifiable method of useful clinical data acquisition is essential for the veterinarian to have at their disposal, in order that they can accurately assess the degree of injury and rate of recovery at any given time, during the healing process and furthermore allowing the veterinarian to make improved and standardised diagnoses regarding the treatment protocol for the particular individual injury case based on quantified information. The primary indicators are temperature of the lower limb, the degree of fetlock support that the injured leg is receiving from the support device. Furthermore the level of compression at the fetlock joint is an indicator of the amount of body weight the animal is placing on the limb and together are important indicators of degree of injury, pain levels and state of recovery at any given time. Such quantifiable data is also of great importance after the horse has returned to work post injury.

Pflaster et al Patent Nos. US8894594B2, US9044306B2, US9427347B2, US10314680B2 and Pflaster et al Patent Application Nos. US2019/0290414A1, US2013/0338554A1 and WO2014/099739A3 all describe the same support devices for a horse primarily comprising a proximal and a distal cuff above and below the fetlock joint connected by a locking hinge using a toothed gear mechanism to control joint extension and variations thereof. However none of these documents teach the aspects of present invention and specifically a support device that uses an inelastic tensile member in conjunction with a compression hinge and collars to control fetlock joint extension.

Thus a need is identified for a tendon and ligament support for a horse with a tensile member that is anchored internal to the compression collars and in being so optimally positioned on the interior of the upper cannon collar as to be capable of redistributing pressure, evenly onto the palmar/plantar aspect of the limb, to prevent an uneven pressure concentration on any point of the palmar or plantar areas of the equine limb at any stage during the loading cycle, particularly during maximum extension of the fetlock joint when the risk of skin pressure injury is at its highest.

Thus a need is identified for a tendon and ligament support for a horse with variable support levels and an improved method of incremental adjustment of the fetlock and tendon joint support level that is easy and fast for a veterinarian to perform.

Thus a need is identified for a tendon and ligament support device for a horse, with a vertical tensile member that cannot become dislocated 8 sideways off the centre vertical line or palmar/palmar aspect of the lower limb when under a dynamic tensile load such as when a horse is exercising.

Thus a need is identified for a tendon and ligament support device for a horse that will at all times maintain its correct position on the limb and prevent any tendency of the entire device to slide inadvertently up the cannon bone under high load applied during the moment of maximum hyperextension of the fetlock joint as the horse exercises.

Thus a need is identified for a tendon and ligament support for a horse with an improved dorsal limb front cover mechanism that can redistribute the pressure transferred from the injured tendons and divert said transferred pressure as widely as possible onto the dorsal cannon bone and dorsal pastern bone to further reduce the risk of skin injury on those particularly vulnerable surface areas of the limb.

Thus a need is also identified for a tendon and ligament for a horse with an improved pressure distributing dorsal limb front cover that can also function as a closure mechanism and that also possesses sufficient tensile strength, lightness in weight, articulation and small size to be of practical use in the present application.

Thus a need is identified for a tendon and ligament support for a horse that replaces or reduces the reliance on the tensile strength of an inelastic tensile member 6 as an energy dissipating shock absorber.

Thus a need is identified for a tendon and ligament support for a horse with a fitting method that is easily adapted to suit a wide range of horse's limb sizes and at the same time can be reliably applied by the veterinarian without risk of error in application.

Thus a need is identified for a tendon and ligament support for a horse comprising a tensile member with sufficiently increased tensile strength that is capable of withstanding the highest dynamic tensile loads that can be exerted upon it by a horse galloping at speed and simultaneously be of sufficiently low mass that it can be carried on a horse's leg during locomotion without hindrance to locomotion.

Thus a need is identified for a tendon and ligament support for a horse with sufficient compression stiffness to be able to withstand, without excessive deformation or structural failure, the high dynamic compression loads that inevitably are exerted upon it by a horse galloping. At the same time the said compression structure must also be of sufficiently low mass as to be practical to be worn on the leg without excessively hindering the horse's locomotion.

Thus a need is identified for a tendon and ligament support for a horse with an adjustable sizing system that allows a single support device, of stiff structure, to be easily and accurately modified to fit a wide range of equine limb sizes using the same individual stiff compression collars and hinge.

Thus a need is identified for a tendon and ligament support for a horse with consumable parts including but not limited to the hinge bearings and tensile member which can be easily serviced and replaced without the need to dismantle the entire device.

Thus a need is identified for a tendon and ligament support capable of providing controlled restriction to HYPERFLEXION of the fetlock joint caused by extensor tendon injury or by flexor tendon and flexor muscular contraction abnormalities.

Thus a need is identified for a tendon and ligament support for a horse that can be used effectively while racing, post injury recovery, to control flexor tendon strain levels and prevent overstrain tendon injury recurrence during competition and at the same time be of sufficiently low weight as to not restrict or slow the horse.

Thus a need is identified for an equine tendon and ligament support system for a horse capable of providing to the veterinarian, accurate numerical clinical data, based on reliable measurements of limb temperature and fetlock joint compression level while standing still or while exercising.

A further problem of the prior art tendon injury supports and also of conventional tendon support methods is that they lack the durability to be re-used a significant number of times or to treat multiple injury cases. The conventional fetlock support and bandaging materials used in veterinary medicine to treat equine injuries are in fact entirely disposable requiring the application of new material on a daily basis contributing to significant quantities of material waste and potential harm to the environment.

Thus a need is identified for an injury rehabilitation support for a horse that can be re-used multiple times to treat multiple different injury cases thereby helping to reduce material wastage and harm to the environment.

It is an object of the present invention to provide an improved support device for rehabilitation of a tendon and/or ligament which addresses some of the above mentioned problems of the prior art or at least to provide the public with a useful choice.

### Summary of the invention

A tendon and ligament support for a horse with a tensile member that is anchored internal to the inside surface of the compression collars and in being so optimally positioned on the interior of the upper cannon collar as to be capable of redistributing pressure, evenly onto the palmar/plantar aspect of the limb, to prevent an uneven pressure concentration on any point of the palmar or plantar areas of the equine limb at any stage during the loading cycle, particularly during maximum extension of the fetlock joint when the risk of skin pressure injury is at its highest.

A tendon and ligament support for a horse with variable support levels and an improved method of incremental adjustment of the fetlock and tendon joint support level that is easy and fast for a veterinarian to perform.

A tendon and ligament support device comprising a vertical tensile member that cannot become dislocated sideways off the centre vertical line or palmar/palmar aspect of the lower limb when under a dynamic tensile load such as when a horse is exercising.

A tendon and ligament support device for a horse that will at all times maintain its correct position on the limb and prevent any tendency of the entire device to slide inadvertently up the cannon bone under high load applied during the moment of maximum hyperextension of the fetlock joint as the horse exercises.

A tendon and ligament support for a horse with an improved dorsal limb front cover mechanism that can redistribute the pressure transferred from the injured tendons and divert said transferred pressure as widely as possible onto the dorsal cannon bone and dorsal pastern bone to further reduce the risk of skin injury on those particularly vulnerable surface areas of the limb.

A tendon and ligament for a horse with an improved pressure distributing dorsal limb front cover that can also function as a closure mechanism and that also possesses sufficient tensile strength, lightness in weight, articulation and small size to be of practical use in the present application.

A tendon and ligament support for a horse that replaces or reduces the reliance on the tensile strength of an inelastic tensile member 6 as an energy dissipating shock absorber.

A fitting method that is easily adapted to suit a wide range of horse's limb sizes and at the same time can be reliably applied by the veterinarian without risk of error in application.

A tendon and ligament support for a horse comprising a tensile member with sufficiently increased tensile strength that is capable of withstanding the highest dynamic tensile loads that can be exerted upon it by a horse galloping at speed and simultaneously be of sufficiently low mass that it can be carried on a horse's leg during locomotion without hindrance to locomotion.

A tendon and ligament support for a horse with sufficient compression stiffness to be able to withstand, without excessive deformation or structural failure, the high dynamic compression loads that inevitably are exerted upon it by a horse galloping. At the same time the compression structure is of sufficiently low mass as to be practical to be worn on the leg without excessively hindering the horse's locomotion.

An adjustable sizing system that allows a single support device, of stiff structure, to be easily and accurately modified to fit a wide range of equine limb sizes using the same individual stiff compression collars and hinge.

Consumable parts including but not limited to the hinge bearings and tensile member which can be easily serviced and replaced without the need to dismantle the entire device.

Controlled restriction to hyperflexion of the fetlock joint caused by extensor tendon injury or by flexor tendon and flexor muscular contraction abnormalities.

A tendon support device which can be used effectively while racing, post injury recovery, to control flexor tendon strain levels and prevent overstrain tendon injury recurrence during competition and at the same time be of sufficiently low weight as to not restrict or slow the horse.

A tendon support device that provides to the veterinarian accurate numerical clinical data, based on reliable measurements of limb temperature and fetlock joint compression levels while standing still or while exercising.

According to a first aspect a tendon and ligament support for a limb joint is provided. The support comprising a first collar for embracing a first limb above the joint, a second collar for embracing a second limb below the joint, and a connection means adapted to provide limited ligament and/or tendon elongation under load. The connection means comprising
a pivot for providing articulation and separation between the first collar and second collar,
a tensile connector connected to both the first collar and the second collar and configured to limit movement of the limb joint, and a stabiliser means to prevent lateral and/or medial movement of the connector during use. The tensile connector comprising a substantially inelastic material.

Preferably, the connector is located substantially centrally along the limb joint.

Preferably, the pivot comprises a first hinge on a lateral side of the limb joint and a second hinge on a medial side of the limb joint.

Preferably, the stabiliser means comprises a stabilising member extending in a perpendicular direction to the tensile connector and connected to both the first and second hinges.

Preferably, a central region of the stabilising member is connected to the tensile connector.

Preferably, the stabilising member is configured to connect to the tensile connector at a position where the limb joint is located.

Preferably, wherein the stabilising member is configured to connect to the tensile connector at a position distal to where the limb joint is located.

Preferably, the stabilising member is configured to connect to the tensile connector at a position proximal to where the limb joint is located.

Preferably, the stabilising member is connected to interior sides of the first and second hinges which face the limb joint.

Preferably, the stabilising member is connected to exterior sides of the first and second hinges which face away from the limb joint.

Preferably, the stabilising member is connected to anchors which are then connected to the first and second hinges and wherein the anchors are configured to rotate with respect to the hinges.

Preferably, the stabilising means comprises a plurality of stabiliser members connected at different positions along the tensile connector.

Preferably, the stabilising means comprises three stabiliser members connected to the connector, wherein the first stabiliser member is connected to the tensile connector at a position where the limb joint is located, wherein the second stabiliser member is connected to the tensile connector at a position proximal to where the limb joint is located, and wherein the third stabiliser member is connected to the tensile connector at a position distal to where the limb joint is located.

Preferably, the stabilising means comprises two stabiliser members connected to the tensile connector, wherein the first stabiliser member is connected to the first collar on a lateral side and the second collar on a distal side, and wherein the second stabiliser member is connected to the first collar on the distal side and the second collar on the lateral side.

Preferably, the connector comprises two members that form the stabilising means, wherein the first member is connected to the first collar on a lateral side and the second collar on a distal side, and wherein the second member is connected to the first collar on the distal side and the second collar on the lateral side.

Preferably, the tensile connector comprises two tensile connector members located on each of the lateral and medial sides of the joint, and wherein the stabilising means comprises one or more stabiliser members joining the two tensile connector members.

Preferably, the connector comprises two tensile connector members located on each of the lateral and medial sides of the joint, and wherein the stabilising means comprises a stabilising mesh joining the two tensile connector members.

Preferably, the stabilising member and tensile connector are integrally formed.

Preferably, the stabilising member comprises a circular pad located centrally.

According to another aspect of the invention a tendon and ligament support for a limb joint is provided. The support comprising a first collar for embracing a first limb above the joint, a second collar for embracing a second limb below the joint, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material and the connector contacting a limb facing surface of the first collar.

Preferably, the tensile connector is connected to the limb facing surface of the first collar.

Preferably, the tensile connector is connected to the first collar at a location generally equidistant from proximal and distal ends of the first collar.

Preferably, the first collar comprises an aperture through which the tensile connector passes from the limb facing surface to an exterior facing surface of the first collar and wherein the tensile connector connects to the exterior facing surface.

According to another aspect of the invention a tendon and ligament support for a limb joint is provided. The support comprising a first collar for embracing a first limb above the joint, a second collar for embracing a second limb below the joint, and a connection means adapted to provide limited ligament and/or tendon elongation under load. The connection means comprising a pivot for providing articulation and separation between the first collar and second collar, a tensile connector connected to both the first collar and the second collar and configured to limit movement of the limb joint, and an adjustment means configured to adjust the tensile connector depending on the amount of support required for the limb joint. The connector comprising a substantially inelastic material.

Preferably, the adjustment means comprises a fixed member positioned on the first collar; a sliding member connected to the tensile connector; wherein the fixed member and sliding member can be removably connected in a plurality of positions.

Preferably, the sliding member comprises a plurality of apertures.

Preferably, the adjustment means further comprises a fastener configured to connect the fixed member and the sliding member through one of the plurality of apertures.

Preferably, the connector comprises a loop that is connected through one of the plurality of apertures in the sliding member.

Preferably, the tensile connector is connected to a distal aperture in the sliding member.

Preferably, the adjustment means comprises a tension latch through which the tensile connector is connected at different lengths depending on the required support.

According to another aspect of the invention a tendon and ligament support for a limb joint is provided. The support comprising a first collar for embracing a first limb above the joint, a second collar for embracing a second limb below the joint, a connection means adapted to provide limited ligament and/or tendon elongation under load. The connection means comprising a pivot for providing articulation and separation between the first collar and second collar, a tensile connector connected to both the first collar and the second collar and configured to limit movement of the limb joint, and an adjustment means configured to adjust the tensile connector depending on the amount of support required for the limb joint. The connector comprising a substantially inelastic material.

Preferably, the adjustment means comprises a fixed member positioned on the first collar; a sliding member connected to the tensile connector; wherein the fixed member and sliding member can be adjustably connected in a plurality of positions.

Preferably, the sliding member comprises a plurality of apertures.

Preferably, the adjustment means further comprises a fastener configured to connect the fixed member and the sliding member through one of the plurality of apertures.

Preferably, the tensile connector comprises a loop that is connected through one of the plurality of apertures in the sliding member.

Preferably, the tensile connector is connected to a distal aperture in the sliding member.

Preferably, the adjustment means comprises a tension latch through which the tensile connector is connected at different lengths depending on the required support.

According to another aspect of the invention a tendon and ligament support for a limb joint is provided. The support comprising a main body, a first collar for embracing a first limb above the joint, a second collar for embracing a second limb below the joint, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The first collar comprising a first front panel rotatably connected to the main body. The second collar comprising a second front panel rotatably connected to the main body.

Preferably, the first front panel is moulded to generally conform to the curvature of the first limb.

Preferably, the second front panel is moulded to generally conform to the curvature of the second limb.

Preferably, the first front panel has a substantially oval shape when viewed from a front direction.

Preferably, the second front panel has a substantially oval shape when viewed from a front direction.

Preferably, a first strap wraps around the first front panel and is rotatably connected to the main body by a first fastener.

Preferably, a second strap wraps around the second front panel and is rotatably connected to the main body by a second fastener.

Preferably, the first fastener comprises a stud on the main body that engages one or more first slots on the first strap.

Preferably, the second fastener comprises a stud on the main body that engages one or more second slots on the second strap.

Preferably, the first and/or second slot is substantially keyhole shaped.

Preferably, a safety mechanism prevents the fastener from disengaging.

Preferably, the connection between the first strap and the main body is adjustable depending on the size of the first limb.

Preferably, the connection between the second strap and the main body is adjustable depending on the size of the second limb.

Preferably, the first strap is attached via an adjustably ratchet system.

Preferably, the second strap is attached via an adjustably ratchet system.

Preferably, a spacer is provided between the first front panel and the first limb.

Preferably, a spacer is provided between the second front panel and the second limb.

Preferably, the spacer comprises a compressible material.

Preferably, a cushioning boot is detachably connected underneath the main body to protect the limb joint.

Preferably, the cushioning boot is connected by hook and loop fasteners to the main body.

Preferably, the cushioning boot is reversibly inflatable such that it can change size depending on limb size.

Preferably, the cushioning boot comprises one or more pockets for additional padding to be added.

Preferably, one or more shock absorbing pads are provided within the cushioning boot.#

According to another aspect of the invention a tendon and ligament support for a limb joint is provided. The support comprising a main body, a first collar for embracing a first limb above the joint, a second collar for embracing a second limb below the joint, a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The support further comprising one or more electronic sensors.

Preferably, the electronic sensors comprise a temperature or thermal sensor.

Preferably, the electronic sensors comprise a pressure sensor.

According to another aspect of the invention a tendon and ligament support for a limb joint is provided. The support comprising a first collar for embracing a first limb above the joint, a second collar for embracing a second limb below the joint, a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The connector comprising a single continuous looped member connected to anchors on both the first collar and second collar.

Preferably, the second collar comprises a plurality of anchor points through which the tensile connector passes through.

Preferably, the connector wraps around the anchor on the second collar a plurality of times.

Preferably, the tensile connector further connects to anchors on the pivot.

Preferably, the tensile connector loops in a lateral direction between the anchors on the pivot.

According to another aspect of the invention a tendon and ligament support for a limb joint is provided. The support comprising a first collar for embracing a first limb above the joint;
a second collar for embracing a second limb below the joint, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The first and second collars are formed by a double layered wall with a plurality of spacers located between the layers.

Preferably, the pivot comprises one or more hinges and wherein the hinge is inserted between the layers of the first and/or second collar.

Preferably, one or more electrical sensors and/or components are provided between the layers of the first and/or second collar.

According to another aspect of the invention a tendon and ligament support for a limb joint is provided. The support comprising a first collar for embracing a first limb above the joint, a second collar for embracing a second limb below the joint, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The first and second collars being formed by lateral and medial halves joined together by a spacer of an appropriate size to suit the size of the limb joint.

According to another aspect of the invention a tendon and ligament support for a limb joint is provided. The support comprising a first collar for embracing a first limb above the joint, a second collar for embracing a second limb below the joint, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprising a substantially inelastic material. The connector being located at an anterior location on the limb joint.

According to another aspect of the invention a tendon and ligament support for a limb joint is provided. The support comprising a main body comprising a flexible boot that wraps around the joint, a first collar for embracing a first limb above the joint, a second collar for embracing a second limb below the joint, one or more flexible side members that joint the first and second collar, and a connection means adapted to provide limited ligament and/or tendon elongation under load. The connection means comprising a pivot for providing articulation and separation between the first collar and second collar, and a tensile connector connected to both the first collar and the second collar and configured to limit movement of the limb joint. The tensile connector comprises a substantially inelastic material.

Preferably, the support further comprises a third collar for embracing the joint and preventing outward flexion of the side members in use.

Preferably, the support comprises a first front panel covering a portion of the first limb.

Preferably, the support comprises a second front panel covering a portion of the second limb.

According to another aspect of the invention a tendon and ligament support for a limb joint is provided. The support comprising a main body comprising a flexible boot that wraps around the joint, a back panel for covering a portion of the joint, and a tensile member configured to engage a portion of a first limb above the joint and a portion of a second limb below the joint.

Preferably, the support comprises a first front panel covering a portion of the first limb that the tensile member engages.

Preferably, the support comprises a second front panel covering a portion of the second limb that the tensile member engages.

Preferably, the tensile member comprises a continuous looped member.

Preferably, the tensile member forms a figure of eight shaped loop.

Preferably, the tensile member forms dual symmetrical bends at the back panel.

Preferably, the tensile member comprises wider regions where it engages the first front panel and/or the second front panel.

Preferably, the limb joint is an equine limb joint.

According to another aspect of the invention a tendon and ligament support for an equine limb joint is provided. The support comprising a first cannon collar for embracing the limb above the joint, a second pastern collar for embracing the limb below the joint, a connecting hinge located medially and laterally and joining the first cannon and second pastern collars to provide articulation and separation between the first and second collars, a connecting vertical tensile member comprising a substantially inelastic material adjacent the respective palmar or plantar aspect of the equine limb, the connecting vertical tensile member connected to both the first cannon and the second pastern collars and adapted to provide limited movement of the limb joint when under a dynamic or static tensile load, and a stabilizing member for preventing lateral and/or medial dislocation of the connecting vertical tensile member during use and when under a dynamic or static tensile load.

Preferably, the stabilizing member comprises medial and lateral ends that are anchored securely to corresponding medial and lateral sides of the first cannon collar or second pastern collar and wherein a centre of the stabilizing member is securely fixed to the connecting vertical tensile member where the stabilizing member and connecting vertical tensile member intersect.

Preferably, the stabilizing member comprises medial and lateral ends that are anchored securely to the corresponding medial and lateral connecting hinges and wherein a centre of the stabilizing member is securely fixed to the connecting vertical tensile member where the stabilizing member and connecting vertical tensile member intersect

Preferably, the medial and lateral ends are anchored securely to the interior of the corresponding medial and lateral side and/or connecting hinges

Preferably, the connecting vertical tensile member is substantially perpendicular to the stabilizing member.

Preferably, the medial and lateral ends are anchored securely to the medial and lateral sides and/or connecting hinges by corresponding articulated anchors that allow unrestricted articulation of the vertical tensile member and the stabilizing member about the connecting hinge during joint rotation.

Preferably, the stabilizing member comprises a plurality of lateral stabilizing members connected to the medial and lateral articulated anchors and which spread outwards from the articulated anchors to join the vertical tensile member along the posterior aspect of the limb joint.

Preferably, a centre of the stabilizing member is attached securely to the vertical tensile member at a level above or proximal to the limb joint or sesamoid bones.

Preferably, a centre of the stabilizing member is attached securely to the vertical tensile member at a level below or distal to the limb joint or sesamoid bones.

Preferably, a posterior aspect of the stabilizing member is divided and spread apart to cover a posterior aspect of the limb joint, adjacent to and below the sesamoid bones.

Preferably, the stabilizing member comprises two stabilizing member portions, each with two medial and two lateral ends anchored securely to medial and lateral sides of the first cannon and second pastern collars and wherein the stabilizing member portions cross over one another forming a diagonal cross structure at the posterior aspect of the limb joint or sesamoid region and wherein a cross over point of the stabilizing member portions is securely fixed to the centrally located vertical tensile member.

Preferably, the vertical tensile member is absent and the diagonal cross structure functions as both the vertical tendon support and the lateral stabilizing means.

Preferably, the vertical tensile member comprises a dual vertical tensile member that is divided into two or more vertical tensile members, a first to the medial side and a second to the lateral side of the limb and which are anchored securely above and below the connecting hinges medially and laterally of the limb and wherein the vertical tensile members are further joined by a horizontal stabilizing member of high tensile strength, located adjacent the posterior limb joint or sesamoid region thereby preventing lateral separation of vertical tensile members under tensile load.

Preferably, the support further comprises a broadened tensile stabilizing pad, the centre of which is located adjacent the sesamoid region, and which braces the dual vertical tensile members together to prevent lateral separation under tensile load.

Preferably, the vertical tensile member is absent and the support further comprises a medial and/or lateral connecting hinge characterized by friction and/or locking means to limit hinge rotation, a horizontal stabilizing member, adjacent the posterior of the limb joint or sesamoid bones, each end of which is securely fixed, medially and laterally to corresponding exterior or interior surfaces of the support device.

Preferably, the medial and/or lateral connecting hinge characterized by a friction and/or locking within the hinge to resist hinge rotation and further with a broadened tensile pad joining the hinge medially and laterally, the centre of which is located adjacent the sesamoid region.

Preferably, further comprising medial and lateral friction and/or locking hinges joined by a horizontal stabilizing member, a first dorsal pressure pad, adjacent the dorsal cannon bone above the limb joint and attached to the first cannon collar, a second dorsal pressure pad adjacent the dorsal pastern bone below the limb joint and attached to the second pastern collar, a third pressure pad adjacent the apex of the sesamoid region, and wherein in combination form a three point opposing pressure resistance to both joint extension and upward dislocation during tensile loading.

Preferably, the connecting vertical tensile member is adapted to resist simultaneously joint extension and upward dislocation during use.

Preferably, the connecting vertical tensile member is securely fixed to the interior surface of the first cannon collar and / or the second pastern collar adjacent and vertical to the respective palmar or plantar aspect of the limb.

Preferably, the connecting vertical tensile member is securely fixed to the interior surface of the first cannon collar at a location generally equidistant from the proximal and distal ends of the first cannon collar.

Preferably, the first cannon collar comprises an aperture through which the vertical tensile member is inserted and / or passes from an interior limb facing surface to an exterior facing surface of the first cannon collar and wherein the connecting vertical tensile member is securely fixed thereby enabling the vertical tensile member to be adjusted by an external means.

Preferably, further comprising an adjustment means and wherein the adjustment means comprises a fixed member positioned on the first cannon collar; a sliding member connected to the vertical tensile member; wherein the fixed member and sliding member can be securely fastened together in a plurality of positions depending on the required joint support.

Preferably, the sliding member comprises a plurality of apertures of vertical orientation relative to the limb.

Preferably, the adjustment means further comprises a fastener configured to securely fasten the sliding member to the fixed member through one of the plurality of apertures depending on the required joint support.

Preferably, the sliding member is securely attached to a top end of the connecting vertical tensile member.

Preferably, the lower end of the connecting vertical tensile member is connected to the second pastern collar below the limb joint.

Preferably, the adjustment means comprises a tension latch through which the vertical tensile member is connected and set at variable lengths depending on the joint required support.

Preferably, the first cannon collar comprises a first front panel rotatably connected to the first cannon collar and wherein the second cannon collar comprises a second front panel rotatably connected to the second pastern collar.

Preferably, the first and second front panels are adjacent the dorsal aspect of the limb, and wherein the first and second front panels are rotatably and detachably connected to the first cannon collar and second pastern collar by articulated single point pivots that are located adjacent the medial and lateral limb.

Preferably, the articulated single pivot points further comprise a fastening means that can be fastened to or unfastened from the first and second collars.

Preferably, the first and second front panels are manufactured from stiff material with sufficient structural stiffness to resist deformation under high load and moulded in a compound curvature that conforms generally to the curvature of the dorsal aspect of the equine limb.

Preferably, the first and second front panels are of generally oval or round shape when viewed from a dorsal perspective.

Preferably, the first and second front panels each comprise a separate fastener strap of high tensile strength that wraps uninterrupted around the front of the first and second front panels, and wherein the fastener straps comprise fasteners at each end which allow medial and lateral attachment to the first and second collars.

Preferably, further comprising a palmar or plantar pressure panel located adjacent to the respective palmar or plantar sesamoid region to exert a pressure directly onto the palmar or plantar sesamoid region that is both equal and opposite to the sum of pressures exerted onto the dorsal limb by the first and second front panels under load.

Preferably, further comprising a keyhole shaped aperture in each end of fastener straps that engage onto corresponding protruding studs or hooks that are medially and laterally fixed to the first and second collars; and wherein the protruding studs are substantially round in shape to allow articulation or rotation of the first and second front panels and fastener straps about protruding studs.

Preferably, further comprising one or more safety catches or stoppers, fixed permanently to the fastener straps, that insert into the gaps in the wide end of the keyhole apertures after insertion of protruding stud, thereby preventing accidental unfastening.

Preferably, further comprising a size adjustability means comprising a plurality of keyhole shape apertures along the side length of the fastener strap, any of which can be attached to protruding stud, allowing adaptation of the tendon and ligament support to a variation in limb sizes.

Preferably, further comprising a ratchet system with adjustable high tension pull straps at each end of the fastener strap and wherein the fastener straps comprise a purality of ratchet positions, each of which adapts the tendon and ligament support to a variation in limb size.

Preferably, further comprising one or more spacers of variable thickness that can be inserted dorsally between said fastener straps and the first and / or second front panels, thereby allowing an alternative method of adjustability to a variation in limb size.

Preferably, further comprising a tension latch to secure the first and second front panels to the first and second cannon collars to prevent accidental disengagement of the fastener straps during use.

Preferably, further comprising a dynamic pressure redistribution and energy dissipation means where the function of shock absorbency and energy dissipation is a function of a layers of shock absorbent compression material of substantial thickness, a shock absorbent compression pad located between the first front panels of the support device and surfaces of a horses leg adjacent a dorsal cannon bone, a shock absorbent compression pad located between the second front panels of the support device and the surfaces of the horses leg adjacent the dorsal pastern bone, a shock absorbent compression pad located between the vertical tensile member and the surfaces of the horses leg adjacent the sesamoid bones, and wherein the compression pads compress and decompress under the dynamic loading and unloading exerted by an exercising horse.

Preferably, further comprising a plurality of laminated layers of shock absorbent compression material, including foams of predetermined variable hardness, that compress at different rates depending on the compression load applied.

Preferably, further comprising a separate inner boot of soft material that is applied directly to the limb, over which the tendon and ligament support is then applied, and wherein the separate soft inner boot covers substantially the entire lower limb of a horse in use thereby preventing all direct contact of the tendon and ligament support device material with the horse's skin.

Preferably, further comprising a separate inflatable inner soft cushioning boot whereby the sizing is adjustable in thickness by means of inflation and/or deflation.

Preferably, the inflatable inner soft cushioning boot is inflated using one of foam, gas, fluid, gel or plastic beads within cavities in the said inner soft boot that can be injected into or aspirated out of the cavities to fill space between the limb and support device.

Preferably, the sizing of the inner boot is adjusted in thickness by means of pockets or cavities into which are inserted cushioning pads of varying thickness.

Preferably, sizing of the inner boot is adjusted in thickness by means of a plurality of pockets incorporated into the boot, any one of which can be varied in thickness, independently of one another, to any variation in proportion of limb.

Preferably, a first pocket is located around the cannon bone, a second pocket is located around the fetlock joint, and a third pocket is located around the pastern bone in use.

Preferably, further comprising shock absorbent pads that are ideally located adjacent to the pressure zones where the energy dissipation is most required.

Preferably, the pressure zones are adjacent the dorsal cannon bone, dorsal pastern bone and the sesamoid region of the limb.

Preferably, the shock absorbent pads are manufactured from shock absorbent foams that can effectively recoil and / or dissipate the energy exerted upon them by the support device as a horse exercises.

Preferably, further comprising electronic sensors imbedded into the inner boot fabric for measurement of various parameters such as limb temperature and/or joint angle measurement.

Preferably, the inner boot is attached securely to an interior of the support.

Preferably, the vertical tensile member comprises a single strand fibre of high tensile strength that is wound or woven in a loop multiple times forming a continuous loop tensile member that is uninterrupted by a seam and wherein the continuous loop tensile member is connected at the top end to a first cannon anchor adjacent the posterior aspect of the first cannon collar and at the bottom end to a second pastern anchor adjacent the posterior aspect of the second pastern collar.

Preferably, the continuous loop tensile member is comprised of a unidirectional fibre of high tensile strength and low elasticity.

Preferably, the continuous loop tensile member comprises one of nylon, Mylar, Dyneema, carbon or Kevlar.

Preferably, the continuous loop tensile member is woven from a narrow point adjacent the first cannon anchor downward to a broadened lower second pastern anchor that is curved in shape to conform to the posterior aspect of the second pastern collar.

Preferably, the lower second pastern anchor is folded around the underside of a posterior wall of the second pastern collar and wherein the lower pastern anchor is fixed securely to the second pastern collar, and wherein medial and lateral ends of the lower second pastern anchor can be arranged when required to accommodate attachment of load bearing fasteners.

Preferably, the continuous loop tensile member comprises high tensile fibres that are woven in a complex continuous and uninterrupted path to connect both the medial and lateral connecting hinges of the tendon and ligament support and the first cannon anchor, above the limb joint to the second pastern anchor below the limb joint.

Preferably, the continuous loop tensile member is covered in a flexible casing that binds the high tensile fibres into fixed positions.

Preferably, the continuous loop tensile member comprises longitudinal strands, the ends of which are firmly imbedded into small spherical metallic balls integrated with ends of the continuous loop tensile member.

Preferably, the first cannon collar and / or the second pastern collar comprise dual or double wall constructions.

Preferably, the walls comprise a stiff compression resistant material.

Preferably, the walls comprise one of a metal, carbon or kevlar fibre.

Preferably, the spaces between the walls can be air filled or filled with a core material.

Preferably, the core material comprises one of lightweight foam and nomex honeycomb.

Preferably, the spaces between the walls are created by placement of spacers of high compression strength at intervals between the walls.

Preferably, further comprising an integrated forked hinge formed by the spaces between the walls and between outer and inner walls of the first cannon or second pastern collars.

Preferably, the spaces between the walls are formed to encase mechanical and/or electrical components.

Preferably, the first cannon collar and second pastern collar are split vertically and separated into left and right symmetrical components, and wherein vertical spacers of varying thickness are inserted between the left and right symmetrical components to allow size adaptation of the first cannon and second pastern collars to variation in limb size.

Preferably, further comprising a plurality of removable horizontal assembly bolts to securely assemble the symmetrical components with vertical spacers of varying thickness.

Preferably, the connecting vertical tensile member is adjacent a dorsal aspect of the equine limb and adapted to controllably limit fetlock joint hyper flexion.

Preferably, the connecting vertical tensile member is adjustable in length.

According to another aspect of the invention a lightweight dynamic tendon and ligament support for an equine limb joint particularly for the purpose of preventing injury recurrence during exercise post injury recovery is provided. The support comprising a lightweight soft wrap around boot applied to embrace a horse's limb during use, a first cannon collar for embracing the limb above the joint and a second pastern collar for embracing the limb below the joint, wherein the first cannon collar and second pastern collar are attached to the boot by, a plurality of flexible side members of high compression strength and of sufficiently flexible material capable of bending in unison with fetlock joint flexion and extension during locomotion, and wherein one flexible side member is assembled to the boot medial of the fetlock joint and another flexible side member is assembled to the boot lateral of the fetlock joint providing articulation and separation between the first cannon and second pastern collars, a connecting vertical tensile member comprising a substantially inelastic material adjacent the respective palmar or plantar aspect of the equine limb, and wherein the connecting vertical tensile member is connected to the first cannon and second pastern collars and is adapted to provide limited movement of the limb joint under a dynamic or static tensile load. The support comprising soft and flexible materials. The upper ends and lower ends of the flexible side members are securely assembled to the first cannon and second pastern collars respectively.

Preferably, the tendon and ligament support comprises one of, but not limited to titanium, magnesium alloy, aluminium alloy, polymer and composite material.

Preferably, further comprising a tensile member of variable support that can be adjusted by a variable tension locking means located at the respective palmar or plantar aspect of the first cannon collar.

Preferably, the tension locking means comprises a pull strap with a tension latch to grip or lock the vertical tensile member at variable positions along its length.

Preferably, further comprising a fetlock joint band that surrounds an entire fetlock joint region of the boot thereby preventing any outward deformation of the flexible side members away from the medial and lateral fetlock joint under compression loading of equine exercise.

Preferably, further comprising a lightweight and stiff dorsal panel, for the function of even pressure distribution, wherein the dorsal panel is located adjacent the dorsal cannon and dorsal pastern bones in use, and wherein the dorsal panel is assembled as part of the first cannon and second pastern collars.

Preferably, the dorsal panel comprises a lightweight polymer or composite material.

According to another aspect of the invention a lightweight dynamic tendon and ligament support for the purpose of preventing injury recurrence during exercise post injury recovery of an equine limb joint is provided. The support comprising a lightweight soft wrap around boot applied to embrace a horse's limb, and a tensile member that wraps around the limb in a figure of eight path. The crossover point of the figure of eight coincides with a posterior sesamoid region in use. An uppermost point coincides with an anterior dorsal region above the joint in use. The lowest point coincides with an anterior dorsal region below the joint in use. The tensile member comprises a high tensile material forming an uninterrupted load path that becomes tensile loaded as the fetlock joint extends during exercise.

Preferably, the tensile member comprises one of but not limited to a dynema fibre and / or weave, a thin tensile steel cable and / or a kevlar fibre and / or weave.

Preferably, further comprising a first stiff dorsal cannon panel above the joint and a second stiff dorsal pastern panel below the joint and manufactured from soft and flexible materials of low mass, and a stiff sesamoid panel positioned adjacent a sesamoid region and adjacent a crossover point of the tensile member, wherein the stiff sesamoid panel comprises a soft and flexible material of low mass.

Preferably, the stiff sesamoid panel comprises one of a metal, polymer and composite material.

Preferably, the first and second stiff dorsal panels come together at limit point under a predetermined degree of fetlock joint extension and thereby limiting further extension of the fetlock joint beyond a predetermined degree.

Preferably, further comprising symmetrical bends whereby the figure of eight path does not crossover a centre line of a respective palmar or plantar aspect of the limb, wherein the tensile member is routed symmetrically around a pair of points back to the same side of limb, and wherein the hooks or points are ideally located adjacent a sesamoid region.

Preferably, further comprising symmetrical bends whereby the figure of eight path does crossover the centre line of a respective palmar or plantar aspect of the limb, wherein the tensile member is routed symmetrically around a single point back to the same side of the limb, and wherein the point is ideally located adjacent the sesamoid region.

Preferably, further comprising an opening and closure means that locks and secures the points thereby preventing the tensile member accidentally opening while in use and further allowing the support device to open for application to and removal from the limb.

Preferably, the tensile member broadens out, medially and laterally, from the sesamoid region as it covers the first and second stiff dorsal panels thereby allowing improved redistribution of pressure over the dorsal aspect of the limb under tensile load.

Preferably, medial and lateral sides of the first and second stiff dorsal panels extend rearward toward the medial and lateral sides of the fetlock joint, thereby providing increased surface contact area at limit point.

Preferably, the tensile member broadens out, medially and laterally, from the sesamoid region as it covers the first and second stiff dorsal panels thereby allowing improved redistribution of pressure over the dorsal aspect of the limb under tensile load and comprising a stiff sesamoid panel positioned adjacent a sesamoid region and adjacent a crossover point of the tensile member, wherein the stiff sesamoid panel comprises a soft and flexible material of low mass.

Preferably, further comprising a lightweight dorsal compression spring, adjacent the limb joint, and wherein the spring compresses under joint extension and opens under joint flexion, thereby maintaining separation between the respective first cannon collar or first stiff dorsal cannon panel and respective second cannon collar or a second stiff dorsal pastern panel.

Preferably, further comprising one or more thermal sensors located adjacent the respective palmar or plantar aspect of the equine limb thereby allowing quantitative thermal temperature measurement of the limb including the flexor tendons and / or suspensory ligaments.

Preferably, the thermal sensors are arranged to embrace the entire limb, both respective palmar or plantar and dorsal, medial and lateral of the limb.

Preferably, the thermal sensors are positioned close to a skin surface for maximum efficiency in temperature detection.

Preferably, further comprising one or more thermal sensors adjacent the respective palmar or plantar aspect of the limb, spanning vertically along the entire length of the flexor tendon, thereby providing a generalized temperature measurement of the tendon.

Preferably, further comprising a plurality of separate thermal sensors, thereby providing an isolated localized variation in temperature measurements at different locations on the limb.

Preferably, the thermal sensors comprise one of NTC thermisters, PTC thermisters, thermocouple thermal sensor Resistance Temperature Detector (RTD) providing a voltage and/ or resistance measurement that varies according to surrounding temperature that in turn is converted by an integrated electronic control unit (ECU) to a numerically quantitative value of limb, tendon or ligament temperature.

Preferably, further comprising a thermal sensing system device applied to the limb that sends an electromagnetic signal to a veterinarian and an electronic control unit (ECU) programmed to detect an abnormal isolated or localized temperature variation and if detected to send a warning to the veterinarian.

Preferably, further comprising one or more pressure sensors located adjacent a sesamoidean palmar regions of the limb, wherein the pressure sensors are positioned between surfaces of the sesamoid palmar region and interior surfaces of the tensile member, whereby as tendon strain level increases or decreases, tensile load on the tensile member increases or decreases proportionally to the compression load to the sesamoid region, and wherein quantitative compression load measurement at the sesamoid region is converted electronically to a quantitative measurement of tensile loading on the flexor tendon and /or fetlock joint extension.

Preferably, further comprising one or more pressure sensors located adjacent a sesamoidean palmar regions of the limb, wherein the pressure sensors are positioned between surfaces of the sesamoid palmar region and interior surfaces of the tensile member, whereby as tendon strain level increases or decreases, tensile load on the tensile member increases or decreases proportionally to the compression load to the sesamoid region, and wherein quantitative compression load measurement at the sesamoid region is converted electronically to a quantitative measurement of tensile loading on the flexor tendon and /or fetlock joint extension, and wherein the pressure sensors are assembled to the tendon and ligament support and carried by a horse as it exercises.

Preferably, further comprising a single pressure sensor located at any of three specific pressure zones: a dorsal cannon, a dorsal pastern or a sesamoid region of the limb.

Preferably, the pressure sensors are dynamic loading force sensors which comprise one of piezoelectric or peizoresistive devices and can provide both dynamic and static load force quantitative output measurement.

Preferably, the pressure sensors comprise strain gauges that provide quantitative strain measurement that varies depending upon the tensile loads applied as a horse exercises.

Preferably, further comprising a plurality of electronic position sensors, wherein a first electronic position sensor is located adjacent a cannon bone, wherein a second electronic position sensor is located adjacent the fetlock joint, wherein a third electronic position sensor is located adjacent the pastern bone, wherein relative angular movement between electronic position sensors when processed by an Electronic Control Unit (ECU), provide accurate data for joint angle and tendon strain measurement and further converted to a quantified value of tendon strain and wherein the electronic position sensors are in communication with one another via the ECU.

Preferably, the electronic control unit (ECU) is integrated into or close to the tendon and ligament support, and wherein the ECU takes electrical values from sensors in the form of electrical resistances and/or voltages, from thermal or pressure load sensors and electronically converts the electrical values into quantified digital data for veterinary analysis.

Preferably, the electronic control unit (ECU) comprises a communications modem for transmission of electromagnetic signals with the digital measurement information from thermal and / or pressure load sensors.

Preferably, further comprising consumable components that can be removed and replaced.

Preferably, the consumable components comprise one or more of hinge bearings and the vertical tensile member.

Preferably, the consumable components can be removed or replaced by one of threaded screws, rivets and nut and bolt fasteners.

According to another aspect of the invention, a tendon and ligament support for an equine limb joint is provided comprising a first cannon collar for embracing the limb above the joint, a second pastern collar for embracing the limb below the joint, a connecting hinge, and a connecting vertical tensile member adjacent a respective palmar or plantar aspect of the equine limb. The connecting vertical tensile member is securely fixed to an interior limb facing surface of the first cannon collar and / or the second pastern collar adjacent and vertical to the respective palmar or plantar aspect of the limb.

Preferably, the connecting vertical tensile member is securely fixed to the interior limb facing surface of the first cannon collar at a location generally equidistant from proximal and distal ends of the first cannon collar.

Preferably, the first cannon collar comprises an aperture through which the connecting vertical tensile member is inserted and passes from the interior limb facing surface to an exterior facing surface of the first cannon collar or second pastern collar, or cavity within the collar and wherein the connecting vertical tensile member is securely fixed enabling the vertical tensile member to be adjusted by an external means.

Preferably, further comprising an adjustment means and wherein the adjustment means comprises a fixed member positioned on the first cannon or second pastern collar; and a sliding member connected to the vertical tensile member; wherein the fixed member and sliding member can be securely fastened together in a plurality of positions depending on a joint support required.

Preferably, the connecting vertical tensile member further comprises a stabilizing member for limiting and preventing lateral and/or medial dislocation of the connecting vertical tensile member during use and when under a dynamic or static tensile load.

Preferably, the stabilizing member comprises medial and lateral ends that are anchored securely to corresponding medial and lateral sides of the first cannon collar or second pastern collar and wherein a centre of the stabilizing member may be securely fixed to the connecting vertical tensile member where the stabilizing member and connecting vertical tensile member intersect.

Preferably, the medial and lateral ends are anchored securely to the interior of the corresponding medial and lateral sides of the first cannon collar or second pastern collar.

Preferably, the stabilizing member comprises medial and lateral ends that are anchored securely to corresponding medial and lateral connecting hinges and wherein a centre of the stabilizing member may be securely fixed to the connecting vertical tensile member where the stabilizing member and connecting vertical tensile member intersect.

Preferably, the medial and lateral ends are anchored securely to the interior of the corresponding medial and lateral connecting hinges.

Preferably, the medial and lateral ends are anchored securely by corresponding articulated anchors that allow unrestricted articulation of the vertical tensile member and / or the stabilizing member about the connecting hinge during joint rotation.

Preferably, the connecting vertical tensile member is absent and the support further comprising: a medial and/or lateral connecting hinge characterized by friction and/or locking means to limit hinge rotation; a horizontal stabilizing member, adjacent the posterior of the limb joint or sesamoid bones, each end of which is securely fixed, medially and laterally to corresponding exterior or interior surfaces of the support device.

Preferably, further comprising: medial and lateral friction and/or locking hinges joined by a horizontal stabilizing member; a first dorsal pressure pad, adjacent a dorsal cannon bone above the limb joint and attached to the first cannon collar; a second dorsal pressure pad adjacent a dorsal pastern bone below the limb joint and attached to the second pastern collar; a third pressure pad adjacent an apex of the sesamoid region; wherein the first dorsal pressure pad, second dorsal pressure pad, and third pressure pad in combination form a three point opposing pressure resistance to both joint extension and upward dislocation during tensile loading.

Preferably, the first cannon collar comprises a first front panel rotatably connected to the first cannon collar and/or wherein the second pastern collar comprises a second front panel rotatably connected to the second pastern collar.

Preferably, the first and second front panels are adjacent the dorsal aspect of the limb, and wherein the first and/or second front panels are rotatably and detachably connected to the first cannon collar and second pastern collar by articulated single point pivots that are located adjacent the medial and lateral limb, wherein the articulated single pivot points further comprise a fastening means that can be fastened to or unfastened from the first and/or second collars.

Preferably, further comprising a palmar or plantar pressure panel located adjacent to the respective palmar or plantar sesamoid region to exert a pressure directly onto the palmar or plantar sesamoid region that is both equal and opposite to the sum of pressures exerted onto the dorsal limb by the first and second front panels under load.

Preferably, further comprising a dynamic pressure redistribution and energy dissipation means where the function of shock absorbency and energy dissipation is a function of layers of shock absorbent compression material of substantial thickness; a shock absorbent compression pad located between the first front panels of the support and surfaces of a horses leg adjacent a dorsal cannon bone; and/or a shock absorbent compression pad located between the second front panels of the support and the surfaces of the horses leg adjacent the dorsal pastern bone; and/or
a shock absorbent compression pad located between the connecting vertical tensile member and the surfaces of the horses leg adjacent the sesamoid bones; wherein the compression pads dissipate energy by compression and decompression under the dynamic loading and unloading exerted by an exercising horse.

Preferably, further comprising: a separate inner boot of soft material that is applied directly to the limb, over which the tendon and ligament support is then applied.

Preferably, the connecting vertical tensile member comprises a single strand fibre of high tensile strength that is wound or woven in a loop multiple times forming a continuous loop tensile member that is uninterrupted by a seam and wherein the continuous loop tensile member is connected at the top end to a first cannon anchor adjacent the posterior aspect of the first cannon collar and at the bottom end to a second pastern anchor adjacent the posterior aspect of the second pastern collar.

Preferably, the continuous loop tensile member is woven from a narrow point adjacent a first cannon anchor downward to a broadened lower second pastern anchor that is curved in shape to conform to the posterior aspect of the second pastern collar.

Preferably, the second pastern anchor is folded around an underside of a posterior wall of the second pastern collar and wherein the second pastern anchor is fixed securely to the second pastern collar, and wherein medial and lateral ends of the second pastern anchor can be arranged when required to accommodate attachment of load bearing fasteners.

Preferably, the continuous loop tensile member comprises high tensile fibres that are woven in a complex continuous and uninterrupted path to connect both the medial and lateral sides or connecting hinges of the tendon and ligament support and the first cannon anchor, above the limb joint to the second pastern anchor below the limb joint.

Preferably, the first cannon collar and / or the second pastern collar comprise dual or double wall constructions.

Preferably, further comprising an integrated forked hinge formed by the spaces between the walls and between outer and inner walls of the first cannon or second pastern collars.

Preferably, the first cannon collar and second pastern collar are split vertically and separated into left and right symmetrical components, and wherein vertical spacers of varying thickness are inserted between the left and right symmetrical components to allow size adaptation of the first cannon and second pastern collars to variation in limb size.

Preferably, the connecting vertical tensile member is adjacent a dorsal aspect of the equine limb and adapted to controllably limit fetlock joint hyper flexion.

Preferably, further comprising one or more thermal sensors located adjacent the respective palmar or plantar aspect of the equine limb thereby allowing quantitative thermal temperature measurement of the limb including the flexor tendons and / or suspensory ligaments.

Preferably, further comprising one or more pressure sensors located adjacent a sesamoid palmar regions of the limb, wherein the pressure sensors are positioned between surfaces of the sesamoid palmar region and interior surfaces of the tensile member, whereby as tendon strain level increases or decreases, tensile load on the tensile member increases or decreases proportionally to the compression load to the sesamoid palmar region, and wherein quantitative compression load measurement at the sesamoid palmar region is converted electronically to a quantitative measurement of tensile loading on a flexor tendon and /or fetlock joint extension.

Preferably, further comprising a plurality of electronic position sensors, wherein a first electronic position sensor is located adjacent a cannon bone, wherein a second electronic position sensor is located adjacent the fetlock joint, wherein a third electronic position sensor is located adjacent the pastern bone, wherein relative angular movement between electronic position sensors when processed by an Electronic Control Unit (ECU), provide accurate data for joint angle and tendon strain measurement and further converted to a quantified value of tendon strain and wherein the electronic position sensors are in communication with one another via the ECU.

Note the terms "tensile connector", "tensile member", "connection means" and "artificial tendon" are used interchangeably within this document and all refer to the same component within the structure of the invention.

Note the terms "pivot", "compression members", "upper and lower compression collars", "hinge assembly" "compression collars" "tendon and ligament support device" are used interchangeably within this document and all refer to the same assembly within the structure of the invention.

As used herein the term "medial" is intended to refer to the horizontal direction towards the centre of the horse.

As used herein the term "lateral" is intended to refer to the horizontal direction away from the centre of the horse.

As used herein the term "dorsal" is intended to refer to the front surface of the horse's limb up to the knee or hock.

As used herein the terms "palmar" and "plantar" are intended to refer to the back surface of the horse's front limb up to the knee and back limb up to the hock respectively.

### Brief description of the invention

The present invention will now be described with reference to the accompanying drawings, in which:
Figs. 1A, 1B, and 1C are prior art side views of the equine limb illustrating the effects of forces exerted upon the fetlock joint and flexor tendons under exercise loads;
Figs. 2A, 2B, and 1C are further prior art side views illustrating in a simplified manner the effects of forces exerted upon the fetlock joint and flexor tendons of a horse during exercise;
Figs. 3A and 2B are two side views showing a further problem of the prior art devices while the horse is exercising.
Figs. 4A and 4B are two side views showing a further construction of the invention in situ on the equine limb while standing and under exercise load;

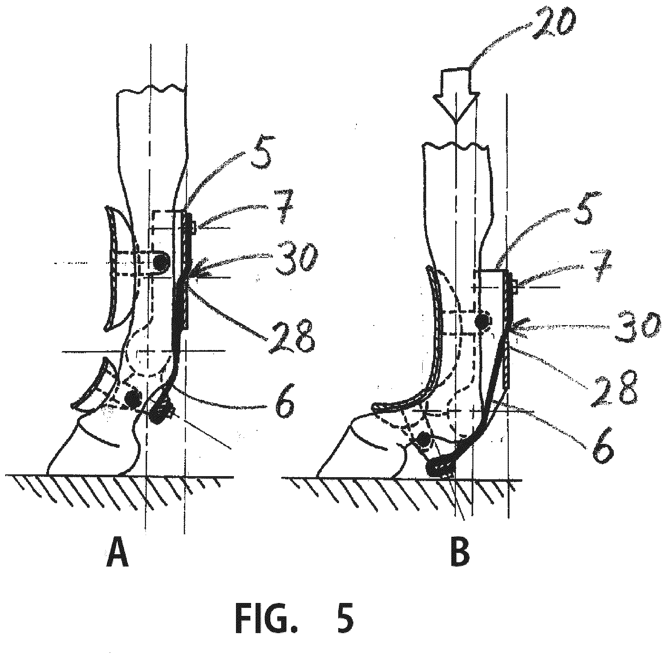

Figs. 5A and 5B are two side views showing yet a further construction of the invention in situ on the equine limb while standing and under exercise load;

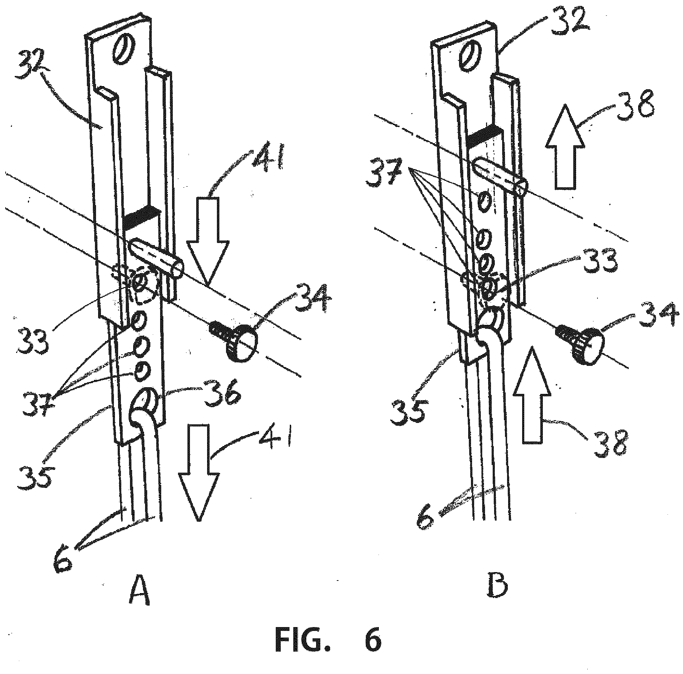

Figs. 6A and 6B are two detail perspective views showing the support adjustment mechanism of the present invention;

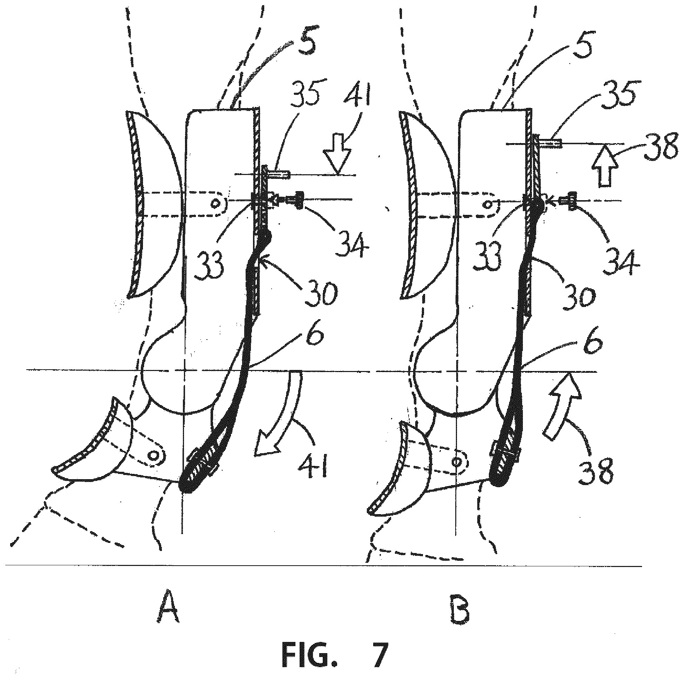

Figs. 7A and 7B are two side views showing the support adjustment mechanism of the present invention in situ on the equine limb;

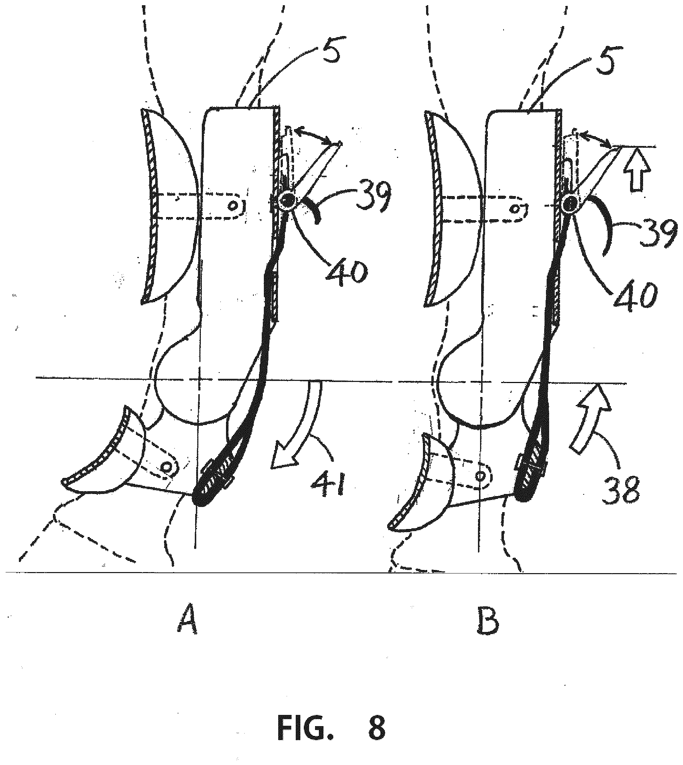

Figs. 8A and 8B are two side views showing a further construction of the support adjustment mechanism of the present invention in situ on the equine limb;
Figs. 9A, 9B, and 9C are a rear and side view of the prior art device illustrating the problem of lateral dislocation of the tensile member under exercise load;
Figs. 10A and 10B are a rear and side view showing a construction of the invention in situ on the equine limb

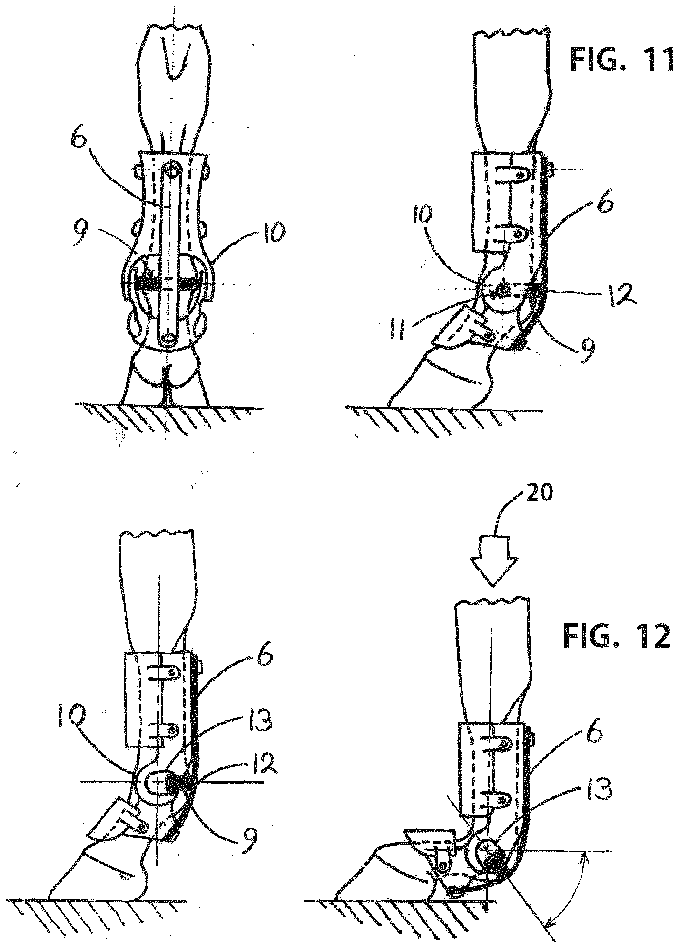

Figs. 11, are a rear and side view showing a further construction of the invention in situ on the equine limb;
Figs. 12, are two side views showing a further construction of the invention in situ on the equine limb while standing and under exercise load;

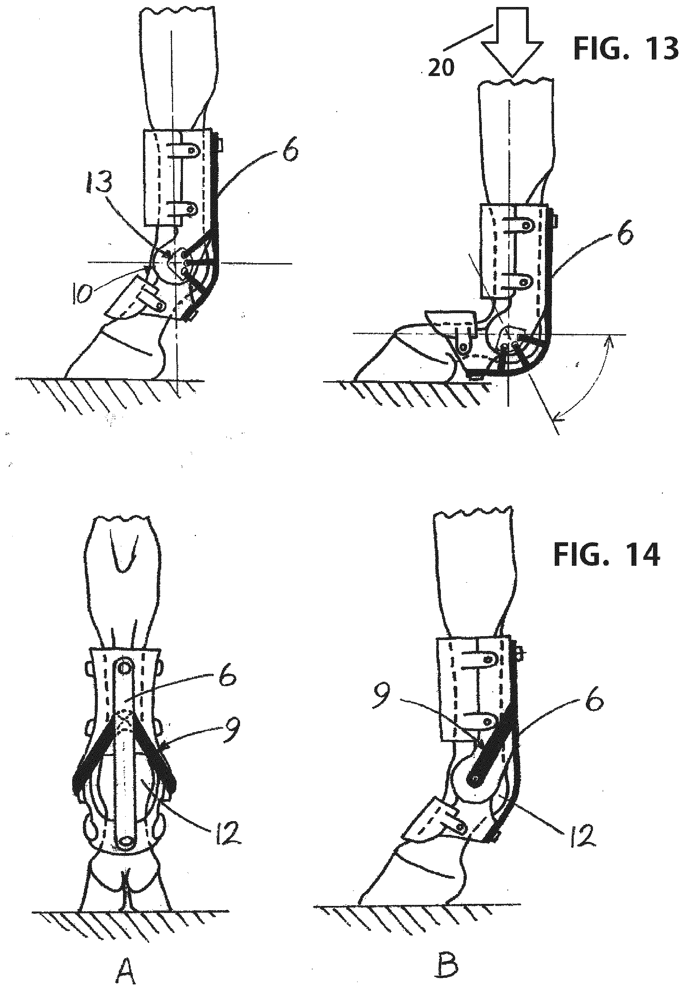

Figs. 13, are two side views showing another construction of the invention in situ on the equine limb while standing and under exercise load;
Figs. 14A and 14B are a rear and side view showing a further construction of the invention in situ on the equine limb;

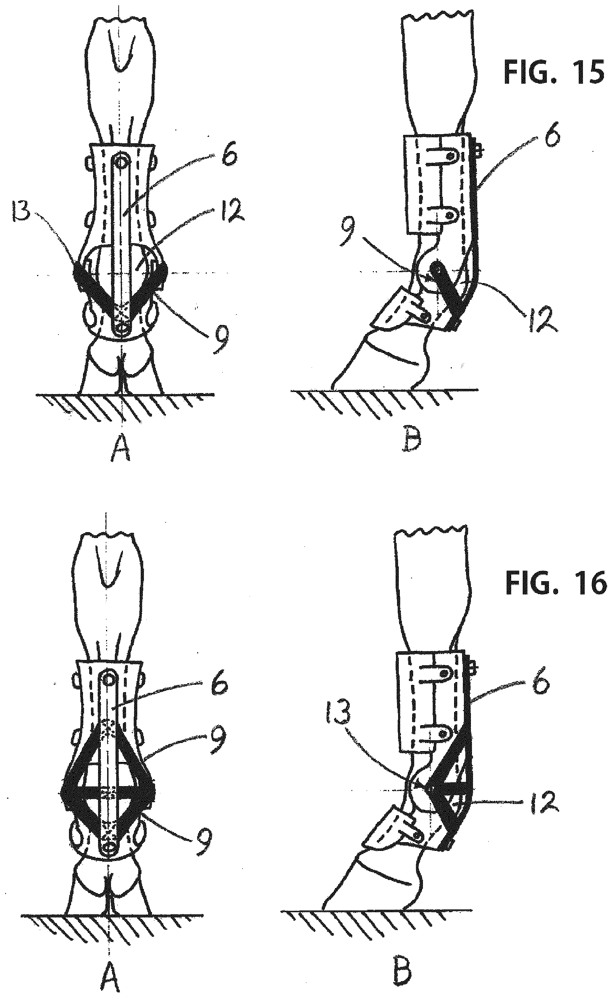

Figs. 15A and 15B are a rear and side view showing a further construction of the invention in situ on the equine limb;
Figs. 16A and 16B are a rear and side view showing a further construction of the invention in situ on the equine limb;

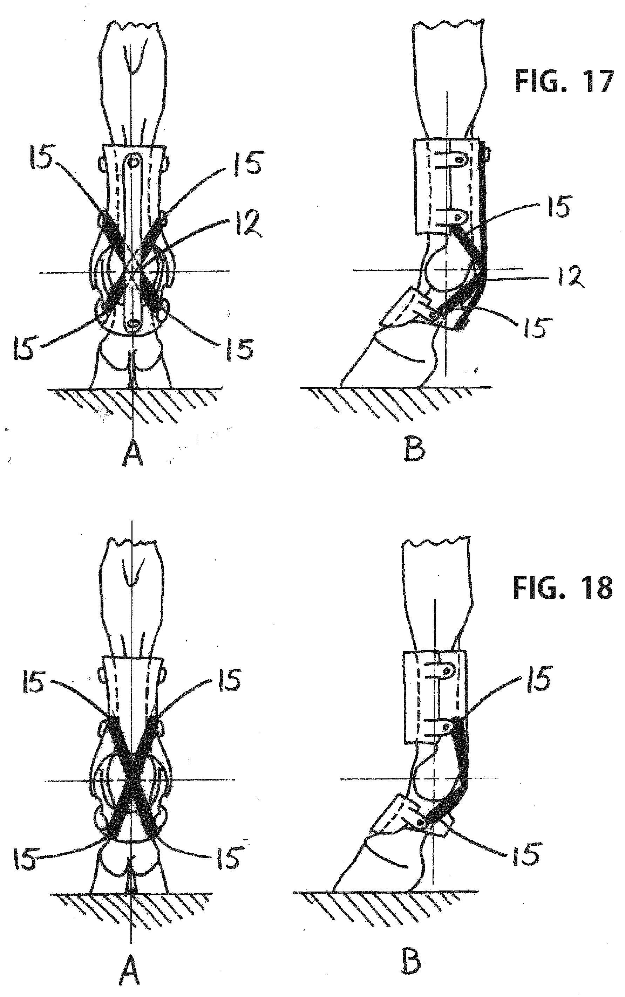

Figs. 17A and 17B are a rear and side view showing a further construction of the invention in situ on the equine limb;
Figs. 18A and 18B are a rear and a side view showing a further construction of the invention in situ on the equine limb;

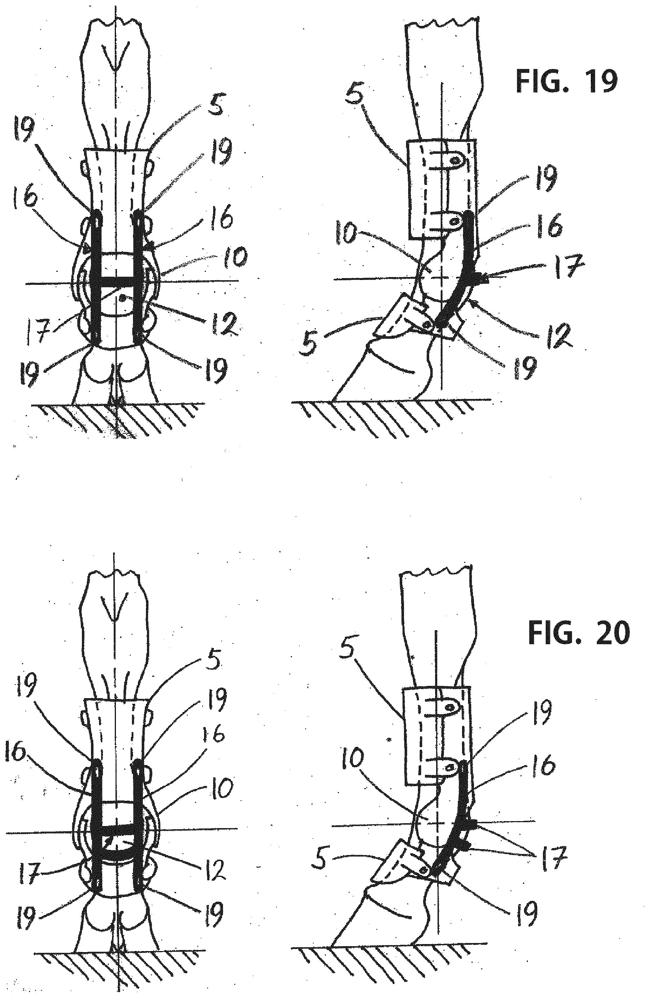

Fig. 19 is a rear and a side view showing a further construction of the invention in situ on the equine limb;
Fig. 20 is a rear and a side view showing a further construction of the invention in situ on the equine limb;

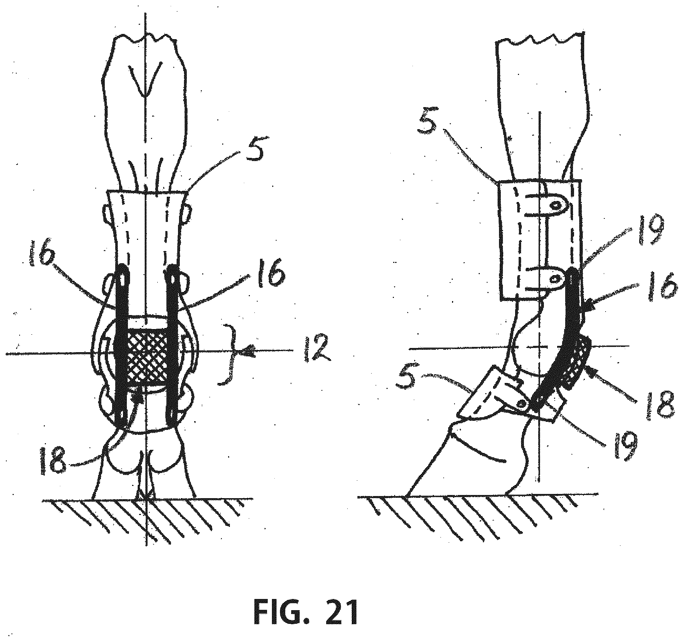

Fig. 21 is a rear and a side view showing yet a further construction of the invention in situ on the equine limb;
Figs. 22A and 22B are two side views showing a prior art device and particularly the problem of upward slippage that arises under exercise loading;
Figs. 23A, 23B and 23C are a rear view and two side views showing a further construction of the invention in relation to Figs. 22A and 22B;
Figs. 24A and 24B are side views of a mechanical analogue that illustrates the problem of joint dislocation and upward slippage of a prior art device while the horse places weight on the limb.
Figs. 25 is a side view of a prior art device with the horse standing and the limb unloaded
Fig. 26 is a side view of the prior art device illustrating the problem of the compression hinge and fetlock joint misalignment and upward slippage while the horse places weight on the limb.

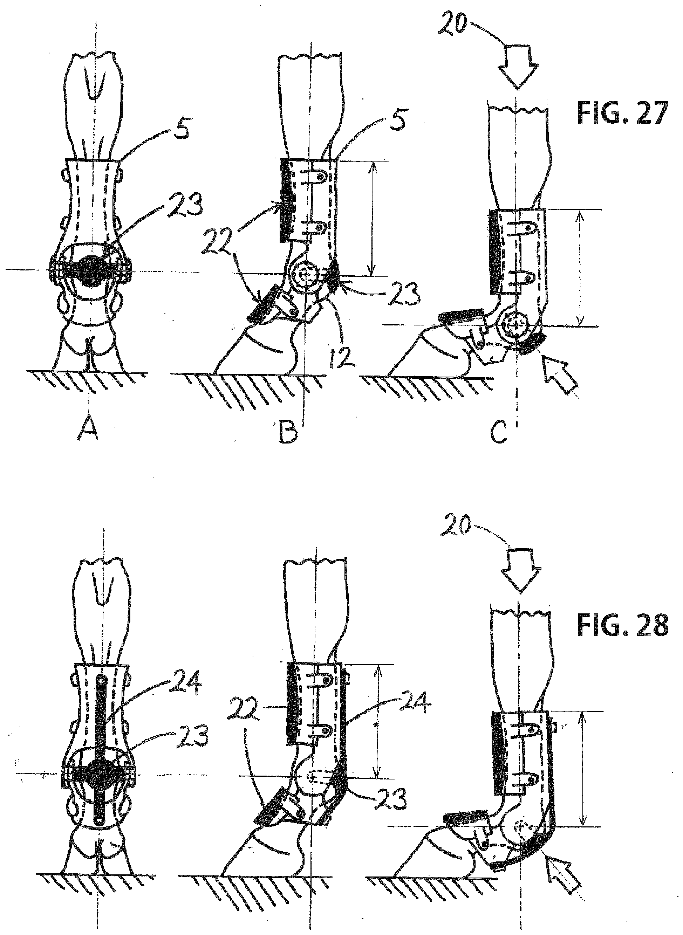

Figs. 27A, 27B and 27C are a rear view and two side views of another construction of the present invention comprising a resistance locking hinge combined with a horizontal/lateral tensile member;
Figs. 28 are a rear view and two side views of another construction of the present invention comprising a resistance locking hinge combined with a horizontal/lateral tensile member and a vertical tensile member;
Figs. 29A and 29B are two side views showing a further problem of the prior art device while the horse is standing and while the horse is exercising;
Figs. 30A and 30B are two side views showing a further construction of the present invention while the horse is standing and while the horse is exercising;

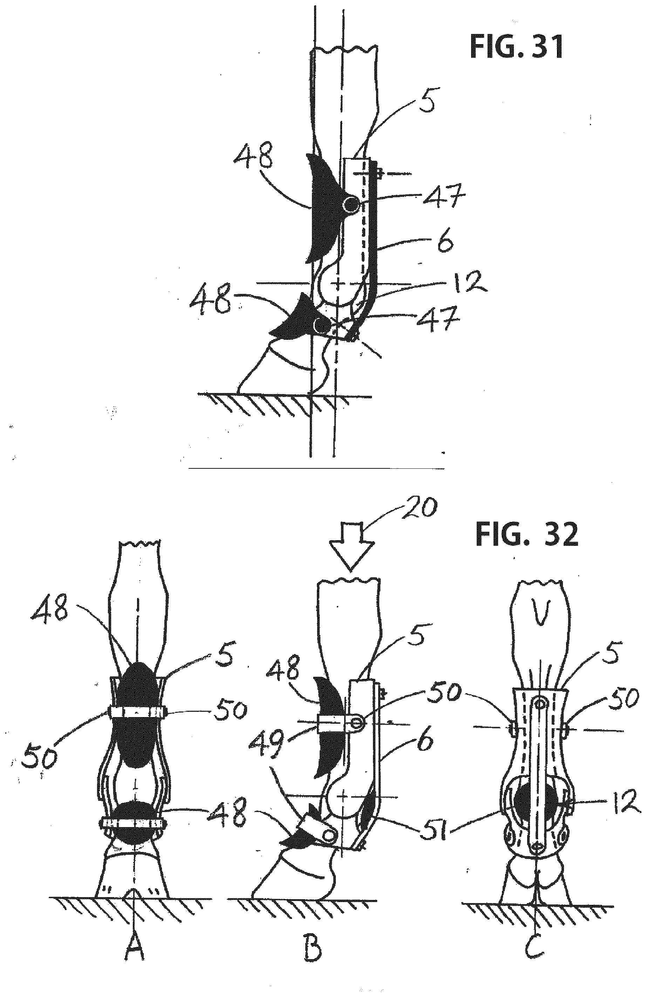

Figs. 31 is a side view showing a further construction of the present invention while the horse is standing;
Figs. 32A, 32B and 32C are a front view, a side view and a rear view showing a further construction of the present invention while the horse is standing;

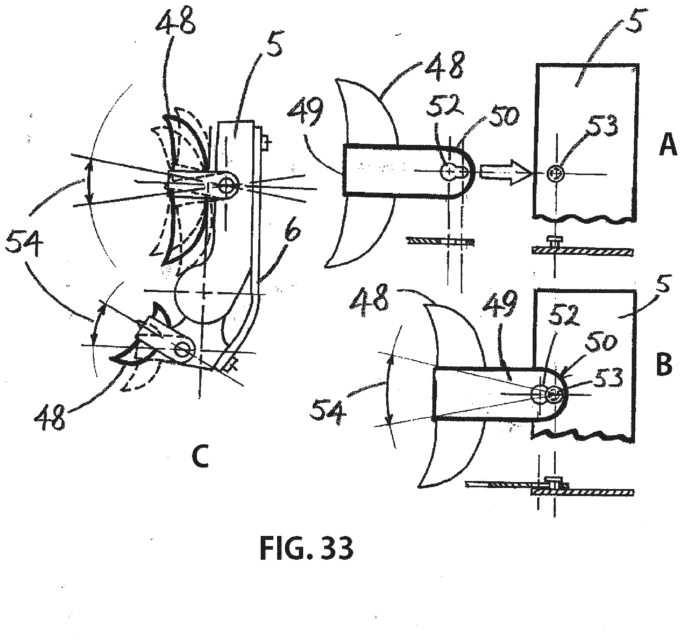

Figs. 33A, 33B and 3C are three detailed side views of the fastening method of the present invention;

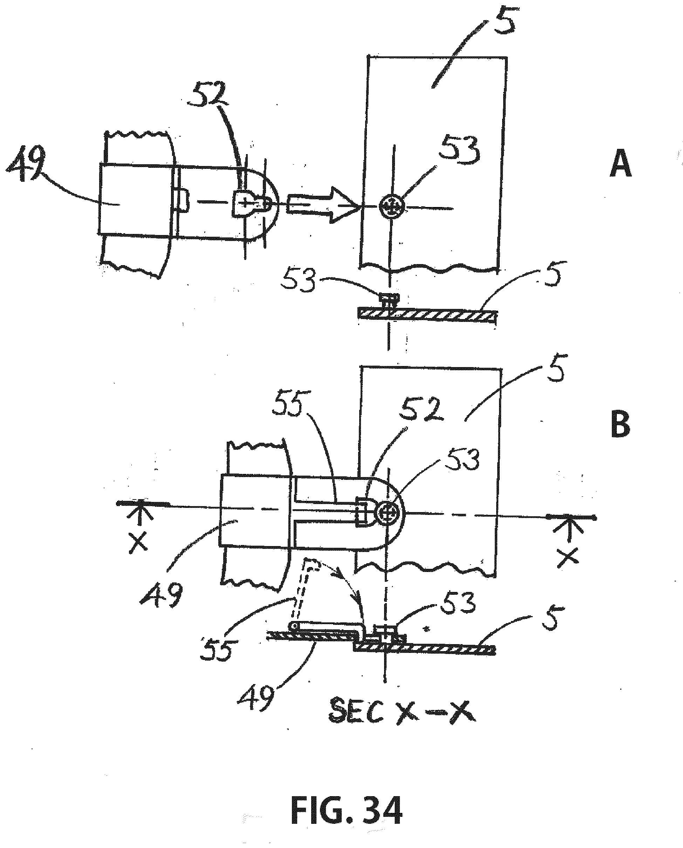

Figs. 34A and 34B are two further detailed side views of a further fastening method of the present invention;

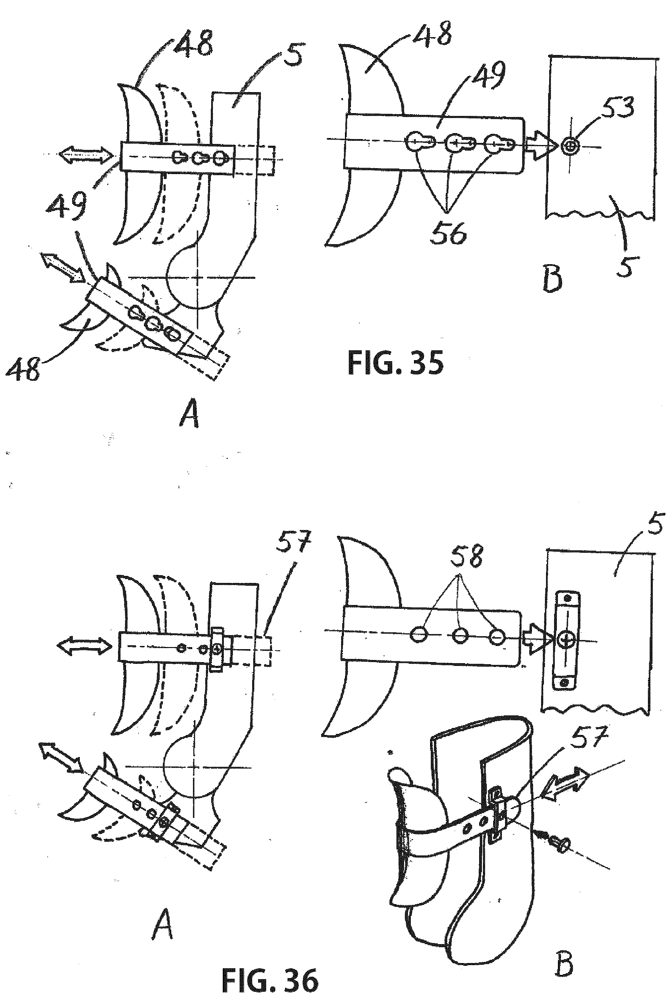

Figs. 35A and 35B are two further detailed side views of a further fastening method of the present invention;
Figs. 36A and 36B are two further detailed side views and a perspective view of a further fastening method of the present invention;

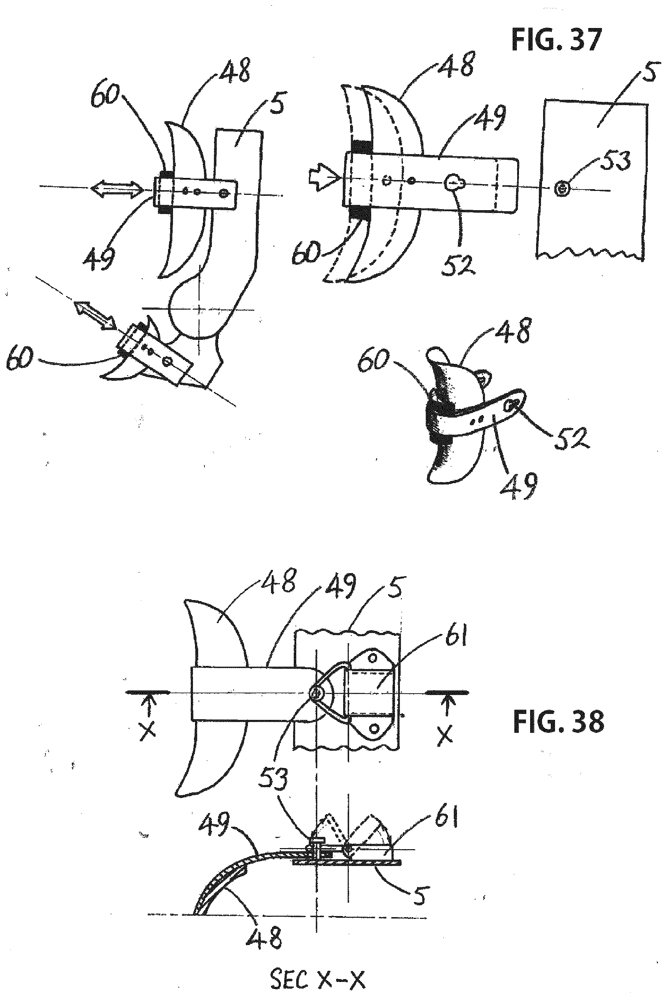

Figs. 37A and 37B are two further detailed side views and a perspective view of a further fastening method of the present invention;
Figs. 38A and 38B are two further detailed side views and a cross-sectional view of a further fastening method of the present invention;
Fig. 39 is a side view showing a further problem of the prior art device while the horse is exercising;
Figs. 40A and 40B are two side views showing a further construction of the present invention while the horse is standing and while the horse is exercising;

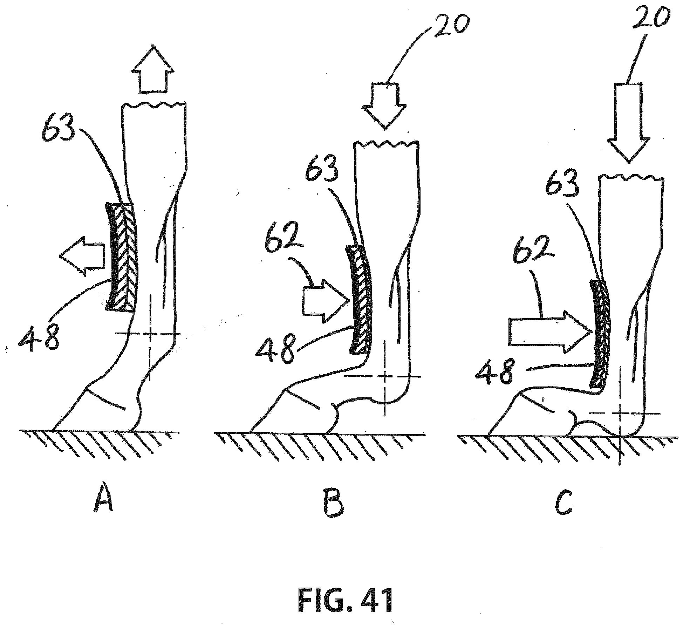

Figs. 41A, 41B and 41C are three side views showing the present invention at increasing levels of loading while the horse is exercising;

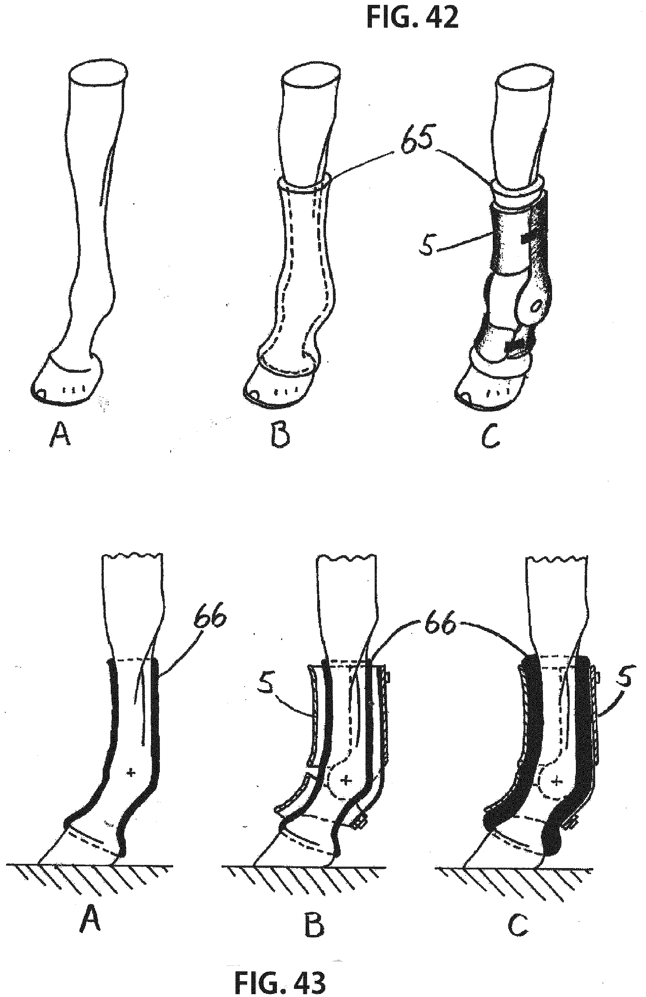

Figs. 42A, 42B and 42C are three perspective views showing the present invention at three different stages of fitting to the equine limb;
Figs. 43A, 43B and 43C are three side views showing yet a further construction of the present invention at three different stages of fitting to the equine limb;

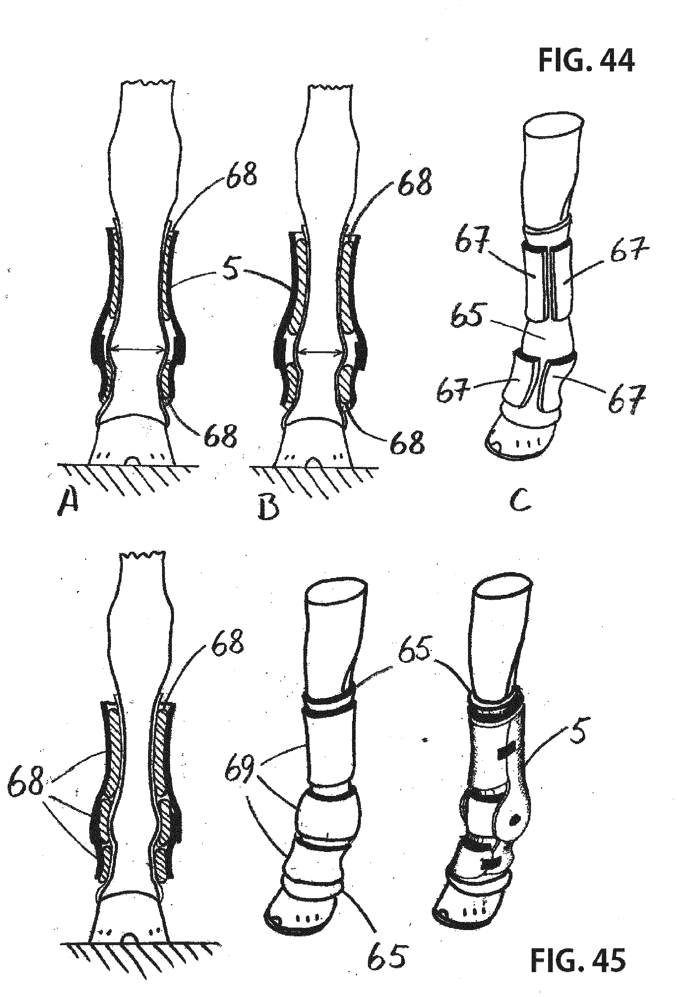

Figs. 44A, 44B and 44C are two cross-section front views and a perspective view showing yet a further construction of the present invention in situ on the equine limb;
Figs. 45A, 45B and 45C are a cross-section front view and two perspective views showing yet a further construction of the present invention in situ on the equine limb;

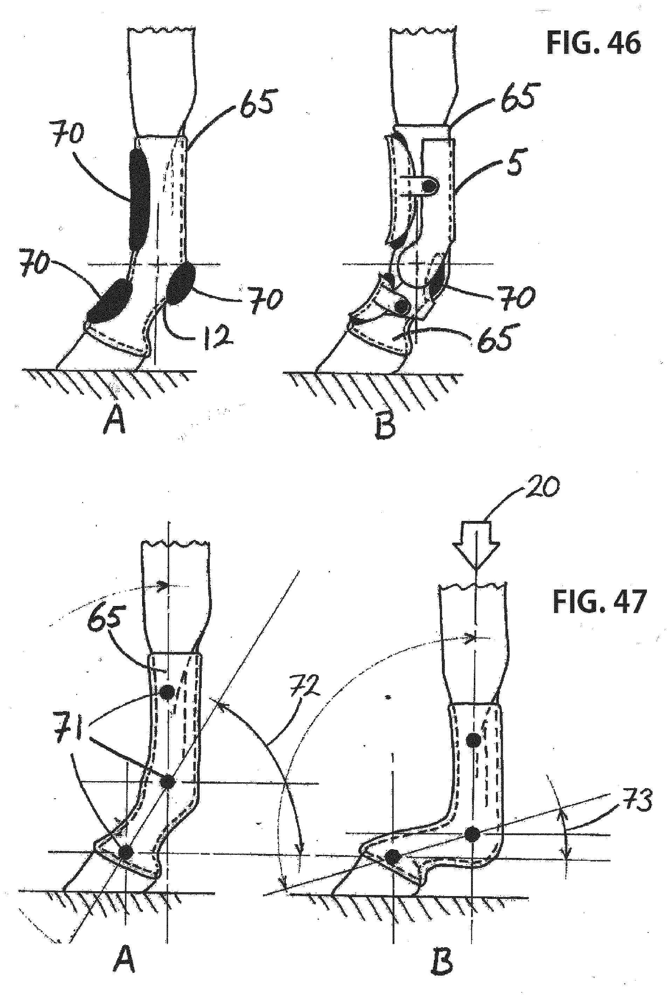

Figs. 46A and 46B are two side views showing yet a further construction of the present invention at two different stages of fitting to the equine limb;
Figs. 47A and 47B are two side views showing yet a further construction of the present invention while the horse is standing and while the horse is exercising;

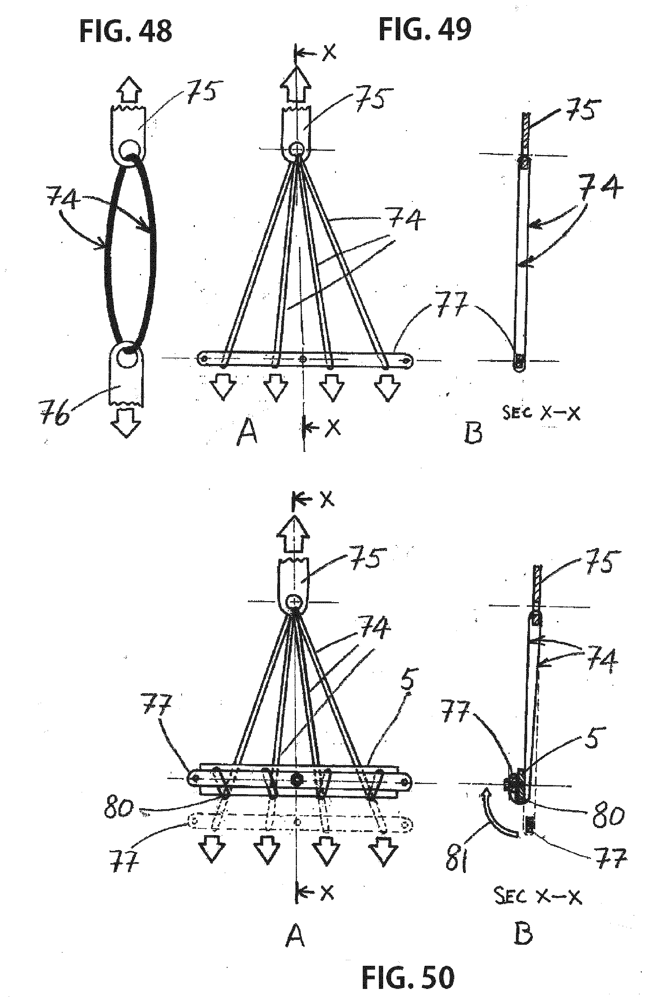

Figs. 48 is a perspective view showing the continuous loop tensile member of the present invention;
Figs. 49A and 49B are a front and side view showing a further construction the continuous loop tensile member of the present invention;
Figs. 50A and 50B are a front and side view showing yet a further construction the continuous loop tensile member of the present invention;

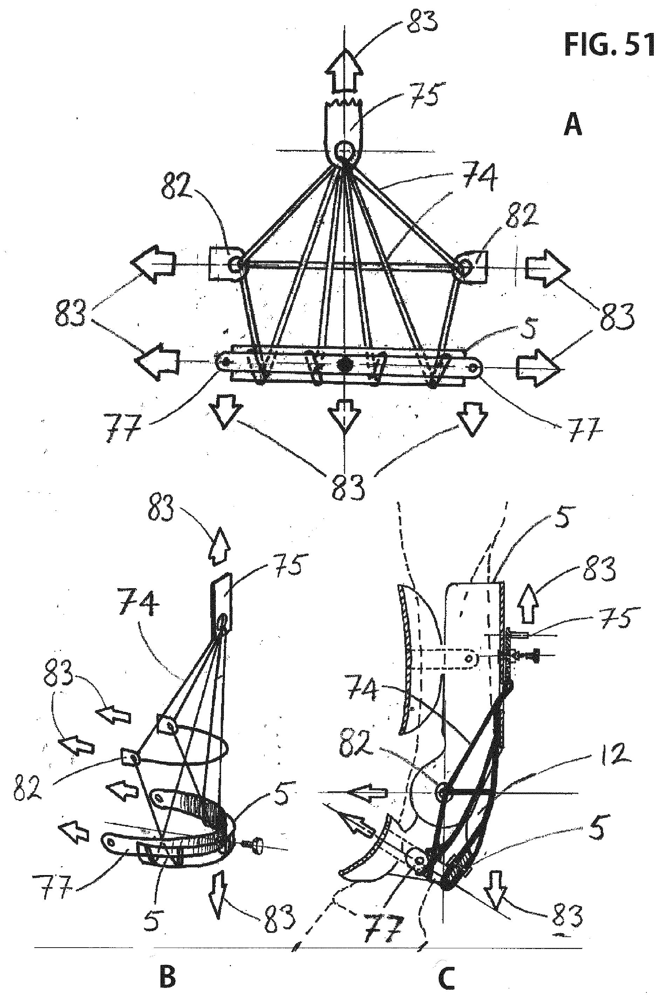

Figs. 51A, 51b and 51C are a front view, a perspective view and a side view showing yet a further construction the continuous loop tensile member of the present invention;
Figs. 52A and 52B are two front views showing a further problem of the prior art device while the horse is standing and while the horse is exercising;

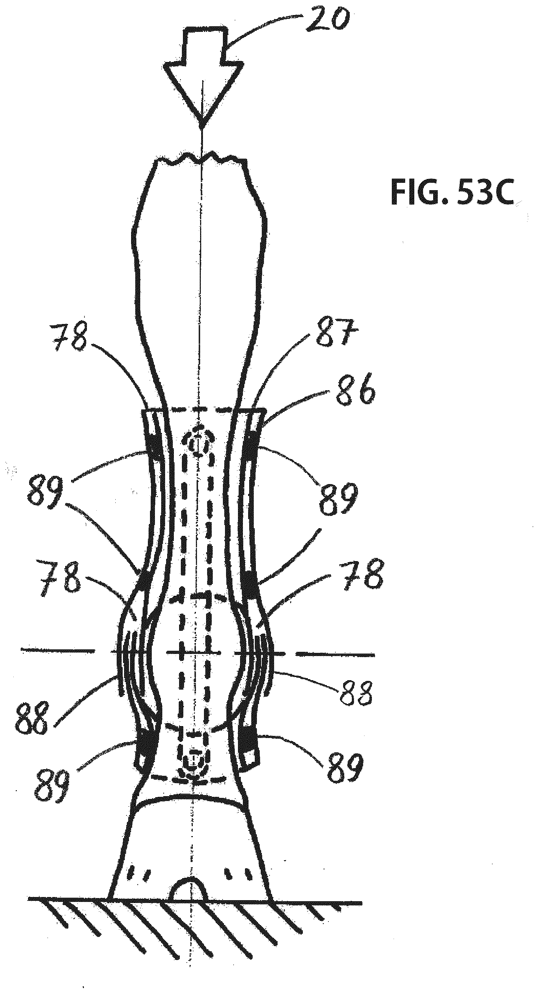

Figs. 53A, 53B and 53C are three cross-sectional front views showing a further construction of the present invention while the horse is standing and while the horse is exercising;

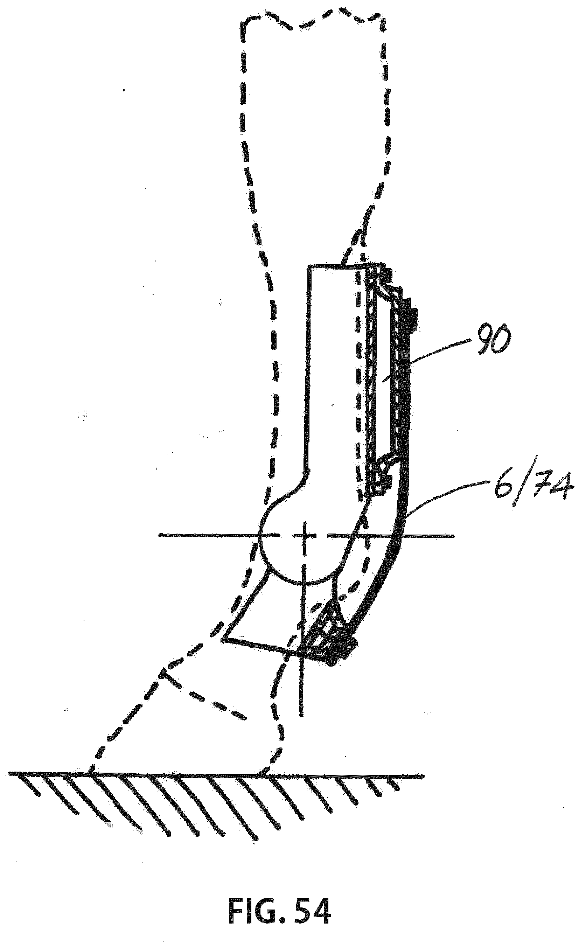

Fig. 54 is a cross-sectional side view showing a further construction of the present invention in situ on the equine limb;

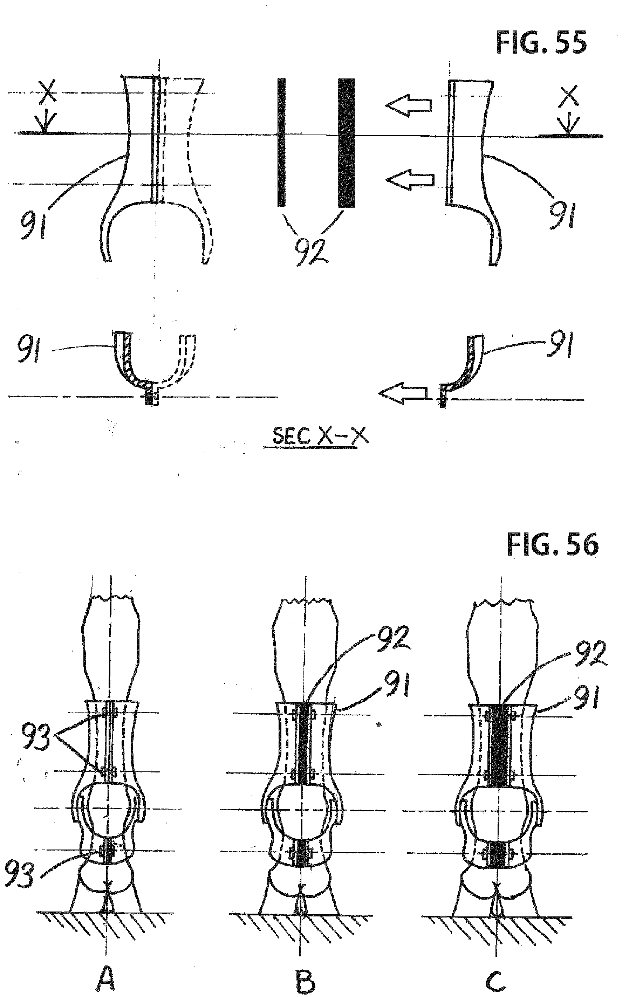

Fig. 55 is a rear view and a cross section of the modular components of a further construction of the present invention;
Figs. 56A, 56B and 56C are three rear views of the modular components of the present invention in situ on equine limbs of varying sizes;

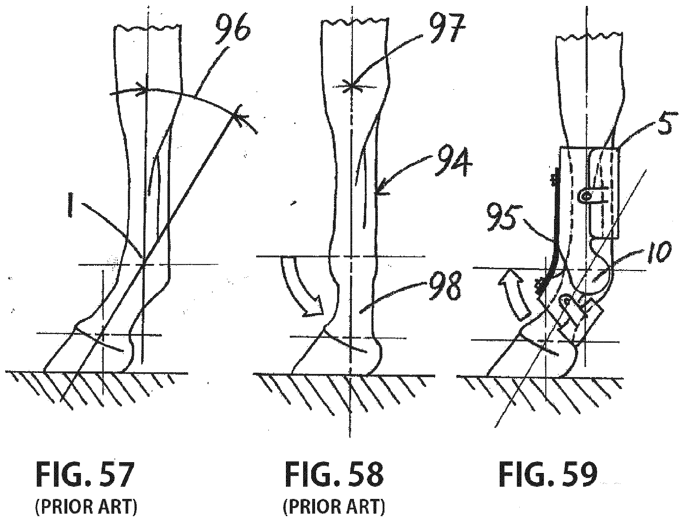

Fig. 57 is a side view of a normal lower equine limb unsupported;
Fig. 58 is a side view of a contracted lower equine limb abnormality;
Fig. 59 is a side view of a contracted lower equine limb abnormality with a further construction of the present invention in situ on the limb;

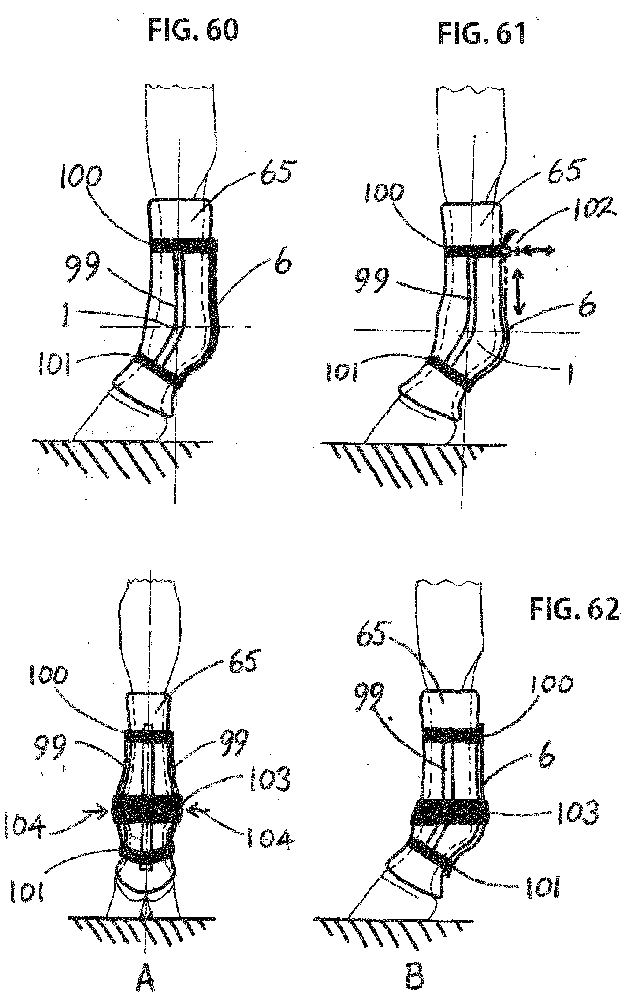

Fig. 60 is a side view showing a further construction of the present invention in situ on the equine limb;
Fig. 61 is a side view showing a further construction of the present invention in situ on the equine limb;
Figs. 62A and 62B are a rear and side view showing yet a further construction of the present invention in situ on the equine limb;

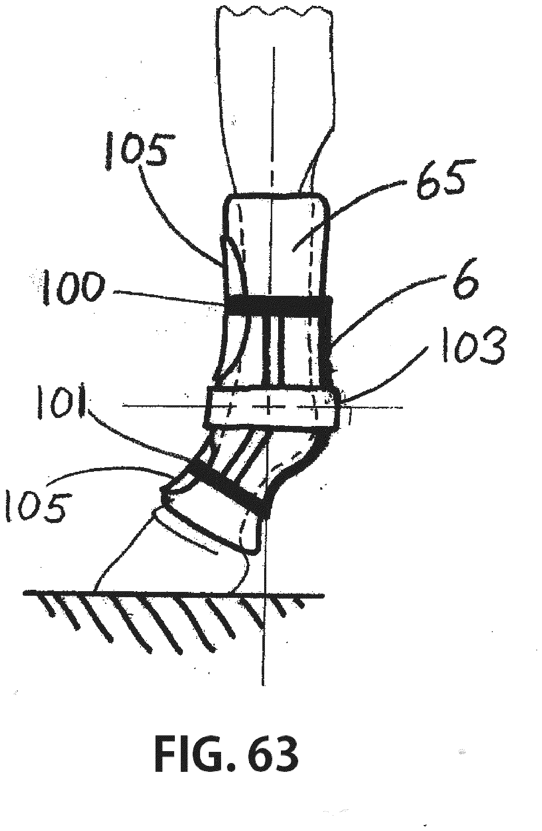

Fig. 63 is a side view showing yet a further construction of the present invention in situ on the equine limb;

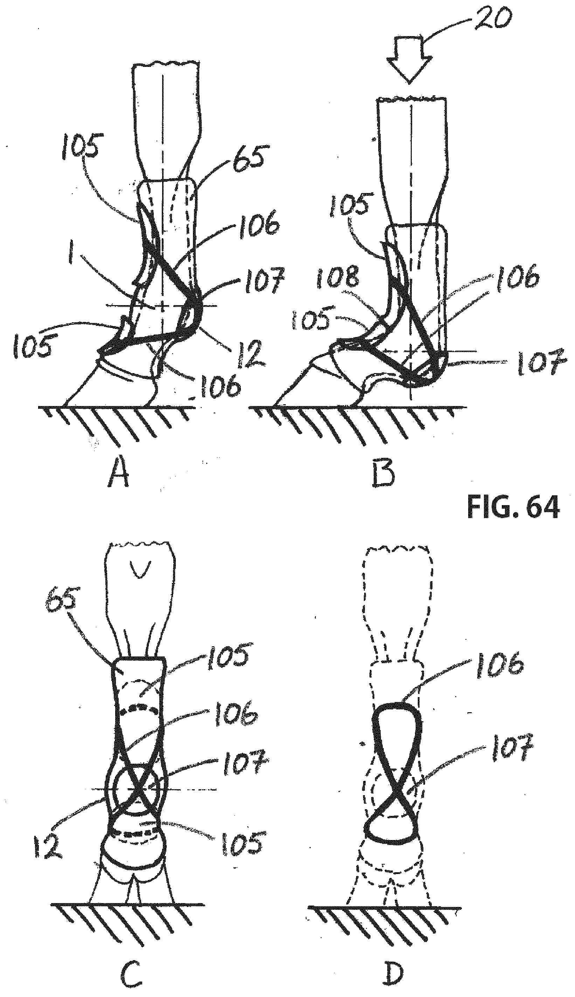

Figs. 64A, 64B, 64C and 64D are two side views and two rear views showing a further construction of the present invention while the horse is standing and while exercising;

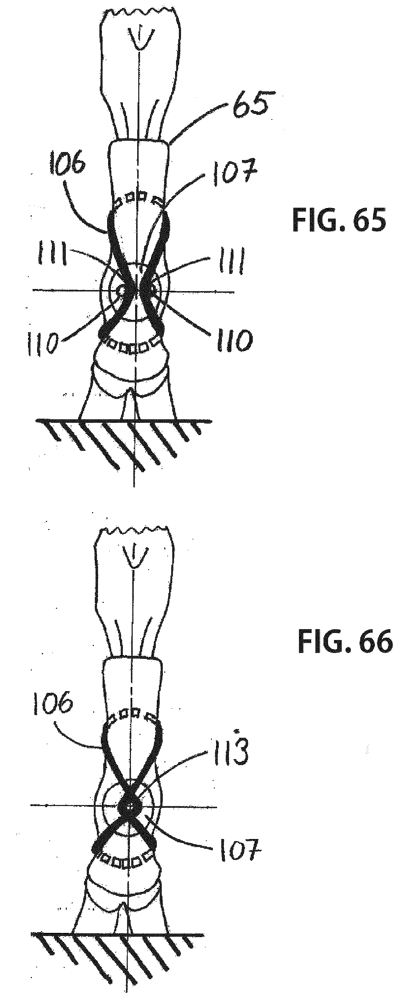

Fig. 65 is a rear view showing a further construction of the present invention in situ on the limb while the horse is standing;
Fig. 66 is a rear view showing yet a further construction of the present invention in situ on the limb while the horse is standing;

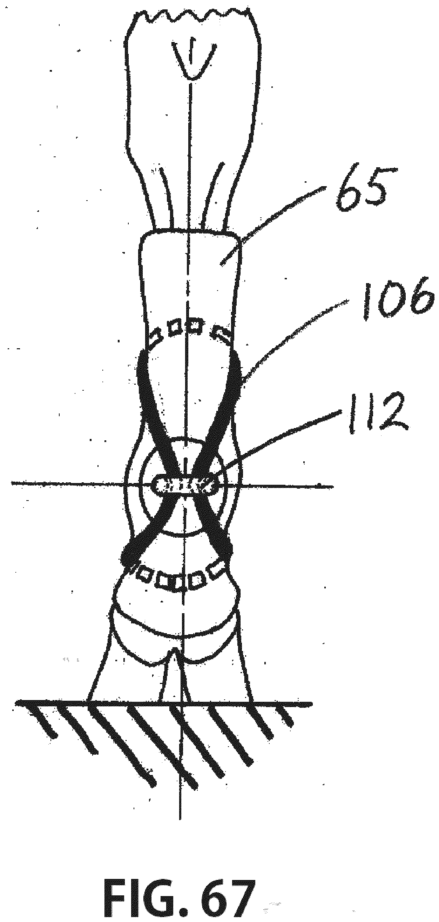

Fig. 67 is a rear view showing yet a further construction of the present invention in situ on the limb while the horse is standing;

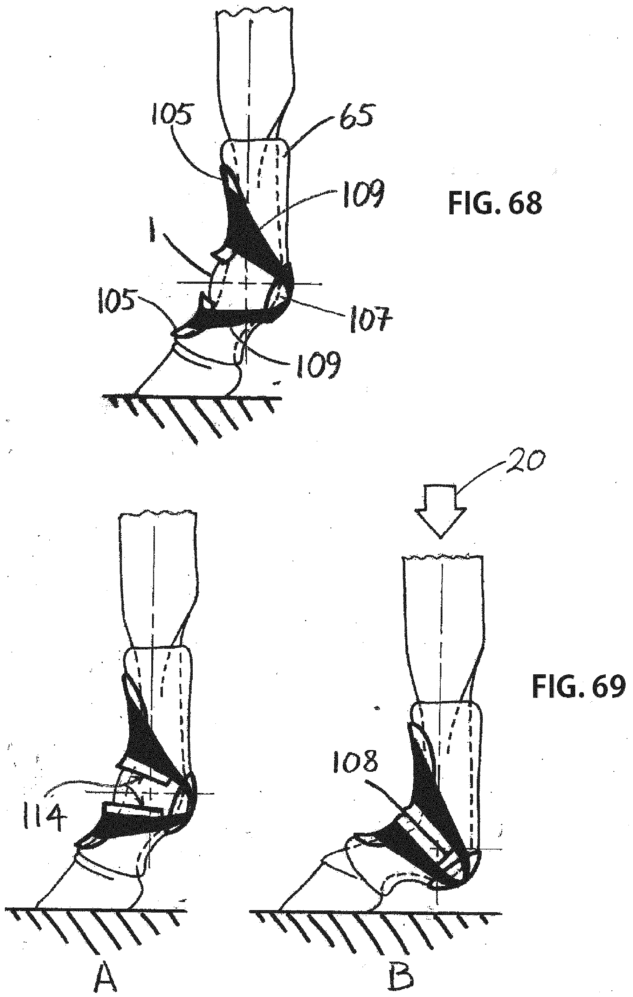

Fig. 68 is a side view showing yet a further construction of the present invention in situ on the limb while the horse is standing;
Figs. 69A and 69B are two side views showing a further construction of the present invention in situ on the limb while the horse is standing and while the horse is exercising;

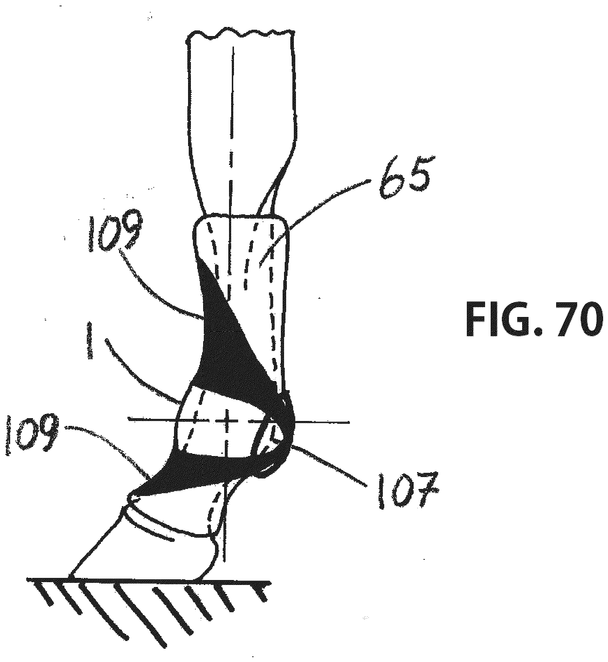

Fig. 70 is a side view showing yet a further construction of the present invention in situ on the limb while the horse is standing;

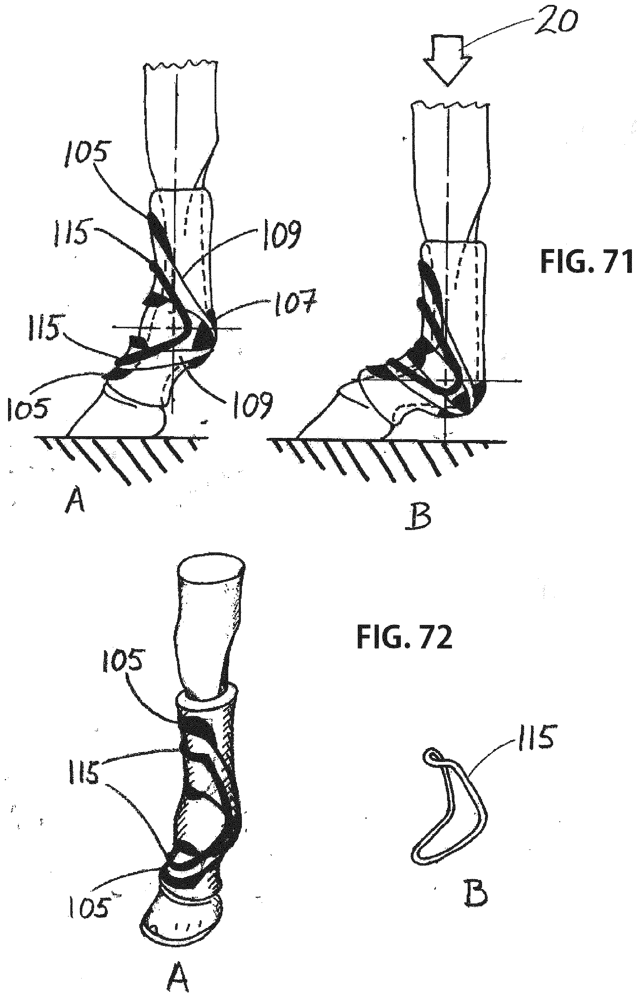

Figs. 71A and 71B are two side views showing a further construction of the present invention in situ on the limb while the horse is standing and while the horse is exercising;
Figs. 72A and 72B are two perspective views showing further detail of the present invention;

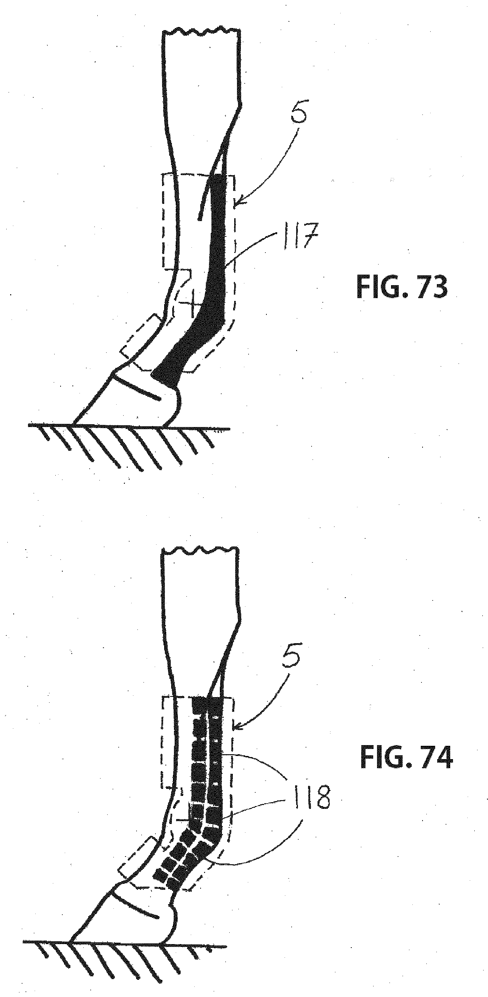

Fig. 73 is a side view showing a further construction of the present invention in situ on the limb while the horse is standing;
Fig. 74 is a side view showing yet a further construction of the present invention in situ on the limb while the horse is standing;

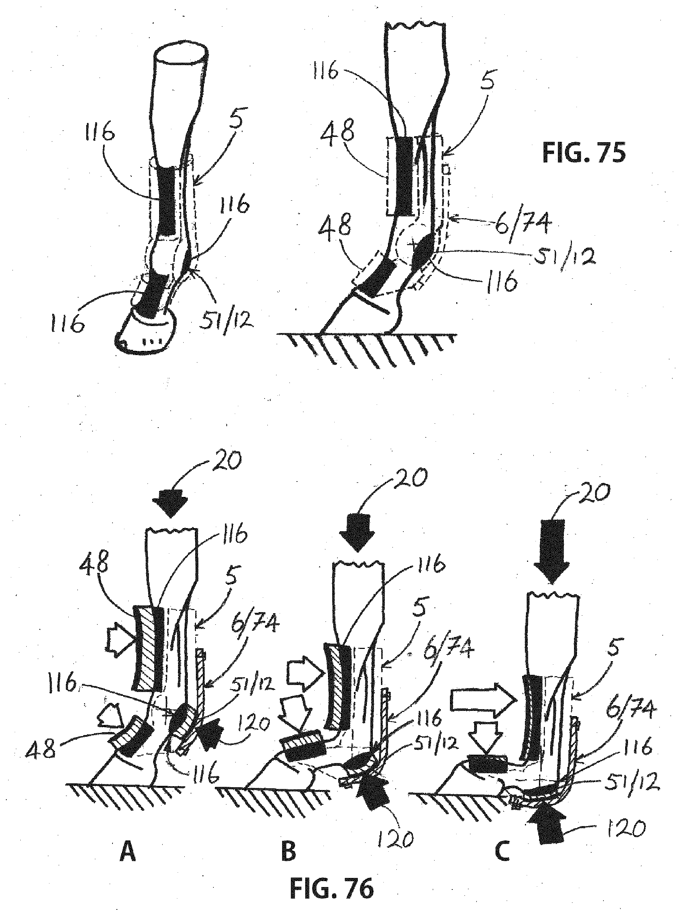

Figs. 75A and 75B are a perspective view and a side view showing yet a further construction of the present invention in situ on the equine limb;
Figs. 76A, 76B and 76C are three side views showing the present invention at increasing levels of loading while the horse is exercising;

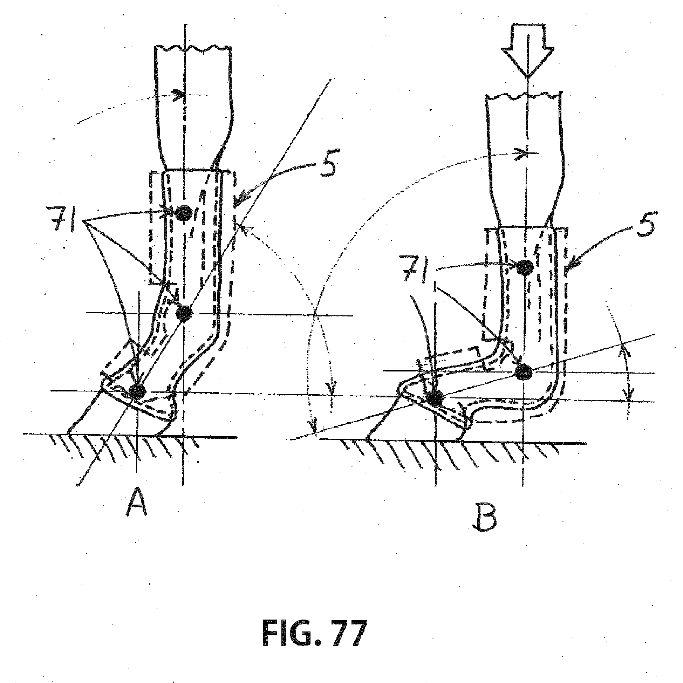

Figs. 77A and 77B are two side views showing yet a further construction of the present invention while the horse is standing and while the horse is exercising;

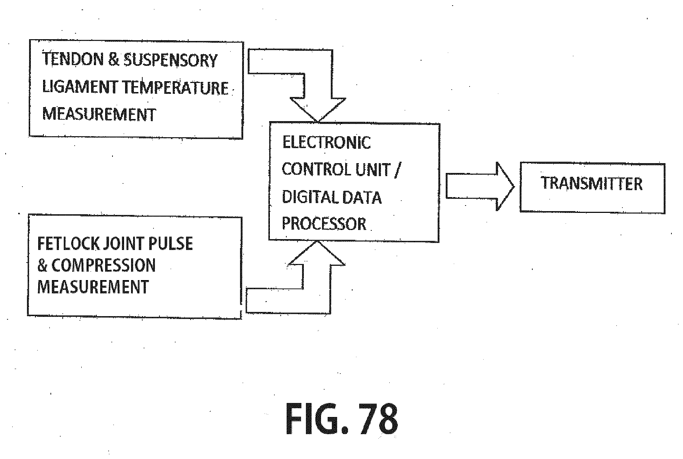

Fig. 78 is a schematic diagram showing the electronic functions of the present invention.

### Detailed description of the invention

The invention is not limited to the embodiment(s) described herein but can be amended or modified without departing from the scope of the present invention.

Referring to Fig 3 B. As described previously, even pressure redistribution of the transferred forces is essential to the efficacy of the said tendon support device and to prevent skin injury to said soft tissues at both the proximal and distal end of the palmar or plantar aspects of the lower limb. The present invention further describes a tendon and ligament support wherein the connecting vertical tensile member 6 may be securely fixed to the interior surface of the first cannon collar 5 and / or the second pastern collar adjacent and vertical to the respective palmar or plantar aspect of the limb, thereby ensuring even pressure distribution on the surface of the limb and prevention of skin pressure injury. It may comprise an internally located anchor point 25 of the tensile member 6 or Artificial Tendon to the upper and/or lower collars 5 of the tendon support device. This is in contrast to the externally located anchor points 7 as described in the prior art and the previously explained problems of skin pressure injury that the externally located tensile member anchor points can cause.

However, it must also be understood that for the internally anchored tensile member 6 to function effectively, the upper and lower internal anchor points 25 must be relocated generally midway 28 on the vertical axis to ensure geometric stability during the loading and unloading cycle of the gallop stride. The specific problem (see Fig 3 B) in this case being that if the upper internally located anchor point 25 is positioned too high, then it has been shown very clearly during clinical use of the prior art device that the top end of the upper rigid collar will apply a concentrated pressure point, as referenced by arrow 27, at the top of the palmar aspect under high load. This concentration of pressure then in turn causes damage to the skin and underlying soft tissues at that point 27. Conversely if the vertical anchor is positioned too low, then it has similarly been demonstrated by experimentation that the lower end of the upper rigid cannon collar will also apply a concentrated pressure at the bottom of the palmar aspect which is also damaging to the skin and underlying soft tissues at that point. A solution as provided by this embodiment of the invention is to relocate the tensile member anchor points 25 at the optimal vertical point 28 to the internal surfaces of the upper and lower compression collars 5.

Referring now to Figs 4A & 4B. In a further embodiment of the present invention there is an internal upper anchor point 28 of the tensile member 6 that is relocated to the mid section vertically on the palmar or plantar interior surface of the upper compression collar 5. The tendon and ligament support 5 wherein the connecting vertical tensile member 6 may be securely fixed to the interior surface of the first cannon collar at a location 28 generally equidistant from the proximal and distal ends of the first cannon collar 5. As previously explained, an excessively high interior anchor point 25 also causes a high skin pressure concentration 27 and conversely an excessively Low position anchor point results in a high skin pressure concentration 26. The result of relocating the upper anchor point 27 downward to the mid section position 28, is that the movement of the upper compression collar 5, under compression load 20, becomes both rearward and parallel to the horse's limb surface, as referenced by arrows 29. This in turn eliminates the said skin pressure concentration points 26 & 27 and consequently the said risk of pressure concentration injury to the skin of the palmar or plantar aspects of the limb.

The said internally located anchor point 28 may be located at an optimal vertical position, between the top and the bottom ends of the palmar aspect of the upper cannon collar 5. This optimum repositioning solves the aforesaid problems by ensuring a correct and balanced geometric fore and aft movement 29 of the said upper and lower compression collar 5 on the limb during all phases of the gallop stride. In other words, it ensures the upper and lower compression collars 5 remain at all times parallel to the said palmar/plantar aspect of the horse's own cannon bone to which they are applied.

Referring now to Fig. 5. In a further embodiment of the invention there is a tendon and ligament support comprising of a tensile member 6 that is securely anchored to both the upper and lower collars 5 of the tendon support device and which said tensile member 6 may insert into or penetrates through an opening 30 from the interior surface of the internal wall of the collars 5 to the outside surface of said wall or into a cavity within said collar 5. The tendon and ligament support wherein the first cannon collar 5 may comprise an aperture 30 through which the vertical tensile member 6 is inserted and / or passes into an interior limb facing surface into a cavity or to an exterior facing surface of the first cannon collar 5 and wherein the connecting vertical tensile member 6 may be securely fixed thereby enabling the vertical tensile member to be adjusted by an external means. The said opening 30 is located adjacent the palmar/plantar aspect of the cannon collar 5. There are numerous advantages of this arrangement, most specifically that the optimal geometric mid section position 28, as described and illustrated in Fig 4, is maintained, thereby ensuring that the parallel rearward movement of the upper compression collar 5, under compression load 20 is at all times maintained. Simultaneously as the upper anchor point 7 is now located externally, this arrangement furthermore allows the tension of the tensile member 6 to be adjusted by an external means.

Referring now to Figs. 6 & 7. The present invention describes a tendon and ligament support with an improved variable support level adjustment means and an improved method of incremental adjustment of the said tendon support levels that is easy and fast for the veterinarian to perform wherein the adjustment means may comprise a fixed member 32 positioned on the first cannon collar 5, a sliding member 35 connected to the vertical tensile member 6 wherein the fixed member 32 and sliding member 35 can be securely fastened together in a plurality of positions 37 depending on the required amount of joint support. Said adjustment means allows different positions on the palmar/plantar aspect of the cannon collar 5, thereby increasing or lowering the degree of support to the recovering injured tendon.

In another embodiment there is a vertical track 32 with a channel that is attached permanently and securely to the palmar/plantar aspect of the cannon collar of said tendon and ligament support device. Within the said vertical track 32 there is a receiver hole 33 that is threaded to receive a threaded securing bolt 34. There is also a sliding adjustor 35, itself of rigid and strong construction, that is sized to slide freely up or down vertically within the said vertical track 32. At the bottom end of the said sliding adjustor 35 is a means by which the top end of the tensile member 6 is securely anchored. This includes but is not limited to a looping hole 36 for the purpose of inserting the tensile member 6 and anchoring it at the looping hole 36. Along the vertical centre of the said sliding adjustor 35 there is a plurality of vertical holes 37, spaced incrementally apart, through which the securing bolt 34 can penetrate freely. The said securing bolt 34 can screw into or engage into the aforementioned receiver hole 33 within the aforementioned vertical track 32, thereby firmly securing the support level setting. The support level can therefore be altered incrementally depending on which of the vertical holes 37 the securing bolt 34 is inserted into. For example if the upper most vertical hole is selected the length of the tensile member 6 is lengthened and the support level is at its lowest (See Fig. 6 & Fig 7 A) and conversely if the lower most vertical hole is selected the support level is at its highest (See Fig. 6 & Fig 7 B). Making the adjustment is a simple and quick process of unscrewing the securing bolt 34 and then sliding adjustor 35 up to the chosen setting and then reinserting the securing bolt 34 in and finally screwing it back into the receiver hole 33. The reverse process can similarly be carried out by sliding the adjustor 35 downwards. Upward movement of the support level is referenced by arrows 38 and conversely downward movement of the support level is referenced by arrows 41

Referring now to Fig 8 A & B. A further embodiment of the invention describes a tendon and ligament support with variable support and an improved method of adjustment of the said support levels. It comprises a pull strap 39 and ratchet or strap grip 40 method adjustment to grip and secure the tensile member 6 in place of the sliding adjustor and securing nut as described earlier in Figs 6 & 7. The strap grip or ratchet 40 is secured to the palmar/plantar aspect of the cannon collar 5.

In a further embodiment of the invention, the variable support level adjustment mechanism, including the adjustor track 32 and sliding adjustor 35 are fixed securely to the exterior surface of the upper cannon collar 5 whereby the tensile member 6, that is fixed to the said sliding adjustor 35, inserts through an opening 30 in said cannon collar 5 to the interior surface of said collar 5.

Referring to Fig. 10A and 10B illustrates a device that provides an improved tendon and ligament support for a limb joint in accordance with claims which follow. It specifically provides cannon and pastern compression collars 5. The first cannon collar may be configured to embrace the limb above the joint and the second pastern collar may be configured for embracing the limb below the joint. The connecting hinge 10 may be located medially and laterally and may join the first and second collars 5 to provide articulation and separation between the first and second collars. A connecting vertical tensile member 6 may comprise a substantially inelastic material adjacent the respective palmar or plantar aspect of the equine limb with the connecting vertical tensile member 6 connected to both the first and the second collars 5 and adapted to provide limited movement of the limb joint when under a dynamic or static tensile load 20 and a stabilizing member 9 for preventing lateral and/or medial dislocation of the connecting vertical tensile member 6 during use and when under a dynamic or static tensile load 20. The connecting hinge 10 that may be concentric with the horse's fetlock joint 1 and a palmar vertical tensile member 6 joining the collars 5. It further comprises a horizontal or lateral stabilizing means 9 to the vertical tensile member 6, for the purpose of maintaining at all times a centred position and stabilizing the load bearing vertical tensile member 6 or "Artificial Tendon" with upper and lower anchors 7. The said stabilizing lateral support member 9 is horizontal in orientation, relative to the vertical tensile member 6 and is anchored to both sides of the compression collars 5 (which correspond to the medial and lateral sides of the limb) and is also attached firmly and centrally at the palmar or plantar aspect of the limb to the tensile member 6 which has a vertical orientation, creating a cross arrangement when it is viewed from the rear (Fig. 10 A). In so doing said stabilizing lateral support member 9 ensures that the load bearing centrally located tensile member 6 cannot slip off or dislocate from the central vertical position or palmar/plantar aspect of the limb. The said stabilizing lateral support member 9, as with the vertical tensile member 6, may be constructed from a high tensile and flexible material such as, but not limited to a dyneema, nylon, mylar or kevlar fibre or material of similarly high tensile strength. The invention is ideally suited to, but not limited to use as a tendon and ligament support device for an animal limb joint and especially for a horse's fetlock joint.

The tendon and ligament support wherein the stabilizing member 9 may comprise medial and lateral ends that are anchored securely to corresponding medial and lateral sides of the first cannon collar or second pastern collar 5 and wherein a centre of the stabilizing member 9 is securely fixed to the connecting vertical tensile member 6 where the stabilizing member and connecting vertical tensile member intersect.

In this embodiment of the invention the stabilizing lateral support member 9 is described with left and right ends that may be anchored securely to the corresponding left and right hinges 10 of the hinged joint portion of the compression collars 5. The tendon and ligament support, wherein the stabilizing member may comprises medial and lateral ends that are anchored securely to the corresponding medial and lateral connecting hinges 10 and wherein the centre of the stabilizing member 9 is securely fixed to the connecting vertical tensile member 6 where the stabilizing member and connecting vertical tensile member intersect. The centre of the said stabilizing lateral support member 9 may be securely fixed to the vertical tensile member or artificial tendon 6 using, at the point where both intersect, for example, but not limited to stitch lines, rivet methods of attachment or also using a continuous integrated one piece construction. When said lateral stabilizing support member 9 is in place, the said vertical tensile member 6 is prevented from dislocating sideways under the highest dynamic loading 20 and turbulence that can be exerted upon it by a horse while exercising.

Referring to Fig. 10A illustrates a rear elevation of the invention.

Referring to Fig. 10B illustrates a side elevation of the invention.

Referring now to Fig. 11. In a further embodiment of the invention the said stabilizing lateral support member 9 is described wherein the medial and lateral ends may be anchored securely to the interior of the corresponding medial and lateral side and/or connecting hinged joint 10 portion of the compression collars 5. The centre of the said stabilizing lateral support member 9 may be attached securely to the vertical tensile member or artificial tendon 6 at the level of the sesamoid bones 12 creating a "cross structure" when viewed from the rear.

Referring now to Fig. 12. In a further embodiment of the invention the said stabilizing lateral support member 9 is described with left and right side articulated anchors 13 which in turn are securely connected to the corresponding left and right exterior or interior surfaces of the hinged joint 10 portion of the compression collars. The medial and lateral ends may be anchored securely to the medial and lateral sides and/or connecting hinges by corresponding articulated anchors 13 that allow unrestricted articulation of the vertical tensile member 6 and the stabilizing member 9 about the connecting hinge 10 during joint rotation. The said articulated anchors 13 are assembled securely to the hinges of the assembly allowing the lateral support member 9 freedom so as to freely rotate or articulate concentrically and in unison with the main hinge 10 of device as the joint rotates. In so doing it aids an unrestricted articulation of the tensile member 6 when in motion allowing the said lateral support member 9 to stay in contact with the sesamoid region 12 of the horse's limb as it rotates around the fetlock joint 1.

Referring now to Fig. 13. In a further embodiment of the invention the said stabilizing lateral support member 9 is divided into a plurality of individual lateral support members 14 each of which is connected to the left and right side articulated anchors 13 which in turn are securely connected to the corresponding left and right exterior or interior surfaces of the hinged joint 10 portion of the compression collars. The said articulated anchors 13 are assembled securely to the hinges of the assembly allowing the lateral support members 14 freedom to freely rotate or articulate concentrically and in unison with the main hinge 10 of device as the joint rotates. The said plurality of individual lateral support members 14 fan outwards from the articulated anchors 13 to join the centrally located vertical tensile member 6.

Referring now to Fig. 14. In a further embodiment of the invention the said stabilizing lateral support member 9 is described with left and right ends that are anchored securely to the left and right exterior or interior surfaces of the hinged joint portion of the compression collars. The centre of the said stabilizing lateral support member 9 is now attached securely to the vertical tensile member 6 or artificial tendon at a level above or PROXIMAL to the sesamoid region 12 and may create an "inverted V structure" when viewed from the rear Fig.14A. The said lateral support members 9 emanates outwards from the articulated anchors 13 to join the centrally located vertical tensile member 6 above the sesamoid region 12.

Referring now to Fig. 15. In a further embodiment of the invention the said stabilizing lateral support member 9 is described with left and right ends each of which is anchored securely to the left and right exterior or interior surfaces of the hinged joint portion of the compression collars. The centre of the said stabilizing lateral support member 9 is now attached securely to the vertical tensile member 9 or artificial tendon at a level below or DISTAL to the sesamoid region 12 and may create a "V structure" when viewed from the rear Fig 15A. The said lateral support members 9 emanate outwards from the articulated anchors 13 to join the centrally located vertical tensile member 6 below the sesamoid region 12.

Referring now to Fig. 16. In a further embodiment of the invention the said stabilizing lateral support member 9 is described with left and right ends each of which is anchored securely to the left and right exterior or interior surfaces of the hinged joint portion of the compression collars where the said stabilizing lateral support member is split apart vertically above, adjacent to and below the sesamoid region 12 and may create a "diamond shape structure" when viewed from the rear Fig. 16A. The said diamond shape structure encompasses the sesamoid region 12 both distally and proximally. The said lateral support members 9 emanate outwards from the articulated anchors 13 to join the centrally located vertical tensile member 6 above and below the sesamoid region 12.

Referring now to Fig. 17. In a further embodiment of the invention the said stabilizing lateral support member 9 is comprised of two left and two right ends 15 where the said stabilizing lateral support member fibres intersect the sesamoid region 12 creating a "diagonal cross structure" when viewed from the rear (Fig. 17A). The centre of said diagonal cross structure joins or coincides with the centrally located vertical tensile member 6.

Referring now to Fig. 18. In a further embodiment of the invention the vertical tensile member 6 is removed altogether and said stabilizing lateral support member 9 as described previously, comprises two left and two right ends 15 where the said stabilizing lateral support member 9 intersect the sesamoid region 12 creating a "diagonal cross structure" when viewed from the rear (Fig. 18A). In this embodiment the said diagonal cross structure now acts as both the vertical and lateral load bearing tensile load member in replacement of the now removed central vertical tensile member 6.

Referring now to Fig. 19. In a further embodiment of the invention the vertical tensile member 6 is divided into two or more vertical tensile members 16 and each repositioned, one to the medial side of the limb and another to the lateral side. As with the single centrally located vertical tensile member 6, in this further embodiment the divided tensile members 16 are anchored securely above and below the hinge structure 10 medially and laterally of the limb and comprised of high tensile yet flexible material, thereby capable of resisting extension of the fetlock joint. The anchor points 19 can be located internal or external to the said compression collars 5. In this embodiment there is a horizontal tensile member 17, located adjacent the sesamoid region 12, that is attached securely to each of the two vertical tensile members 16. The purpose of the said horizontal tensile member 17 is to brace the two vertical tensile members 16 together and prevent lateral separation under load as the horse places weight on the limb.

Referring now to Fig. 20. In a further embodiment there is also a divided vertical tensile member 16 with at least two horizontal joining tensile members 17, each located adjacent the sesamoid region 12, and attached securely to each of the two vertical tensile members 16. The purpose of the said multiple horizontal tensile members 17 is to further brace the two vertical tensile members 16 together and further prevent lateral separation under load as the horse places weight on the limb as the joint extends. The divided tensile members 16 are anchored securely above and below the hinge structure 10 medially and laterally of the limb and comprised of high tensile yet flexible material. The said anchor points can be located internal or external to the said compression collars 5.

Referring now to Fig. 21. In a further embodiment there is also a divided vertical tensile member 16 with a broadened horizontal tensile pad 18 located adjacent the sesamoid region 12, and attached securely to each of the two vertical tensile members 16. The purpose of the broad pad 18 is to further brace the two vertical tensile members 16 together thereby preventing lateral separation under load while also providing improved pressure distribution to the sesamoid region 12. The divided vertical tensile members 16 are anchored securely above and below the hinge structure 10 medially and laterally of the limb and comprised of high tensile yet flexible material. The said anchor points can be located internal or external to the said compression collars 5.

Referring now to Fig. 23. This embodiment of the invention describes a solution to the downward misalignment of the hinge joint 10 and sesamoid region 12 as outlined in Fig 16 above wherein the vertical tensile member 6 may be absent and the support further comprising a medial and/or lateral connecting hinge 10 characterized by friction and/or locking means to limit hinge rotation, a horizontal stabilizing member 9, adjacent the posterior of the limb joint or sesamoid bones 12, each end of which is securely fixed, medially and laterally to corresponding exterior or interior surfaces of the support device 5. In this embodiment the vertical tensile member 6 may be eliminated and replaced by a hinge 10 characterized by possessing friction or locking within said hinge 10 and where the said stabilizing lateral support member 9 possesses left and right ends each of which is anchored securely to the left and right exterior or interior surfaces of the hinged joint 10 portion of the compression collars 5. In this embodiment the limiting of extension of the horse's fetlock joint is now controlled by the combination of friction or locking mechanism within the hinge 10 itself and the function of the said stabilizing lateral support member, in this new arrangement is to prevent the fetlock joint extending downwards towards the ground during high load 20, for example during trot, canter or gallop. Fig 23C shows how the said stabilizing lateral support member 9 makes it impossible for the fetlock joint and sesamoid region 12 and the hinge 10 of the device to become misaligned or separated even under extreme high loads 20, such as those exerted upon it by the horse exercising at gallop speed.

Referring now to Fig. 27. The present invention further describes a tendon and ligament support comprising a resistance locking hinge 10 as described in one embodiment of my prior art, combined with horizontal/lateral tensile member 9 that is anchored at each end at the hinges 10 of the said tendon and ligament support. The tendon and ligament support 5 may comprise medial and lateral friction and/or locking hinges 10 joined by a horizontal stabilizing member, a first dorsal pressure pad 22, adjacent the dorsal cannon bone above the limb joint and attached to the upper cannon collar; a second dorsal pressure pad 22 adjacent the dorsal pastern bone below the limb joint and attached to the lower pastern collar, a third pressure pad 23 adjacent the apex of the sesamoid region, wherein in combination form a three point opposing pressure resistance to both joint extension and upward dislocation during tensile loading. This new arrangement is characterized by a three point opposing pressure zone geometry comprising the two dorsal pressure points 22 located at the front of the limb, one adjacent the dorsal cannon bone and another adjacent the dorsal pastern bone which are equally and oppositely opposed by a third pressure point or zone 23 located at or adjacent the apex of fetlock joint sesamoid region 12. It is this opposing palmar/plantar pressure point or zone 23 that prevents the compression collars of the device from inadvertently sliding up the cannon bone under maximum hyperextension of the fetlock joint.

Referring now to Fig. 28. In a further embodiment of the invention there is a vertical tensile member 24 added which has an anchor point at each of its ends, one located at the palmar aspect of the cannon bone and the second located at the palmar aspect of the pastern bone. The purpose of the vertical member 24 in this embodiment is to ensure that the third pressure zone 23 always moves in unison with the sesamoid region 12 of the horses fetlock joint as the joint flexes and extends. Without this vertical security, the pressure zone 23 cannot be guaranteed to stay in its correct position adjacent to the apex of the sesamoid region 12.

Referring now to Fig. 30. The present invention further describes an articulated limb dorsal cover 48 method that performs several essential functions simultaneously. The primary function being a pressure redistribution mechanism that allows the immense forces transferred from the tendons to be safely transferred to the dorsal or front aspect of the cannon and pastern bones. The tendon and ligament support 5, wherein the first cannon collar may comprise a first front panel 48 rotatably connected to the first cannon collar and wherein the second pastern collar may comprise a second front panel 48 rotatably connected to the second pastern collar. The improved front cover method described herein is comprised of two dorsal front panels 48, one over the cannon and another over the pastern parts of the limb. Said panels 48 can also be located at any position vertically along the dorsal aspect of the limb, including the dorsal hoof. The said single point pivot 47 allows the said front cannon and pastern panels 48 to articulate independently relative to the aforementioned rearward movement 44 of the cannon collars 5 of the support device under load 20 when the horse is exercising. In so doing they allow the front panels 48 to remain in a constant parallel orientation to the dorsal aspect of the cannon and pastern bones creating even pressure distribution vertically along the dorsal limb, as referenced by arrows 46, even under maximum hyperextension of the fetlock joint (See Fig 30 B). By contrast Figs 30 A & B also illustrates the invention and how the front panels 48 remain parallel to and in uniform contact with the front of the leg regardless of what the compression load 20 on the leg is. By remaining parallel to the cannon and pastern bones under maximum load 20, all transferred pressure is evenly spread onto the front surfaces of the leg and thereby eliminating the concentrated, shear load pressure and resulting skin pressure sores that the prior art devices can cause.

In a further embodiment of the invention the said front panels 48 simultaneously act as fastening means that can be detachably fastened or hooked onto the main body of the said tendon and ligament support device 5 by single pivot points 47, one on either side of the leg.

The improved dorsal limb closure mechanism described here has multiple simultaneous advantages. These include acting as a load transfer mechanism, a pressure redistribution mechanism and a quick and simple fastening mechanism. This said dorsal limb closure mechanism also enables an extremely lightweight and strong structure, requiring a minimum of material mass, a combination of features that is not possible with existing quick release fastening techniques, such as prior art tension latches and buckles. These prior art fasteners, tension latches and buckles are entirely unsuitable for the application herein due to excess size and mass and an insufficiency of tensile strength and most importantly due to a lack of any articulation capability.

Referring now to Fig 31. In a further embodiment of the invention, the said dorsal cannon and dorsal pastern panels 48 are manufactured from stiff material characterized in having minimum deformation under high load. As the tensile and compression load on the said dorsal panels 48 must be capable of withstanding dynamic loads 20 in excess of 2000KG at a gallop, in these conditions materials such as polymers or woven cloth are deficient in structural strength. Materials that are suitable for this purpose include but are not limited to composites materials including carbon fibre, kevlar fibre, glass reinforced plastic, reinforced strong plastics and for example graphite and aluminium or any other material with sufficient structural stiffness and toughness. Another characteristic of the said dorsal cannon and dorsal pastern front panels 48 is that they can be of a compound curvature that is moulded in shape to conform to the compound curvature of the horse's natural leg surfaces. As a compound curve possesses increased stiffness, the compound curvature described here further raises the structural stiffness of the dorsal panels 48 making them further resistant to deflexion under high load 20.

Referring now to Fig 32. In a further embodiment of the invention the said dorsal cannon and dorsal pastern front panels 48 are essentially oval or round in shape when viewed from a front perspective. These oval dorsal panels 48 mimic the shape of the "high pressure zones". These high pressure zones are evident when pressure analysis software is used to map areas of highest skin pressure concentration under high load 20 on the skin surface beneath the dorsal panels of the tendon support device. The major advantage of the panels 48 replicating the shape of the area of maximum pressure is that it further reduces the risk of skin pressure injury as it eliminates all peripheral or nonessential hard material making contact with the horse's skin outside the aforementioned areas of high pressure. A further advantage of the oval or round shaped dorsal cannon and dorsal pastern front panels 48 is that they allow the panels to be of minimum size and mass by using the minimum quantity of material.

In a further embodiment of the invention the said dorsal cannon and dorsal pastern front panels 48, each possess a separate fastener strap 49 of high tensile strength that wraps uninterrupted around the dorsal panel 48, with said strap 49 itself possessing a fastener 50 at each end by said strap which is fastened to the main body 5 of the tendon and ligament support. This wrap around strap 49 is manufactured from high tensile strength material, such as but not limited to a steel strap 49 of unbroken construction creating a fastener and panel assembly of greatly increased tensile strength, a characteristic that is essential to withstanding the extreme high dynamic loading exerted upon it.

In a further embodiment the said fastener strap 49 of high tensile strength is manufactured from a flexible material of high tensile strength including but not limited to kevlar fibre, Dyneema fibre, nylon. This embodiment allows for greater adaptability to a wider variability in shapes of horse's limb.

In a further embodiment of the invention there is provided an opposing palmar pressure panel 51, located adjacent to the palmar sesamoid region 12. The said opposing palmar pressure panel 51 allows for further improved pressure redistribution by exerting a pressure directly onto the sesamoid region 12 that is both equal and opposite to the pressure exerted onto the said dorsal cannon and pastern pressure distributing panels 48 as the horse exercises. The said opposing palmar pressure panel 51 is of same stiff material construction as the said dorsal cannon and pastern pressure distributing panels 48

Referring now to Fig 33. In a further embodiment of the invention the said dorsal cannon and dorsal pastern front panels 48, each possess a wrap around panel strap 49 of high tensile strength itself having a fastener 50 at each end characterised by a keyhole or slot shaped perforation 52 in each end of said strap 49. The tendon and ligament support, wherein the first and second front panels 48 are adjacent the dorsal aspect of the limb, and wherein the first and second front panels 48 are rotatably and detachably connected to the first cannon collar and second pastern collar 5 by articulated single point pivots that are located adjacent the medial and lateral limb, wherein the articulated single pivot points further comprise a fastening means 53 that can be fastened to or unfastened from the first and second collars 5.The said keyhole or slot 52 latches or engages onto corresponding round studs or hooks 53 that is itself fixed to the compression collars 5 of the tendon and ligament support device. The said round stud 53 is secured or assembled permanently to the main body of said device. This type of keyhole 52 on round stud fastener 53 assembly allows for articulation of the dorsal cannon and pastern panels 48. Said articulation is referenced by arrows 54 (See Fig 33 C). At the same time this articulated design simultaneously enables, for the first time, a tendon and ligament with a limb closure mechanism that possesses the three essential characteristics of a) articulation b) extremely high tensile strength and c) low mass and small size all in the one fastener design. The said straps 49 may also possess adjustable high tension pull straps, attached to the ends of said straps 49, to aid in the application of said round studs 53 into said keyholes 52.

Referring now to Fig. 34. In a further embodiment of the invention the said dorsal cannon and dorsal pastern front panel straps 49 with keyhole shape perforations 52 in each end are further characterised by the inclusion of safety catches or stoppers 55 that are inserted into the gaps in the wide end of the said keyholes 52 when the stud 53 is engaged into the said keyhole perforation. The said safety catches or stoppers 55 prevent the stud 53 from accidentally disengaging from the keyhole perforations 52 during dynamic loading of the support device. The said safety catches or stoppers 55 are most advantageously attached permanently to the device in such a way that they can be easily engaged into and out of the said perforations 52 and cannot be lost.

Referring now to Fig. 35. In a further embodiment of the invention the said dorsal cannon and dorsal pastern front panel straps 49 with keyhole shape perforations 52 in each end are further characterised by a plurality of keyhole shape perforations 56, spaced incrementally apart along the side length of said strap 49, allowing for adjustable sizing or fitting of said support device to varying size of limb.

Referring now to Fig. 36. In a further embodiment of the invention the said dorsal cannon and dorsal pastern front panel straps 49 are further characterised by a ratchet system with Adjustable high tension pull straps 57 allowing for application or fitting of said support device to animals of varying size of limb. The said high tension pull straps 57 may also possess a plurality of ratchet position points 58, each of which accommodates a different limb size.

Referring now to Fig. 37. In a further embodiment of the invention the said dorsal cannon and dorsal pastern front panel straps 49 are further characterised by spacers 60 of variable thickness that are inserted dorsally between said straps 49 and dorsal cannon and pastern panels 48, thereby allowing an alternative means to fit to varying size of limb.

Referring now to Fig. 38. In a further embodiment of the invention the said dorsal cannon and dorsal pastern front panel straps 49 are further characterised by variable length high tensile straps that can be adjusted to fit varying size of limb by use of a tension latch 61 to secure the selected length. Said tension latch 61 can also be used as a means to prevent the stud 53 from accidentally disengaging from the keyhole perforations 52 during dynamic loading of the support device.

Referring now to Fig. 40 A&B. The present invention further describes a dynamic load redistributing mechanism that allows the immense tensile loads 20, that are exerted on the horse's flexor tendons during exercise, to be safely transferred as a compression load onto the front dorsal cannon, pastern panels 48 and sesamoid region 12, instead of as a tensile load on the inelastic tensile member 6. The tendon and ligament support further may comprise a palmar or plantar pressure panel 61 located adjacent to the respective palmar or plantar sesamoid region 12 to exert a pressure directly onto the palmar or plantar sesamoid region 12 that is both equal and opposite to the sum of pressures exerted onto the dorsal limb by the first and second front panels 48 under load. The new mechanism described here reduces and/or replaces the dependency on the inelastic tensile member 6 to act as the energy dissipating shock absorber as in the prior art devices.

In the present invention the essential function of shock absorbency and energy dissipation is removed from the inelastic tensile member 6 and instead relocated to alternative pressure points using energy dissipating compression materials located at the three designated pressure points on the horse's leg. It needs to be understood that as load 20 is applied, a resulting tensile load is simultaneously applied to the inelastic tensile member 6 and this in turn applies a compression load to the front dorsal cannon, pastern panels 48 and sesamoid region 12. In the present invention the said tensile load is no longer isolated to the tensile member 6 but is now also being primarily absorbed and dissipated by layers of compression material 61 located adjacent three pressure points or zones: 1. the dorsal cannon, 2. the dorsal pastern 48 and 3. the apex of the fetlock joint (sesamoid region) 12. In this embodiment the tendon and ligament support may further comprise a dynamic pressure redistribution and energy dissipation means where the function of shock absorbency and energy dissipation is a function of a layers of shock absorbent compression material of substantial thickness, a shock absorbent compression pad 61 located between the first front panels 48 of the support device 5 and surfaces of a horses leg adjacent a dorsal cannon bone, a shock absorbent compression pad 61 located between the second front panel 48 of the support device 5 and the surfaces of the horses leg adjacent the dorsal pastern bone, a shock absorbent compression pad 61 located between the vertical tensile member 6 and the surfaces of the horses leg adjacent the sesamoid bones 12 and wherein the compression pads 61 dissipate energy by compression and decompression under the dynamic loading and unloading 20 exerted by the exercising horse.

As the horse exercises the dynamic forces, that would otherwise be absorbed by the tensile member 6 of the prior art as a tensile load, are instead relocated to the front of the dorsal cannon and pastern panels 48 and sesamoid region 12 as three separate compression loads are forced to compress under the loads.

This new method overcomes the aforementioned risk of sudden and catastrophic failure of the inelastic tensile member 6, as described in the prior art, due to the extreme dynamic load being isolated to that single tensile structure. The present invention achieves this by the introduction of soft yet resilient compression layers 61 of material, of substantial thickness, between the front dorsal panels 48 and the surfaces of the horse's dorsal aspect, that offset a high proportion of the tensile load previously exerted entirely onto the inelastic tensile member 6.

The degree of compression load, as referenced by arrows 62, is directly proportional to the degree of downward limb load 20 and consequent degree of fetlock joint extension. In other words the greater the degree of fetlock drop relative to the ground, the more energy that is absorbed by the compression layers 61 at each of the three said locations. In so doing the invention is now significantly more effective at reducing load on the horses flexor tendons as it exercises without the said risk of catastrophic failure of the tensile member 6. In Figs. 40 A&B the different compression effect on the compression layers 61 while loaded and unloaded can be seen. Fig. 40 A illustrates the invention with the limb essentially unloaded as the horse is standing still. Fig. 40 B illustrates the invention with the limb under high compression load 20 as the horse is galloping and extension of the fetlock joint is at its maximum.

Referring now to Fig. 41. In a further embodiment of the invention there is a dynamic load redistributing mechanism with the Shock absorbing compression layers comprised of a plurality of two or more laminated layers 63 of foams of varying hardness or compressibility. Each of said layers 63 is of variable hardness that compress independently at different rates depending on the compression loads 20 applied. The advantage of this is a significantly more gradual and controlled absorption and dissipation of the energy under load 20 with a further significantly reduced risk of sudden impact injury to the skin surfaces and underlying soft tissue.

Referring now to Fig. 41 A illustrates the limb unloaded and hence the compression layers 63 are entirely non-compressed. Fig. 81 B illustrates the limb under a medium load 20 and hence only the softest of the compression layers 63 becoming compressed. Fig. 41 C illustrates the limb under a high load 20 and hence all of the compression layers 63 now becoming compressed. It is to be noted that Fig. 41 intentionally does not include the visual details of the entire tendon support device. This is to simplify the specific details of the feature of the laminated layers 63 as described here.

In another embodiment of the invention there are articulated pressure points of stiff material comprised of pastern and cannon front panels and a broadened centrally positioned artificial tendon using stiff compound curve panels and also including wrap around continuous steel straps for strength.

Referring now to Fig. 42. The present invention further describes a tendon and ligament support 5 with an inner boot or inner lining method comprising an inner soft cushioning boot 65 that may be applied to the limb independently underneath the main tendon support device 5. The tendon and ligament support 5 may further comprise a separate inner boot 65 of soft material that is applied directly to the limb, over which the tendon and ligament support 5 is then applied. The said inner boot 65 is applied by means of detachable fasteners such as but not limited to hook and hoop fasteners. Following secure application of the said inner boot or inner lining 65, the outer stiff tendon support structure 5 is then applied over the said soft inner boot 65. The present invention offers the advantage of providing adequate cushioning directly onto the horse's skin to protect it from pressure sores and also a sizing method that eliminates any guesswork or visual judgement on the part of the veterinarian. This new fitting method consequently removes the risk of errors in fitting of the tendon support device 5. The said separate soft inner boot 65 must therefore be provided to the veterinarian in various thicknesses to enable a perfect fit of the outer stiff tendon support structure. The said separate soft inner boot 65 most ideally covers the entire lower limb of the horse from the hock or knee joints down to the hoof.

Referring now to Fig. 42 A illustrates the bare equine limb.

Referring now to Fig. 42 B illustrates the inner soft cushioning boot 65 applied to the limb before the tendon support device 5 applied.

Referring now to Fig. 42 C illustrates the tendon support device 5 applied over the inner soft cushioning boot 65.

Referring now to Fig. 43A further embodiment of the present invention describes a tendon and ligament support 5 with an inner lining method comprising a separate inflatable inner soft cushioning boot 66, that is applied to the limb independently underneath the main tendon support device 5, whereby the sizing is adjustable in thickness by means of inflation and deflation of the inner boot 66 using, but not limited to, foam, gas, fluid, gel or plastic beads into cavities within the said inner soft boot 66. The said foam, gas, fluid, gel or plastic beads can be either injected into or aspirated out of the cavities within said inner boot 66. When as predetermined inflation level is reached, the inflation is ceased. There is also a stopper or valve to prevent inadvertent deflation.

Referring now to Fig. 43 A illustrates the equine limb with the inflatable inner soft cushioning boot 66 applied before inflation of said boot 66.

Referring now to Fig. 43 B illustrates the main tendon support device 5 applied over a deflated inner soft cushioning boot 66 before inflation.

Referring now to Fig. 43 C illustrates the main tendon support device 5 applied over the now inflated inner soft cushioning boot 66. In this situation the space between the horses limb and the device 5 is entirely filled by the inflated cushioning boot 66

Referring now to Fig. 44. Yet a further embodiment of the present invention describes a tendon and ligament support 5 with an inner lining method comprising a separate soft boot 65 whereby the sizing of the inner boot 65 is adjusted in thickness by means of Pockets or cavities 67 in the boot into which are inserted pads 68 of differing thickness.

Referring now to Fig. 44 A illustrates a large size equine limb with thin pads 68 to fill small space between limb and device 5.

Referring now to Fig. 44 B illustrates a small size equine limb with thick pads 68 to fill the larger space between limb and device 5.

Referring now to Fig. 44 C illustrates a perspective view of the equine limb with the inner boot 65 applied with Pockets or cavities 67.

Referring now to Fig. 45. A further embodiment of the present invention describes a tendon and ligament support 5 with an inner boot or inner lining method comprising a separate soft boot 65 whereby the sizing of the inner boot is adjusted in thickness by means of a plurality of Pockets 69 incorporated into the boot 65, all of which can be varied in thickness, independently of one another, to any variation in proportion of limb. Ideally there are three distinct pockets 69 or sizing zones within the said inner soft boot 65: one zone around the cannon bone, a second around the fetlock joint and a third around the pastern bone. However there are also some situations where the sizing zones are vertical in orientation and where there is a requirement for more than three separate sizing zones 69.

Referring now to Fig. 46. A further embodiment of the present invention describes a tendon and ligament support 5 with an inner boot or inner lining method comprising a separate soft boot 65 whereby in addition to the cushioning padding of said soft boot, there are also Shock absorbent pads 70 integrated as part of the said inner boot 65. The location of the Shock absorbent pads 70 are most advantageously adjacent to the pressure points or zones where the energy dissipation is at its highest. These high pressure locations include but are, but not limited to, the dorsal cannon, dorsal pastern and sesamoid regions 12 of the limb. The said integrated shock absorbent pads 70 are best manufactured from resilient and shock absorbent foams that can effectively dissipate and/or recoil the dynamic tensile load transferred from the tendon of the exercising horse, however other resilient rubbers synthetic or natural of suitable hardness can also be used.

Referring now to Fig. 46 A illustrates the equine limb with a separate soft boot 65 with Shock absorbent pads 70 integrated into the said inner boot 65 before said tendon and ligament support 5 is applied.

Referring now to Fig. 46 B illustrates the equine limb with a separate soft boot 65 with Shock absorbent pads 70 integrated into the said inner boot 65 after said tendon and ligament support 5 is applied.

Referring now to Fig. 47 A further embodiment of the present invention describes a tendon and ligament support 5 with an inner boot or inner lining method comprising a separate soft cushioning boot 65 comprising electronic sensors 71 imbedded into the inner boot fabric for measurement of various parameters such as accurate joint angle measurement. Such position sensors are most effectively positioned one on the cannon bone, a second sensor on the joint and a third sensor on the pastern bone. However just two sensors can also be used. Relative movement between these sensors provide accurate data for joint angle measurement and is measured electronically. As joint angle is directly related to flexor tendon strain levels, such accurate joint angle measurement data is very useful to trainers and veterinarians to alert them to dangerous levels of flexor tendon strain during exercise.

Referring now to Fig. 47 A illustrates the unloaded equine limb with a separate soft boot 65 comprising electronic sensors 71 imbedded into the inner boot and with consequent high joint angle 72

Referring now to Fig. 47 B illustrates the loaded 20 equine limb with a separate soft boot 65 comprising electronic sensors 71 imbedded into the inner boot and with consequent low joint angle 73. The change in relative joint angles, loaded versus unloaded can be clearly seen.

In a further embodiment of the invention, the said inner boot 65 is attached to the interior of the rigid tendon and ligament support 5 structure. In this embodiment the entire assembly is has unitary construction and applied to the equine limb in a single process without the need for the inner boot and the outer device to be applied in separate processes.

Referring now to Fig. 48 The present invention further describes a tendon and ligament support device comprising a tensile member constructed from a single strand of high tensile strength fibre, such as, but not limited to nylon, Mylar, Dyneema or Kevlar. In this embodiment the vertical tensile member may comprise a single strand fibre of high tensile strength that is wound or woven in a loop multiple times forming a continuous loop tensile member 74 that is uninterrupted by a seam and wherein the continuous loop tensile member 74 is connected at the top end to a first cannon anchor 75 adjacent the posterior aspect of the first cannon collar and at the bottom end to a second pastern anchor 76 adjacent the posterior aspect of the second pastern collar. The said Single strand fibre is looped, wound or woven multiple times through the upper and lower collar anchor points 75 & 76 creating a continuous loop tensile member 74 that is not interrupted by a seam. The said Single strand Continuous loop tensile member 74 is ideally comprised from a unidirectional fibre for increased tensile strength and minimal elasticity. The said multiple strand structure is looped around the upper and lower collar anchor points 75 & 76 of the said tendon and ligament support device in a direct straight line structure from the upper cannon anchor point 75 to the lower pastern anchor 76. This continuous and uninterrupted loop construction solves the problem of the weakness of a stitched seam assembly as used in the prior art devices, and results in a tensile member of significantly increased strength that is capable of withstanding the dynamic tensile loads as exerted upon it by the galloping horse. Laboratory tests have demonstrated that the tensile member created using the present invention, of a multiple wound and Continuous, seamless Single strand looped method, has a tensile strength in the order of 5 times greater than a traditional tensile member using the same mass of material that has a conventional stitched or riveted seam construction, as employed in the prior art devices. The significant increase in strength of the invention is the result of the high tensile fibres now having a continuous stress path that is not interrupted by a relatively weak seam.

Referring now to Fig. 49 In a further embodiment of the tendon and ligament support 5, the continuous loop tensile member 74 may be woven from a narrow point adjacent the upper first cannon anchor 75 downward to a broadened lower second pastern anchor 77 that may be curved in shape to conform to the posterior aspect of the second pastern collar. Here there is a continuous loop tensile member 74 of the type described by Fig. 48, of high tensile strength, fibre that is now woven to fan downward from the upper cannon anchor 75 of the upper cannon collar 5, and wrapped or woven around a broader stiff, non flexible lower pastern anchor 77, thereby creating an inverted fan/triangular shaped tensile member that is broader at the lower pastern anchor 77 than it is at the upper cannon collar anchor 75. The said broader stiff, non flexible lower pastern anchor 77 is assembled securely to the palmar aspect of the lower cannon collar 5. This embodiment maintains the seamless strong continuous loop woven construction as described in the first embodiment. Referring now to Fig. 49 A Illustrates a front elevation of the continuous loop fan shaped tensile member 74

Referring now to Fig. 49 B Illustrates a cross section x-x side elevation of the continuous loop fan shaped tensile member 74

Referring now to Fig. 50 In further embodiment of the invention there is a continuous loop, fan shape tensile member 74 of the type described by Fig 49, wherein the lower second pastern anchor is folded around the underside of a posterior wall 80 of the second pastern collar 5 and wherein the lower pastern anchor 77 is fixed securely to the second pastern collar 5, and wherein medial and lateral ends of the lower second pastern anchor 77 can be arranged when required to accommodate attachment of load bearing fasteners 52.The lower pastern anchor 77 is then fixed securely to the lower pastern compression collar 5. This folding of the tensile member 74 around the lower pastern compression collar 5 results in a further significant increase in tensile strength that is highly resistant to tensile failure under the maximum dynamic loads that can be exerted by a galloping horse. This folding back construction technique of the tensile member 74 may also be applied to the upper cannon collar anchor, but is most advantageously applied to the lower pastern compression collar 5 assembly.

Referring now to Fig 50 A Illustrates a front elevation of the continuous loop fan shaped tensile member 74 with the lower pastern anchor 77, folded 80 around the underside of the lower compression collar 5 and fixed in position.

Referring now to Fig 50 B illustrates a side elevation cross section x-x of the continuous loop fan shaped tensile member 74 with the lower pastern anchor 77, with folding 80 around the lower compression collar 5. The said folding action is referenced by arrow 81.

Referring now to Fig. 51 A,B,C In yet another embodiment of the invention the single strand of high tensile fibres 74 are arranged so that the fibre strands are woven to follow a more complex continuous and uninterrupted path that connects the central upper anchor point 75 of the upper collar down to the broader lower pastern anchor 77 and continues further to lateral anchor points 82 that themselves are located and securely fixed to the left and right sides of the support device 5 or directly to the hinges of the hinged compression assembly 10. In this embodiment the continuous loop tensile member 74 comprises high tensile fibres that are woven in a complex continuous and uninterrupted path to connect both the medial and lateral connecting hinges 82 of the tendon and ligament support 5 and the first cannon anchor, above the limb joint to the second pastern anchor below the limb joint. There may also be tensile strands 74 that link horizontally both left and right lateral anchors 82. The tensile strands 74 are woven in a single and uninterrupted continuous loop that connects all four anchor points 75, 77 and 82 (medial and lateral) resulting in a web like or woven matrix of extremely high tensile strength and of low mass. The forces upon said tensile member 74 when under load are shown by arrows 83.

This embodiment maintains the seamless strong uninterrupted weave construction as described in the embodiments of Figs 48, 49 and 50. This further embodiment also removes the aforementioned risk of the said centrally located tensile member 6 from dislocating sideways while in use while also providing a broader area to distribute high pressure evenly over the sesamoid region 12 of the limb. The entire web like high tensile structure, is best covered or enveloped in a flexible casing that binds the high tensile fibres 74 into their fixed positions so that the individual fibres cannot shift toward or away from one another under a dynamic tensile loading. The said flexible casing can further have an adhesive that binds the fibres in place and can also comprise woven or a nonwoven fabric. In some situations the said flexible fabric cover is also glued or sewn into position to further ensure the high tensile fibres 74 do not shift toward or away from one another under load.

Referring now to Fig. 51 A Illustrates a front flattened elevation of the continuous loop fan shaped tensile member 74 with the tensile member assembly with four anchor points 75, 77 and 82 left and right.

Referring now to Fig. 51 B Illustrates a three dimensional perspective view of the continuous loop fan shaped tensile member 74 with the tensile member assembly with four anchor points 75, 77 and 82 left and right.

Referring now to Fig. 51 C Illustrates a side cross section of the continuous loop fan shaped tensile member 74 with the tensile member assembly with four anchor points 75, 77 and 82 left and right and which clearly show how it relates or fits into the entire tendon support device 5.

In a further embodiment of the invention the tensile member 6 or 74 comprises longitudinal strands of fibres or braided metal cable, the ends of which are firmly imbedded or moulded into small spherical balls or beads that are permanently integrated with the tensile member ends. The said beaded ends are secured to the upper and lower collars 5 of the compression assembly by slotting the strand into corresponding slots of the upper and lower compression collars 5 that withholds the beaded ends.

Referring now to Fig. 53 A,B &C The present invention further describes a tendon and ligament support comprising compression members of collars 5 that may be constructed from a spaced apart double layer walls 86 and 87 of stiff material that may be separated by space divisions or gaps 78 between the two layers wherein the first cannon collar and / or the second pastern collar may comprise dual walls 86 and 87 that are separated by spaces between the walls. The said gaps 78 can be filled with air or a filler material such as but not limited lightweight foam or nomex honeycomb for example. The said gaps 78 can also be created by the placement of spacers 89 at intervals between the said skin layers 86 and 87. The said Double layer wall construction provides significantly higher stiffness and resistance to deformation than is otherwise possible with a single layer construction as described by the prior art, using the same quantity and mass of material. The stiffness increase achieved is attributable to a complex use of the well understood I or H Beam principle which maximises the stiffness of a structural engineering material while minimizing the deflection under a direct load, such as a compression or bending load as is the case in this applications. However in this application the spaced double layer construction 86 and 87 possesses a number of other unique novel advantages in the construction of the tendon and ligament support device described here.

The present invention describes a tendon and ligament support 5 with compression members comprising a double layer wall or skin 86 and 87 of stiff material also forming an integrated forked hinge 88 formed by the spaces between the walls and between outer and inner walls 86 and 87 of the first cannon or second pastern collars. The said forked hinge 88 is created by the two separated layers 86 and 87 and this then enables the hinge element of the lower cannon collar to be inserted between the two separated layers of the said forked hinge 88 of the upper cannon collar, or vice versa. The said forked hinge 88 as described also presents the advantage in that it enables a much more secure and reliable assembly of said hinge 88 by virtue of the fact that the outer layer 86 and inner layer 87 of the hinge of the upper cannon collar remain at all times stationary relative to one another. This stationary outer and inner hinge design ensures there is no tendency of the hinge action to unwind the central nut and bolt with which the hinge is assembled. The new forked hinge construction solves the tendency of the central nut and bolt to accidentally unwind, as is the case with the single layer hinge assembly of the prior art devices.

Referring now to Figs. 53 A, B & C Illustrates the double layer wall construction 86 and 87 when the limb is under load 20, as the horse gallops. Here it is demonstrated how the increased stiffness of the double layers 86 and 87 construction resist deformation under maximum downward load 20 as a consequence of the space division between said walls 86 and 87.

Referring now to Fig. 54 In another embodiment of the invention there is a double layer construction of the tendon and ligament support 5 comprising space divisions between the two layers 78 that can also be utilized to form larger cavities 90 for housing of components. This is a third function and use of the double layers 86 and 87 as an encasing method for any mechanical and/or electrical components that may need to be contained within the structure of the fully assembled device. These include cavities to house, for example, the upper and lower metal anchors and the adjustment mechanism of the tensile tendon 6 or 74. The said cavities 90 between the double layers also provides an ideal location to place any electrical circuitry that may need to be housed securely and neatly within the final assembly of the tendon and ligament support device.

Referring now to Fig. 55 The present invention further describes a tendon and ligament support device that may be altered in size by insertion of sizing spacers or shims 92 of varying thickness between a left and right modular structural components 91, wherein the first cannon collar and second pastern collar may be split vertically and separated into left and right symmetrical components 91, and wherein vertical spacers 92 of varying thickness may be inserted between the left and right symmetrical components 91 to allow size adaptation of the first cannon and second pastern collars to variation in limb size. The said stiff tendon and ligament support, as described here, is comprised of left and right modular structural side components 91 applicable to all sizes irrespective of animal size. The size is adjusted to fit larger or smaller animals by means of insertion of the appropriate sizing spacers or shims 92 of varying thickness between the said left and right modular structural side components 91.

Referring now to Fig. 55 illustrates a rear view of the modular structural components 91 and spacers or shims 92 of varying thickness above and a cross section x-x below

Referring now to Fig. 56 The invention is further characterized by a plurality of horizontal assembly bolts 93 to securely assemble the said modular structural side components 91 in conjunction with said spacers or shims 92 of varying thickness. By removing one specific thickness of spacer and replacing it with another, or a multiples of, the veterinarian can modify the same tendon support device to a wide variety of different size animal limb.

Referring now to Fig. 56A Illustrates how the modular stiff support structure is adapted to fit a small size equine limb

Referring now to Fig. 56B Illustrates how the modular stiff support structure is adapted to fit a medium size equine limb

Referring now to Fig. 56C Illustrates how the modular stiff support structure is adapted to fit a large size equine limb

The present invention further describes a tendon and ligament support comprising consumable components, including but not limited to the hinge bearings, tensile members that can be replaced or repaired without dismantling the entire device. This is achieved by introducing assembly methods that comprise nut and bolt fasteners that are not integrated into the entire assembly but rather consumable components that are detached or separated easily from the entire assembly using basic tools, such as a screw driver and simple assembly methods. The attachment method includes but is not limited to separate parts joined by threaded screws or rivets that can be easily removed or undone to detach the said consumable components such as the tensile member or hinge bearings. This novel assembly technique of the tendon support device negates the need to disassemble the entire device thereby saving labour time and material loss of otherwise reusable parts.

Referring now to Fig. 59 The present invention may further describes a tendon and ligament support device for a horse that may comprise a hinged and rigid compression collars 5 connected by a hinge 10 structure that works in conjunction with a centrally located tensile member 95 anchored to and linking the upper and lower cannon collars and located adjacent the dorsal aspect of the horse's limb, wherein the connecting vertical tensile member 95 may be adjacent a dorsal aspect of the equine limb and adapted to controllably limit fetlock joint hyper flexion. This alternative arrangement of compression hinge 10 and dorsal tensile member 95 together can controllably limit fetlock joint hyper flexion Fig. 59. In this invention, unlike with the prior art, the said dorsal tensile member 95 makes it possible for the first time for the veterinary surgeon to therapeutically treat abnormalities of the lower limb, including but not limited to extensor tendon injury or flexor muscle and flexor tendon contraction 94 as previously described herein.

In a further embodiment of the invention there is a compression hinge 10 and dorsal tensile member 95 together controllably limits fetlock joint hyper flexion and where the said dorsal tensile member is adjustable by the veterinarian. As with the embodiment illustrated by Fig. 59, the dorsal tensile member 95 is located adjacent to the dorsal aspect of the lower limb. This control allows the veterinarian to gradually reduce the level of fetlock joint hyper flexion back to a normal fetlock joint angle over a period of treatment sessions.

Referring now to Fig. 60 The present invention further describes a lightweight dynamic tendon and ligament support particularly for the purpose of preventing injury recurrence during racing post injury recovery. It comprises a lightweight soft wrap around boot 65 that is applied to the horse's lower leg. It further comprises two flexible side members 99 of high compression strength that are assembled to the said soft boot 65, one medial and the other lateral of the fetlock joint 1. The said flexible side members 99 are a lightweight alternative to the compression hinge 10 as described previously and are made of lightweight flexible material that is also sufficiently flexible to bend in unison with the horse's own fetlock joint as it gallops in both flexion and extension of said joint 1. The top end of the said flexible side members 99 are securely assembled to the left and right hand sides of a cannon collar 100 that wraps externally around the cannon bone. Similarly the bottom end of the said flexible side members 99 is securely assembled to the left and right hand sides of a pastern collar 101 that wraps externally around the pastern bone. Additionally there is a flexible tensile member 6 that has one end securely assembled to the palmar aspect of the cannon collar 100 and the other end securely assembled to the palmar aspect of the pastern collar 101. The present invention is differentiated from the prior art in a number of distinct ways. Namely there is no articulated compression hinge 10 concentric with the fetlock joint. The said hinge 10 is a relatively heavy component in the assembly of the prior art devices and is instead replaced entirely by the said lightweight flexible side member 99. Furthermore each of the said components of the present invention is manufactured from soft and flexible materials. This present invention makes it possible to manufacture a tendon support device with a significantly reduced weight of below 0.2KG, sufficiently lightweight as to not restrict or hinder the horse during competition and racing with sufficiently low inertia and that can reduce tendon strain in a horse galloping at high speed.

Referring now to Fig. 61 In a further embodiment of the invention there is a lightweight tendon and ligament support for a horse particularly for the purpose of preventing injury recurrence post injury recovery with a tensile member 6 of variable support that can be adjusted by means of a variable tension locking means 102 located at the palmar aspect of the cannon collar 100. The said tension locking means 102 can be, for example, a pull strap with a tension latch to grip or lock the tensile member 6 at variable positions along its length.

Referring now to Fig. 62 In a further embodiment of the invention there is a lightweight tendon and ligament support for a horse particularly for the purpose of preventing injury recurrence post injury recovery with a fetlock joint collar 103 that wraps externally and securely around the entire fetlock joint region of the boot 65 in particular the flexible side members 99. Under load 20 there is a tendency for the flexible side members 99 to flex outward away from the sides of the limb, during which the flexor tendon supportive effect is lost entirely. The purpose of the said fetlock joint collar 103 is to contain the said flexible side members 99, to create an inward pressure force (arrows 104) and prevent any tendency for side members 99 to flex outward under high load 20 as the horse gallops.

Referring now to Fig. 62A Illustrates a rear elevation of the embodiment

Referring now to Fig. 62B Illustrates a side elevation of the embodiment

Referring now to Fig. 63 In a further embodiment of the invention there is a lightweight tendon and ligament support for a horse particularly for the purpose of preventing injury recurrence post injury recovery with two lightweight and stiff dorsal panels 105 located at the dorsal cannon and pastern bones. The said dorsal cannon panel 105 is assembled as part of the cannon collar 100 and conversely the said dorsal pastern panel 105 is assembled as part of the pastern collar 101. The said dorsal panels are preferably oval in shape to conform to the contours of the horse's dorsal cannon and pastern bones to aid in even pressure distribution. However the said panels can be of other shapes and still perform their function of even pressure distribution. The function of said dorsal panels 105 is to distribute the load transferred from the tendons as evenly as possible onto the said dorsal cannon and pastern bones. The said dorsal panels 105 are by necessity manufactured from lightweight plastics such as but not limited to polythene, polycarbonate, polypropylene or alternatively from composite materials such as carbon, kevlar or glass fibre for example.

Referring now to Fig. 64A Shows a side elevation of the embodiment unloaded. In a further embodiment of the invention there is a lightweight tendon and ligament support for a horse particularly for the purpose of preventing injury recurrence post injury recovery. It comprises a lightweight soft cushioning boot 65 that is applied to the horse's lower leg. It also comprises a stiff dorsal cannon panel and a pastern panel 105 which are linked by a figure of eight tensile member 106. This figure of eight tensile member 106 wraps around the front of the said dorsal cannon panel 105, down to and crossing over the sesamoid region 12, down to and around the said dorsal pastern panel 105, back up to and over the said sesamoid region 12 again crossing over in the opposite direction, and finally back up to the dorsal cannon panel, on the other side of the limb, where the "figure of eight" path is completed. The figure of eight tensile member 106 is manufactured from a high tensile material, including but not limited to dynema fibre, thin tensile steel cable or kevlar fibre. When the support boot is applied to the horse, the figure of eight tensile member 106 forms an extremely strong, uninterrupted load path that is tensile loaded as the load 20 is applied. Preferably there is also a stiff sesamoid panel 107, adjacent the sesamoid region 12 and located between the central crossover point of the figure of eight tensile member 106 and the surface of the horse's leg. As with the stiff dorsal panels 105, the purpose of said stiff sesamoid panel 107 is to spread the pressure over a wide area on the skin surface when load 20 as the limb is loaded. The invention allows full unrestricted flexion of the fetlock joint while only restricting joint extension when a predetermined hyperextension point is reached.

There may also be openings and fasteners in the figure of eight tensile member 106 to allow for the boot to be applied to and removed from the horse's leg. These openings and fasteners can be located anywhere along said figure of eight tensile member 106.

Referring now to Fig. 64B Shows a side elevation of the embodiment under load 20. A further critical aspect of this embodiment is the manner in which the said stiff dorsal panels 105 come together at point 108 under compression load 20 and as the hyperextension reaches a predetermined point before a dangerous level of tendon strain is reached. When panels 105 come together at point 108, any further extension of the fetlock joint under load 20 becomes limited. This limitation in joint hyperextension in turn prevents strain injury to the flexor tendons or suspensory ligament during a high speed gallop.

Referring now to Fig. 64C Shows a rear elevation of the embodiment.

Referring now to Fig. 64D Shows a rear elevation of the embodiment where the form of the "figure of eight" tensile member 106 is highlighted for clarity of illustration.

Referring now to Fig. 65 In a further embodiment of the invention, the crossover of the figure of eight tensile member 106 is replaced by symmetrical bends 111 in the path of said tensile member. In this embodiment the path of the said figure of eight tensile member 106 does not crossover the centre line of the palmar/plantar aspect of the limb, as in the previous embodiments described here, but instead is routed symmetrically around a pair of hooks or turning points 110 from where said path remains on the same side of the limb where it returns to the dorsal pastern and cannon on the same side of the limb. The said hooks or turning points 110 are located adjacent the medial and lateral sesamoid region 12. The final result is a tensile member 106, that also comprises an uninterrupted load or stress path performing the same high tensile load bearing function as the centre line crossover embodiment, but additionally allows an essential opening location for fitting to and removal of the support device to and from the horse's leg. The said opening is located at the back of the device, between the two bends 111. Preferably the said hooks or turning points 110 are fixed to the stiff sesamoid panel 107

Referring now to FIG. 66 In an alternative embodiment of the invention, the crossover of the figure of eight tensile member 106 is replaced by symmetrical bends 111 that do crossover the centre line of the palmar/plantar aspect of the limb and are routed symmetrically around a single hook or single turning point 113 from where it returns to the dorsal pastern and cannon on the same side of the limb. The said single hook or turning point 113 is ideally located adjacent the sesamoid region 12.

Referring now to Fig. 67 A further embodiment of the invention comprises an opening and closure means 112 that locks and secures the said hooks or turning points 110 or 113 and ensures the figure of eight tensile member 106 cannot accidentally become undone while in use. Said opening and closing member 112 is fixed to the stiff sesamoid panel 107 and links the said hooks or points 110 or 113 and allows the support device to be opened and closed for application and removal.

Referring now to Fig. 68 In a further embodiment of the invention there is a lightweight tendon and ligament support for a horse particularly for the purpose of preventing injury recurrence post injury recovery. This embodiment comprises a lightweight soft cushioning boot 65 that is applied to the horse's lower leg. It also comprises a stiff dorsal cannon panel and pastern panel 105 which are linked by a figure of eight tensile member 109. In this embodiment, the figure of eight tensile member 109 is a modification of said tensile member 106 and is distinguished in that it broadens out, from the sesamoid panel 107, into wider areas as it wraps around the said stiff dorsal panels 105. This broadening out of said tensile member 109 further aids in the redistribution of pressure from the said flexor tendons as the horse gallops at speed as it further assists in the even distribution of said load over a wider area on the dorsal aspect of the leg. When panels 105 come together at point 108, any further extension of the fetlock joint under load 20 becomes limited and consequently the degree of tendon strain is also limited as the horse gallops.

Referring now to Fig. 69 In a further embodiment of the invention, there are dorsal panels 105 as previously described but distinguished in that the medial and lateral sides comprise extensions 114 that extend rearwards from the dorsal aspect further toward the central axis of the fetlock joint. These extensions 114 afford increased surface area to make contact at point 108 when the fetlock joint hyper extends.

Referring now to Fig. 69A illustrates a side elevation of the embodiment with the limb unloaded. Referring now to Fig. 69B illustrates a side elevation of the embodiment with the limb under compression load 20 and with said extensions 114 meeting at contact line 108.

Referring now to Fig. 70 In yet a further embodiment of the invention, as with previously described embodiments, there is a lightweight tendon and ligament support for a horse that comprises a lightweight soft cushioning boot 65 that is applied to the horse's lower leg. Here there is a broadened figure of eight tensile member 109 with sesamoid panel 107. This embodiment being distinguished in that the stiff dorsal panels 105 are absent. Here the function of dorsal pressure distribution is predominantly carried out by the broadened dorsal aspects of tensile member 109 on the dorsal cannon and pastern surfaces of the limb.

Referring now to Fig. 71 In yet a further embodiment of the invention, there is a dorsal compression spring 115 that acts as a separation means to keep the said stiff dorsal panels 105 in their correct position during and after compression load 20 is applied. In the absence of the compression hinge 10, there will be a tendency for the upper and lower dorsal panels 105 to collapse together as load 20 is applied. The dorsal compression spring 115 provides a lightweight means of separating the two dorsal panels 105. The said spring 115 in its relaxed position could be described as "C" shaped as viewed from the side and closes under joint extension and opens under joint flexion. Under compression it both keeps dorsal panels 105 apart and at the same time contributes resistance to fetlock joint extension, in conjunction with the tensile members 109 or 6 and in so doing it reduces tendon strain as the horse gallops.

Referring now to Fig. 71A illustrates a side elevation of the embodiment with the limb unloaded and compression spring 115 in a relaxed open position.

Referring now to Fig. 71B illustrates a side elevation of the embodiment with the limb under compression load 20 and with said compression spring 115 in a compressed position.

Referring now to Fig. 72A illustrates a perspective view of the embodiment.

Referring now to Fig. 72B illustrates a perspective view of the isolated compression spring 115.

Referring now to Fig. 73 The present invention further describes an equine tendon and ligament support system 5 with one or more temperature or thermal sensors 117 located at specific areas on the equine limb. The tendon and ligament support may comprise one or more thermal sensors 117 located adjacent the respective palmar or plantar aspect of the equine limb thereby allowing quantitative thermal temperature measurement of the limb including the flexor tendons and / or suspensory ligaments. It is well known within the equine orthopaedic profession that dynamic loading and unloading of flexor tendons and suspensory ligaments during galloping are closely aligned with flexor tendon and ligament temperature increases. Equine tendon tissue will degrade above 42 degrees C. In vivo studies have demonstrated that flexor tendon core temperatures of 45 degrees C can be reached in galloping horses. Such temperature increases are sufficiently high to be a cause of flexor tendon and/or ligament injury in horses. The said temperature or thermal sensors 117 of the invention are located most advantageously adjacent the palmar or plantar aspect of the equine distal limb thereby providing a quantitative output or measurement of the surface temperature of the flexor tendons and suspensory ligaments. However the invention also includes an embodiment with temperature or thermal sensors 117 surrounding the entire limb, both palmar/plantar and dorsal, medial and lateral of the limb.

The said temperature or thermal sensors 117 are lightweight and are assembled permanently or detachably to the said tendon and ligament support device 5 and as such are carried by the horse as it exercises with the said support applied to the limb. The said temperature or thermal sensors 117 are positioned as close as possible to the skin surface to provide maximum accuracy in temperature measurement readings. The said temperature sensors 117 can be of any thermal type but sensors such as NTC thermisters, PTC thermisters, infrared thermal that provide a resistance within the control circuitry that varies according to surrounding temperature, are particularly suitable. Alternatively a thermocouple thermal sensor 117 that produces a voltage that varies according to surrounding temperature, are also suitable and can be measured and converted by the electronic control unit (ECU) circuitry to a numerically quantitative value of tendon temperature. Alternatively the thermal sensor 117 can be a Resistance Temperature Detector (RTD) which allows for more accurate and quick responses to changes in temperature, a characteristic that is particularly advantageous in this application due to the rapid changes in tendon temperature that occur in the critical moments leading up to catastrophic injury while the horse is galloping at speed. A further thermal detection method that can be applied in this invention is infrared thermal detection that can also provide thermal imaging to aid the veterinarian with a visual indication of abnormal temperature increases occurring.

In another embodiment of the invention there is just one temperature sensor 117 located at the palmar or plantar aspect of the limb, spanning vertically along the entire distal length of the flexor tendon. Useful thermal data can also be acquired from a single thermal sensor 117, however using a single thermal sensor offers a generalized temperature measurement or output for the entire limb which does not distinguish any localised heat variation from one point on the limb to another.

Referring now to Fig. 74 In a further embodiment of the invention there is a plurality of separate, smaller thermal sensors 118, grouped together and that are similar in type to thermal sensors 117, located preferably at the palmar or plantar aspect of the limb, spanning vertically along the entire length of the flexor tendon. It is also preferable that the said thermal sensors 118 extend around to cover the medial and lateral sides of the limb, most critically the flexor tendon and suspensory ligaments. Alternatively there is a single broad thermal sensor capable of measuring and discerning heat variation from one part of the said thermal sensor to another. Both thermal sensor types 118 offer the advantage of multiple quantifiable temperature measurements or outputs which can indicate and identify a more isolated variation in temperature at different locations on the limb. As heat generated by injury is most often characterised by isolated heat variations or increases within relatively small areas of the limb, isolated or concentrated temperature measurement variation is an excellent reliable indication of abnormal temperature buildup and risk of injury onset. Such specific data being available to veterinarians provides a vastly improved method of warning, during rehabilitation exercise, as to injury onset and also risk of further damage being done.

Referring now to Fig. 75 In yet a further embodiment of the invention, pressure sensors 116 are located most advantageously adjacent the sesamoidean palmar region 12, the dorsal cannon bone 22 and the dorsal pastern bone 22 of the equine lower limb. The tendon and ligament support system may further comprise one or more pressure sensors 116 located adjacent a sesamoidean palmar regions 51/12 of the limb, wherein the pressure sensors 116 may be positioned between surfaces of the sesamoid palmar region and interior surfaces of the tensile member 6/74, whereby as tendon strain level increases or decreases, tensile load on the tensile member increases or decreases proportionally to the compression load 20 to the sesamoid region, and wherein quantitative compression load measurement at the sesamoid region is converted electronically to a quantitative measurement of tensile loading on the flexor tendon and /or fetlock joint extension, and wherein the pressure sensors 116 may be assembled to the tendon and ligament support 5 and carried by a horse as it exercises.

The said pressure sensors 116 are more specifically located sandwiched between the surfaces of the horses limb and the aforementioned load bearing sesamoidean palmar panel 51, which itself receives a direct compression load from the tensile member 6 or 74 of the tendon support device 5 as the fetlock joint hyperextends during weight bearing.

As with the said temperature sensors 117, the pressure sensors 116 are lightweight and are permanently or detachably assembled to the said tendon and ligament support 5 and as such are carried by the horse as it exercises with the said tendon support device 5 applied to the limb. The said pressure sensors 116 are dynamic loading force sensors which can be, but not limited to piezoelectric or peizoresistive devices and provide both dynamic and static load force quantitative outputs and measurements.

Referring now to Fig. 76 A, B & C. As previously explained, compression load 20 is directly proportional to extension of the fetlock joint angle, which in turn is proportional to tendon and suspensory ligament strain level. Therefore the higher the compression load 20, the greater the tensile load exerted upon the flexor tendons and also the greater the dynamic compression load that is simultaneously applied by the tendon support device 5, via the tensile member 6 or 74 and sesamoidean palmar panel 51 to the said pressure sensors 116. In this invention there are pressure sensors 116 located at the sesamoidean palmar regions and between the said pressure panels 51 in combination with the tensile member 6/74 and the surfaces of the living limb. As tendon strain level increases, tensile load on the tensile member 6 or 74 also increases proportionally. Consequently compression load is then applied by the tensile member 6 or 74 as a direct compression load 120 to the pressure panel 51 and pressure sensors 116 which in turn increases proportionally to tendon strain. Said Pressure sensors 116 produce an increasing or decreasing voltage/resistance value which is proportional to increasing or decreasing compression loads 120 exerted upon them by the increases or decreases of extension of the fetlock joint within the device 5 under load 20. In other words Compression Loads 20 and 120 are directly proportional and a quantitative numerical digital pressure measurement is obtained at the sesamoidean region 12 of the limb which is then converted electronically as an accurate numerically quantitative representation of load 20 applied by the horse to the limb and consequently of tendon and ligament strain level.

There can also be the same pressure sensors located at the dorsal cannon, the dorsal pastern regions but these are less effective at providing a useful pressure reading to give an accurate measurement of tendon and ligament strain level.

Referring now to Fig. 76 A illustrates an example of the equine limb under low load 20 where the said pressure sensors 116 at the pressure panels 51 and 48 produce a low compression load 120 and consequent low numerical quantitative measurement of corresponding tendon strain.

Referring now to Fig. 76 B illustrates an example of the equine limb under medium load 20 where the said pressure sensors 116 at the pressure panels 51 and 48 produce a medium compression load 120 and consequent medium numerical quantitative measurement of corresponding tendon strain. Referring now to Fig. 76 C illustrates an example of the equine limb under high load 20 where the said pressure sensors 116 at the pressure panels 51 and 48 produce a high compression load 120 and consequent high numerical quantitative measurement of corresponding tendon strain.

In another embodiment of the invention there is just one pressure sensor 116 located at either of the three specific pressure locations: the sesamoid region, the dorsal cannon, or the dorsal pastern of the limb. Useful quantitative load data can also be acquired from a single load sensor at any of the aforementioned three main pressure points. However the sesamoidean region 12 is a particularly useful pressure reading location for the pressure sensor 116 in this application as pressure readings there provide a more direct correlation of tendon and ligament strain. A pressure sensor 116, of the type detailed previously, at either of the dorsal cannon or dorsal pastern can also provide a less direct quantitative numerical pressure value that varies corresponding to varying flexor tendon strain level.

In an alternative embodiment of the invention there are strain gauges replacing the pressure sensors within tensile member 6 or 74 that can also provide useful quantitative and accurate numerical strain measurement that varies in response to varying flexor tendon strain level.

Referring now to Fig. 77, in a further embodiment of the present invention there is an equine tendon and ligament support 5 that may also comprising electronic Position sensors 71 for accurate joint angle measurement. The tendon and ligament support system 5 may further comprise a plurality of electronic position sensors 71, wherein a first electronic position sensor may be located adjacent a cannon bone, wherein a second electronic position sensor may be located adjacent the fetlock joint, wherein a third electronic position sensor may be located adjacent the pastern bone, wherein relative angular movement between electronic position sensors when processed by an Electronic Control Unit (ECU), provide accurate data for joint angle and tendon strain measurement and further may be converted to a quantified value of tendon strain and wherein the electronic position sensors may be in communication with one another via the ECU.

Such position sensors are most effectively positioned one adjacent the cannon bone, one adjacent the joint and another adjacent the pastern bone. However just one or two sensors may also be used effectively. The position sensors may be in communication with one another via the said ECU. Relative angular variation between these sensors when processed by the ECU provide accurate data for joint angle measurement and is measured or quantified electronically. As joint angle is also related to flexor tendon strain levels, such accurate joint angle measurement data is useful to veterinarians as an alert to dangerous levels of flexor tendon strain in the injured horse while at a standstill or during rehabilitation exercise.

Referring now to Fig. 78 In a further embodiment of the present invention there is an equine tendon and ligament support 5 comprising a tendon and ligament thermal sensing system and a sesamoid pressure sensing system device applied to the limb that sends an electromagnetic signal to the veterinarian. This signal can give an alert when there is significant isolated variation in quantified temperature measurement from one region of the limb to another and also excessive sesamoid pressure directly indicating flexor tendon strain. The electronic control unit (ECU) is programmed to detect a significant isolated temperature variation and/or excessive sesamoid pressure and if detected to send a warning to the veterinarian that there is a risk of injury onset in advance of actual dangerous thresholds being reached. Thresholds include Tendon core temperatures which are safe up to approximately 30 degrees Centigrade, while dangerous core temperatures are reached above 30 degrees C. A heat lesion within the tendon core is likely to occur above 42 degrees C which, combined with high tendon tensile strain, will result in a tendon core lesion. Tendon core temperatures of 45 degrees C have been measured in galloping horses which extrapolates generally to 40 degrees C at the skin surface.

In a further embodiment of the present invention there is a tendon and ligament support 5 also comprising a Digital Processor or electronic control unit (ECU) integrated into the support device. The said ECU is responsible for intake of electrical values from said sensors 116, 117 and/or 118, in the form of electrical resistance or voltage, from the said thermal or pressure load sensors and converting the said electrical values to quantified digital data.

In a further embodiment of the present invention there is a tendon and ligament support 5 also comprising an electronic control unit (ECU) with a communications modem capable of transmitting the said quantified digital data from said sensors to a corresponding receiver. Transmission may be via electromagnetic signal or directly by signal cable.

## Claims

1. A tendon and ligament support for an equine limb joint comprising:
a first cannon collar for embracing the limb above the joint;
a second pastern collar for embracing the limb below the joint;
a connecting hinge; and
a connecting vertical tensile member adjacent a respective palmar or plantar aspect of the equine limb,
wherein the connecting vertical tensile member is securely fixed to an interior limb facing surface of the first cannon collar and / or the second pastern collar adjacent and vertical to the respective palmar or plantar aspect of the limb.

2. The tendon and ligament support of Claim 1, wherein the connecting vertical tensile member is securely fixed to the interior limb facing surface of the first cannon collar at a location generally equidistant from proximal and distal ends of the first cannon collar.

3. The tendon and ligament support of any one of Claims 1 to 2 wherein the first cannon collar comprises an aperture through which the connecting vertical tensile member is inserted and passes from the interior limb facing surface to an exterior facing surface of the first cannon collar or second pastern collar, or cavity within the collar and wherein the connecting vertical tensile member is securely fixed enabling the vertical tensile member to be adjusted by an external means.

4. The tendon and ligament support of any one of Claims 1 to 3, further comprising an adjustment means and wherein the adjustment means comprises a fixed member positioned on the first cannon or second pastern collar; and a sliding member connected to the vertical tensile member; wherein the fixed member and sliding member can be securely fastened together in a plurality of positions depending on a joint support required.

5. A tendon and ligament support of any one of Claims 1 to 4, wherein the connecting vertical tensile member further comprises a stabilizing member for limiting and preventing lateral and/or medial dislocation of the connecting vertical tensile member during use and when under a dynamic or static tensile load.

6. The tendon and ligament support of Claim 5, wherein the stabilizing member comprises medial and lateral ends that are anchored securely to corresponding medial and lateral sides of the first cannon collar or second pastern collar and wherein a centre of the stabilizing member may be securely fixed to the connecting vertical tensile member where the stabilizing member and connecting vertical tensile member intersect.

7. The tendon and ligament support of Claim 6, wherein the medial and lateral ends are anchored securely to the interior of the corresponding medial and lateral sides of the first cannon collar or second pastern collar.

8. The tendon and ligament support of Claim 5, wherein the stabilizing member comprises medial and lateral ends that are anchored securely to corresponding medial and lateral connecting hinges and wherein a centre of the stabilizing member may be securely fixed to the connecting vertical tensile member where the stabilizing member and connecting vertical tensile member intersect.

9. The tendon and ligament support of Claim 8, wherein the medial and lateral ends are anchored securely to the interior of the corresponding medial and lateral connecting hinges.

10. The tendon and ligament support of any one of Claims 7 or 9, wherein the medial and lateral ends are anchored securely by corresponding articulated anchors that allow unrestricted articulation of the vertical tensile member and / or the stabilizing member about the connecting hinge during joint rotation.

11. The tendon and ligament support of any of Claims 1 to 10, wherein the connecting vertical tensile member is absent and the support further comprising:
a medial and/or lateral connecting hinge **characterized by** friction and/or locking means to limit hinge rotation;
a horizontal stabilizing member, adjacent the posterior of the limb joint or sesamoid bones, each end of which is securely fixed, medially and laterally to corresponding exterior or interior surfaces of the support device.

12. The tendon and ligament support of any one of Claims 1 to 10 further comprising:
medial and lateral friction and/or locking hinges joined by a horizontal stabilizing member;
a first dorsal pressure pad, adjacent a dorsal cannon bone above the limb joint and attached to the first cannon collar;
a second dorsal pressure pad adjacent a dorsal pastern bone below the limb joint and attached to the second pastern collar;
a third pressure pad adjacent an apex of the sesamoid region;
wherein the first dorsal pressure pad, second dorsal pressure pad, and third pressure pad in combination form a three point opposing pressure resistance to both joint extension and upward dislocation during tensile loading.

13. The tendon and ligament support of any one of Claims 1 to 12, wherein the first cannon collar comprises a first front panel rotatably connected to the first cannon collar and/or wherein the second pastern collar comprises a second front panel rotatably connected to the second pastern collar.

14. The tendon and ligament support of Claim 13, wherein the first and second front panels are adjacent the dorsal aspect of the limb, and wherein the first and/or second front panels are rotatably and detachably connected to the first cannon collar and second pastern collar by articulated single point pivots that are located adjacent the medial and lateral limb, wherein the articulated single pivot points further comprise a fastening means that can be fastened to or unfastened from the first and/or second collars.

15. The tendon and ligament support of any one of Claims 13 to 14 further comprising a palmar or plantar pressure panel located adjacent to the respective palmar or plantar sesamoid region to exert a pressure directly onto the palmar or plantar sesamoid region that is both equal and opposite to the sum of pressures exerted onto the dorsal limb by the first and second front panels under load.

16. The tendon and ligament support of any one of Claims 13 to 15, further comprising;
a dynamic pressure redistribution and energy dissipation means where the function of shock absorbency and energy dissipation is a function of layers of shock absorbent compression material of substantial thickness;
a shock absorbent compression pad located between the first front panels of the support and surfaces of a horses leg adjacent a dorsal cannon bone; and/or
a shock absorbent compression pad located between the second front panels of the support and the surfaces of the horses leg adjacent the dorsal pastern bone; and/or
a shock absorbent compression pad located between the connecting vertical tensile member and the surfaces of the horses leg adjacent the sesamoid bones;
wherein the compression pads dissipate energy by compression and decompression under the dynamic loading and unloading exerted by an exercising horse.

17. The tendon and ligament support of any one of Claims 1 to 16 further comprising:
a separate inner boot of soft material that is applied directly to the limb, over which the tendon and ligament support is then applied.

18. The tendon and ligament support of Claim 1, wherein the connecting vertical tensile member comprises a single strand fibre of high tensile strength that is wound or woven in a loop multiple times forming a continuous loop tensile member that is uninterrupted by a seam and wherein the continuous loop tensile member is connected at the top end to a first cannon anchor adjacent the posterior aspect of the first cannon collar and at the bottom end to a second pastern anchor adjacent the posterior aspect of the second pastern collar.

19. The tendon and ligament support of Claim 18, wherein the continuous loop tensile member is woven from a narrow point adjacent a first cannon anchor downward to a broadened lower second pastern anchor that is curved in shape to conform to the posterior aspect of the second pastern collar.

20. The tendon and ligament support of any one of Claims 18 to 19, wherein the second pastern anchor is folded around an underside of a posterior wall of the second pastern collar and wherein the second pastern anchor is fixed securely to the second pastern collar, and wherein medial and lateral ends of the second pastern anchor can be arranged when required to accommodate attachment of load bearing fasteners.

21. The tendon and ligament support of any one of Claims 18 to 20, wherein the continuous loop tensile member comprises high tensile fibres that are woven in a complex continuous and uninterrupted path to connect both the medial and lateral sides or connecting hinges of the tendon and ligament support and the first cannon anchor, above the limb joint to the second pastern anchor below the limb joint.
